# EUROPEAN PATENT APPLICATION

(11) **EP 4 844 878 A1**
(43) Date of publication of application: **25.11.2026**
(21) Application number: 24943195.8
(22) Date of filing: 06.11.2024
(51) Int. Cl.: H01M 10/058

(54) **BATTERY AND ELECTRICAL APPARATUS**

(30) Priority: 14.06.2024 CN 202410767865
(71) Applicant: Contemporary Amperex Technology Co., Limited, Ningde, Fujian 352100 (CN)
(72) Inventor: KE, Haibo, Ningde, Fujian 352100 (CN); SU, Huasheng, Ningde, Fujian 352100 (CN); ZHANG, Xiaoping, Ningde, Fujian 352100 (CN); WANG, Peng, Ningde, Fujian 352100 (CN); ZHENG, Yulian, Ningde, Fujian 352100 (CN); CHEN, Yanlin, Ningde, Fujian 352100 (CN)
(74) Representative: Kraus & Lederer PartGmbB
(86) International application number: PCT/CN2024/130216
(87) International publication number: WO 2025/256041

(57) **Abstract**

The present application is applicable to the technical field of batteries (100), and provides a battery (100) and an electrical apparatus. The battery (100) comprises an electrode assembly (10), a case assembly (30), and fire extinguishing structures (40); the electrode assembly (10) is arranged in the case assembly (30); the case assembly (30) is provided with a first weak structure (31), and at least one fire extinguishing structure (40) is arranged at the first weak structure (31); and/or the electrode assembly (10) is provided with a second weak structure (11), and at least one fire extinguishing structure (40) is arranged at the second weak structure (11). By providing the fire extinguishing structure (40) at the first weak structure (31), a cooling and fire extinguishing operation can be performed at the first weak structure (31). By providing the fire extinguishing structure (45) at the second weak structure (11), a cooling and fire extinguishing operation can be performed at the second weak structure (11). In this way, the thermal runaway reaction and thermal propagation of a battery cell (100a) can be improved, thereby improving the reliability of the battery (100).

## Description

### CROSS-REFERENCE TO RELATED APPLICATIONS

The present application claims priority to Chinese Patent Application No. 202410767865.4, filed with the China National Intellectual Property Administration on June 14, 2024 and entitled "BATTERY AND POWER-CONSUMING APPARATUS", which is incorporated herein by reference in its entirety.

### TECHNICAL FIELD

The present application relates to the field of battery technologies, and specifically, to a battery and a power-consuming apparatus.

### BACKGROUND

In the related art, battery cells have a risk of rapidly reaching high temperatures during use. This causes the battery cells to generate high-temperature and high-pressure gases and flames, leading to thermal runaway in the battery cells, and consequently resulting in thermal runaway in an entire battery.

### SUMMARY

In view of the foregoing problem, an objective of embodiments of the present application is to provide a battery and a power-consuming apparatus, so as to resolve the technical problem of thermal runaway in a battery cell.

Technical solutions used in the embodiments of the present application are as follows:
According to a first aspect, an embodiment of the present application provides a battery, including:
a housing component;
an electrode component, disposed in the housing component; and
a fire extinguishing structure, where
the housing component is provided with a first weak structure, and at least one fire extinguishing structure is disposed at the first weak structure; and/or the electrode component is provided with a second weak structure, and at least one fire extinguishing structure is disposed at the second weak structure.

In the battery provided in the embodiments of the present application, the fire extinguishing structure is disposed at the first weak structure of the housing component, allowing the fire extinguishing structure to perform cooling and fire extinguishing operations at the first weak structure; and the fire extinguishing structure is disposed at the second weak structure of the electrode component, allowing the fire extinguishing structure to perform cooling and fire extinguishing operations at the second weak structure. In this way, a thermal runaway reaction and thermal propagation of the battery cell are mitigated, thereby resolving a problem of chain reactions caused by thermal runaway in adjacent battery cells, so as to mitigate thermal runaway in the entire battery, improving reliability of the battery.

In some embodiments, the at least one fire extinguishing structure disposed at the first weak structure is in contact with the housing component; and/or
a first insulation structure is disposed between the housing component and the electrode component, and the at least one fire extinguishing structure disposed at the first weak structure is disposed on the first insulation structure.

According to the foregoing technical solution, the at least one fire extinguishing structure disposed at the first weak structure is in contact with the housing component or is disposed on the first insulation structure in the housing component, to perform cooling and fire extinguishing on the first weak structure, thereby allowing for highly flexible arrangement of the fire extinguishing structure disposed at the first weak structure.

In some embodiments, the at least one fire extinguishing structure disposed at the first weak structure is disposed outside the housing component, and is spaced apart from and opposite to the first weak structure.

According to the foregoing technical solution, during thermal runaway in the battery cell, the at least one fire extinguishing structure is allowed to perform cooling and fire extinguishing on high-temperature and high-pressure gases and flames that are ejected from the first weak structure. In this way, a thermal runaway reaction and thermal propagation of the battery cell are mitigated, thereby resolving a problem of chain reactions caused by thermal runaway in adjacent battery cells, so as to mitigate thermal runaway in the entire battery, improving reliability of the battery.

In some embodiments, a weld seam is formed on the housing component, the first weak structure includes the weld seam, and the at least one fire extinguishing structure is disposed at the weld seam.

In this way, the temperature of high-temperature and high-pressure gases ejected from the weld seam is reduced, and flames ejected from the weld seam are extinguished.

In some embodiments, the housing component includes a housing and an end cover, and the end cover is disposed on the housing to enclose, with the housing, a space for accommodating the electrode component; and
a first weld seam is formed between the housing and the end cover, the weld seam includes the first weld seam, and the at least one fire extinguishing structure is disposed at the first weld seam; and/or a second weld seam is formed on the housing, the weld seam includes the second weld seam, and the at least one fire extinguishing structure is disposed at the second weld seam.

In this way, there are many types and positions of the weld seams on which cooling and fire extinguishing are implemented by using the fire extinguishing structure.

In some embodiments, the end cover is disposed at an end portion of the housing in a first direction; and
the at least one fire extinguishing structure disposed at the first weld seam is a first fire extinguishing piece, the first fire extinguishing piece is in contact with an outer wall of the housing component in the first direction, and on a projection plane perpendicular to the first direction, a distance between an outer edge of the housing component and the first fire extinguishing piece is ≤ 6 mm in a width direction of the first weld seam; and/or the at least one fire extinguishing structure disposed at the first weld seam is a second fire extinguishing piece, the second fire extinguishing piece is in contact with an outer wall of the housing component in a direction perpendicular to the first direction, and a distance between an outer edge of the housing component and the second fire extinguishing piece is ≤ 6 mm in the first direction.

According to the foregoing technical solution, the fire extinguishing structure is as close as possible to the first weld seam, so that cooling and fire extinguishing effects of the fire extinguishing structure on the first weld seam are improved, helping resolve problems of thermal runaway and thermal propagation of the battery cell.

In some embodiments, the at least one fire extinguishing structure disposed at the weld seam is in contact with a surface of the weld seam.

According to the foregoing technical solution, the fire extinguishing structure is in contact with the surface of the weld seam, so that cooling and fire extinguishing effects of the fire extinguishing structure on the weld seam are improved, to well mitigate thermal runaway and thermal propagation of the battery cell, improving reliability of the battery.

In some embodiments, the first insulation structure is disposed between the housing component and the electrode component, and the first insulation structure is disposed between the electrode component and the weld seam; and the at least one fire extinguishing structure disposed at the weld seam is disposed between the first insulation structure and the housing component along a path from the electrode component to the weld seam.

With this configuration, high-temperature and high-pressure gases and flames that are generated by the electrode component pass through the at least one fire extinguishing structure between the first insulation structure and the housing component along their path toward the weld seam, so that the at least one fire extinguishing structure performs cooling and fire extinguishing on the high-temperature and high-pressure gases and flames along the path from the electrode component to the weld seam. This reduces the temperature of the high-temperature and high-pressure gases ejected from the weld seam and extinguishes the flames ejected from the weld seam, so as to mitigate a thermal runaway reaction and thermal propagation of the battery cell. In this way, thermal runaway in the battery is mitigated, improving reliability of the battery.

In some embodiments, the at least one fire extinguishing structure disposed between the first insulation structure and the housing component is a third fire extinguishing piece along the path from the electrode component to the weld seam; and the third fire extinguishing piece is disposed between the first insulation structure and the housing component in a direction perpendicular to a distribution direction of the electrode component and the first insulation structure.

With this configuration, the third fire extinguishing piece is disposed between the first insulation structure and the housing component along the path from the electrode component to the weld seam, and then is allowed to effectively perform cooling and fire extinguishing on high-temperature and high-pressure gases and flames along the path from the electrode component to the weld seam. This reduces the temperature of the high-temperature and high-pressure gases ejected from the weld seam and extinguishes the flames ejected from the weld seam, so as to mitigate a thermal runaway reaction and thermal propagation of the battery cell. In this way, thermal runaway in the battery is mitigated, improving reliability of the battery.

In some embodiments, the housing component is provided with a pressure relief mechanism spaced apart from the weld seam; the at least one fire extinguishing structure disposed between the first insulation structure and the housing component is a fourth fire extinguishing piece along the path from the electrode component to the weld seam; and the fourth fire extinguishing piece is disposed between the housing component and the first insulation structure, and is disposed between the pressure relief mechanism and the weld seam.

The fourth fire extinguishing piece is disposed between the housing component and the first insulation structure, and is disposed between the pressure relief mechanism and the weld seam. In this case, in a process in which high-temperature and high-pressure gases and flames that are generated inside the battery cell are released to the pressure relief mechanism through the first insulation structure, when the escaping high-temperature and high-pressure gases and flames spread toward the weld seam, the fourth fire extinguishing piece performs cooling and fire extinguishing on the high-temperature and high-pressure gases and flames, thereby helping reduce the temperature of the high-temperature and high-pressure gases released from the weld seam and extinguish the flames released from the weld seam, and mitigating thermal runaway and thermal propagation of the battery cell, to improve reliability of the battery.

In some embodiments, the housing component includes the housing and the end cover, and the end cover is disposed at the end portion of the housing in the first direction to enclose, with the housing, the space for accommodating the electrode component; the first weld seam is formed between the housing and the end cover, and the weld seam includes the first weld seam; the end cover is provided with the pressure relief mechanism; the first insulation structure is disposed between the end cover and the electrode component in the first direction; and the fourth fire extinguishing piece is disposed between the end cover and the first insulation structure in the first direction, and is disposed between the pressure relief mechanism and the housing in the direction perpendicular to the first direction.

According to the foregoing technical solution, when high-temperature and high-pressure gases and flames that are generated by the electrode component and released from the first insulation structure to the pressure relief mechanism are released to the weld seam, the fourth fire extinguishing piece performs cooling and fire extinguishing operations specifically, thereby mitigating thermal runaway and thermal propagation of the battery cell, so as to improve reliability of the battery.

In some embodiments, the at least one fire extinguishing structure disposed at the weld seam is disposed outside the housing component, and is spaced apart from and opposite to the weld seam.

According to the foregoing technical solution, during thermal runaway in the battery cell, the at least one fire extinguishing structure is allowed to perform cooling and fire extinguishing on high-temperature and high-pressure gases and flames that are ejected from the weld seam. In this way, a thermal runaway reaction and thermal propagation of the battery cell are mitigated, thereby resolving a problem of chain reactions caused by thermal runaway in adjacent battery cells, so as to mitigate thermal runaway in the entire battery, improving reliability of the battery.

In some embodiments, the housing component includes a first wall and the pressure relief mechanism, and the first weak structure includes the pressure relief mechanism; and the pressure relief mechanism includes a pressure relief portion, the first wall is connected to an outer periphery of the pressure relief portion, and the at least one fire extinguishing structure is disposed at the pressure relief portion.

In this way, the temperature of high-temperature and high-pressure gases ejected from the pressure relief portion is reduced, and flames ejected from the pressure relief portion are extinguished. To be specific, the at least one fire extinguishing structure is disposed at the pressure relief portion, to perform cooling and fire extinguishing on the high-temperature and high-pressure gases and flames that are ejected from the pressure relief portion, so that a thermal runaway reaction and thermal propagation of the battery cell are mitigated, improving reliability of the battery.

In some embodiments, the at least one fire extinguishing structure disposed at the pressure relief portion is provided with a through hole, and the pressure relief portion is opposite to the through hole and is exposed to the through hole.

According to the foregoing technical solution, during thermal runaway in the battery cell, high-temperature and high-pressure gases and flames that are generated in the battery cell break through the pressure relief portion of the pressure relief mechanism, to exit from the battery cell through the pressure relief portion, and then the at least one fire extinguishing structure disposed at the pressure relief portion performs cooling and fire extinguishing on the high-temperature and high-pressure gases and flames. In addition, the high-temperature and high-pressure gases and flames further pass through the through hole when breaking through the pressure relief portion, so that a problem that the fire extinguishing structure obstructs the high-temperature and high-pressure gases and flames is resolved, facilitating release of the high-temperature and high-pressure gases and flames. Therefore, a problem of a thermal runaway reaction and thermal propagation of the battery cell is resolved, thereby mitigating thermal runaway in the battery, so as to improve reliability of the battery.

In some embodiments, the at least one fire extinguishing structure disposed at the pressure relief portion includes a first fire extinguishing portion and a second fire extinguishing portion connected to an outer periphery of the first fire extinguishing portion, and the first fire extinguishing portion is configured to move relative to the second fire extinguishing portion to perform pressure relief; and the first fire extinguishing portion and the pressure relief portion are disposed opposite to each other in a distribution direction of the first wall and the electrode component.

In this way, during thermal runaway in the battery cell, high-temperature and high-pressure gases and flames that are generated inside the battery cell break through the pressure relief portion and the first fire extinguishing portion, thereby implementing pressure relief. In addition, the second fire extinguishing portion and the first fire extinguishing portion are allowed to perform cooling and fire extinguishing on the high-temperature and high-pressure gases and flames, and help discharge gases, so that a thermal runaway reaction and thermal propagation of the battery cell are mitigated, to resolve a problem of thermal runaway in the battery, improving reliability of the battery.

In some embodiments, in the distribution direction of the first wall and the electrode component, the first fire extinguishing portion is disposed on a side that is of the pressure relief portion and that is away from the electrode component.

The first fire extinguishing portion is disposed on the side that is of the pressure relief portion and that is away from the electrode component, so that the first fire extinguishing portion is disposed on an outer side of the pressure relief portion. In this way, a problem that the fire extinguishing structure on an inner side of the pressure relief portion prevents high-temperature and high-pressure gases and flames from pressure relief through the pressure relief portion is resolved, helping improve pressure relief in the battery cell and mitigate a thermal runaway reaction in the battery cell.

In some embodiments, a frangible score line is provided between the first fire extinguishing portion and the second fire extinguishing portion.

In this way, when thermal runaway occurs in the battery cell, high-temperature and high-pressure gases and flames that are generated inside the battery cell also break through the first fire extinguishing portion while breaking through the pressure relief portion, so that the third frangible score line between the first fire extinguishing portion and the second fire extinguishing portion breaks, resolving a problem that the first fire extinguishing portion prevents release of the high-temperature and high-pressure gases and flames, and helping mitigate a thermal runaway reaction in the battery cell.

In some embodiments, the at least one fire extinguishing structure disposed at the pressure relief portion is a fifth fire extinguishing piece; and in the distribution direction of the first wall and the electrode component, the fifth fire extinguishing piece is disposed on a side that is of the pressure relief portion and that faces the electrode component, and is disposed opposite to the pressure relief portion.

The arrangement of the fifth fire extinguishing piece allows the fifth fire extinguishing piece to perform, when high-temperature and high-pressure gases and flames inside the battery cell are released to the pressure relief portion, cooling and fire extinguishing on the high-temperature and high-pressure gases and flames, thereby mitigating thermal runaway and thermal propagation of the battery cell.

In some embodiments, the fifth fire extinguishing piece is connected to the pressure relief portion.

According to the foregoing technical solution, during thermal runaway in the battery cell, when high-temperature and high-pressure gases and flames that are generated inside the battery cell break through the pressure relief portion, the fifth fire extinguishing piece moves with the pressure relief portion, thereby facilitating release of the high-temperature and high-pressure gases and flames. In addition, as the fifth fire extinguishing piece moves with the pressure relief portion, the fifth fire extinguishing piece continuously performs cooling and fire extinguishing operations, so that a problem of a thermal runaway reaction and thermal propagation of the battery cell is efficiently resolved, so as to resolve a problem of thermal runaway in the battery, improving reliability of the battery.

In some embodiments, a projection of the fifth fire extinguishing piece is located within a projection of the pressure relief portion in the distribution direction of the first wall and the electrode component.

According to the foregoing technical solution, the fifth fire extinguishing piece has as little impact as possible on movement of the pressure relief portion relative to the first wall, so that high-temperature and high-pressure gases and flames smoothly break through the pressure relief portion without being affected by the fifth fire extinguishing piece. In addition, the fifth fire extinguishing piece continuously performs cooling and fire extinguishing, helping resolve a problem of a thermal runaway reaction and thermal propagation of the battery cell.

In some embodiments, the housing component further includes a second wall connected to the first wall, the at least one fire extinguishing structure disposed at the pressure relief portion is in contact with the second wall, and the second wall is a wall having the largest area among all walls of the housing component.

The at least one fire extinguishing structure disposed at the pressure relief portion is in contact with the wall having the largest area among all the walls of the housing component, so that the fire extinguishing structure is as close as possible to the pressure relief portion, and then performs cooling and fire extinguishing effectively on high-temperature and high-pressure gases and flames at the pressure relief portion.

In some embodiments, in the distribution direction of the first wall and the electrode component, the at least one fire extinguishing structure disposed at the pressure relief portion is disposed outside the housing component, and is spaced apart from and opposite to the pressure relief portion.

In this way, during thermal runaway in the battery cell, the at least one fire extinguishing structure is allowed to perform cooling and fire extinguishing on high-temperature and high-pressure gases and flames that are ejected from the pressure relief portion. In this way, a thermal runaway reaction and thermal propagation of the battery cell are mitigated, thereby resolving a problem of chain reactions caused by thermal runaway in adjacent battery cells, so as to mitigate thermal runaway in the entire battery, improving reliability of the battery.

In some embodiments, the at least one fire extinguishing structure that is disposed outside the housing component and that is spaced apart from and opposite to the first weak structure is a sixth fire extinguishing piece; and a projection of the first weak structure is located within a projection of the sixth fire extinguishing piece on a projection plane perpendicular to a direction in which the sixth fire extinguishing piece and the first weak structure are opposite to each other.

This configuration allows the sixth fire extinguishing piece to effectively perform cooling and fire extinguishing operations on high-temperature and high-pressure gases and flames at the first weak structure, thereby helping mitigate a thermal runaway reaction and thermal propagation of the battery cell, to improve reliability of the battery.

In some embodiments, the battery further includes a thermal insulation structure spaced apart from and opposite to the housing component, and the at least one fire extinguishing structure is disposed on the thermal insulation structure, and is spaced apart from and opposite to the first weak structure; and/or
the battery further includes a wire harness isolation plate disposed opposite to the housing component, and the at least one fire extinguishing structure is disposed on the wire harness isolation plate, and is spaced apart from and opposite to the first weak structure.

According to the foregoing technical solution, the fire extinguishing structure is flexibly disposed at a plurality of positions of the battery, for the at least one fire extinguishing structure to be disposed outside the housing component and to be spaced apart from and opposite to the first weak structure. This facilitates the layout of the fire extinguishing structure in the battery.

In some embodiments, the electrode component includes a main body portion, a tab connected to the main body portion, and a transition structure connected to the tab; and the transition structure is provided with a fuse portion, the second weak structure includes the fuse portion, and the at least one fire extinguishing structure is disposed at the fuse portion.

The at least one fire extinguishing structure is disposed at the fuse portion, making it possible to perform cooling and fire extinguishing operations, when the fuse portion melts, on high-temperature and high-pressure gases and flames that are generated by the fuse portion. In this way, a problem that the high-temperature and high-pressure gases and flames that are generated by the fuse portion that is melting spread to the main body portion of the electrode component is resolved, so as to mitigate a thermal runaway reaction and thermal propagation of the battery cell, thereby improving reliability of the battery.

In some embodiments, the at least one fire extinguishing structure disposed at the fuse portion is in contact with the fuse portion.

This configuration allows the at least one fire extinguishing structure in contact with the fuse portion to perform cooling and fire extinguishing on the fuse portion in time, to quickly suppress propagation of high-temperature and high-pressure gases and flames that are generated by the fuse portion that is melting, and mitigate thermal runaway reactions such as short circuits or even explosions in the battery cell, improving reliability of the battery.

In some embodiments, an orthographic projection, on the transition structure, of the at least one fire extinguishing structure disposed at the fuse portion covers the fuse portion.

According to the foregoing technical solution, the fire extinguishing structure is allowed to perform cooling and fire extinguishing in a large region. Specifically, the fire extinguishing structure performs cooling and fire extinguishing in time on the fuse portion from the source, and further resolves a problem of escaping high temperatures and flames that are generated by the fuse portion that is melting. Therefore, problems of thermal runaway such as short circuits or even explosions in the electrode component are resolved, improving reliability of the battery.

In some embodiments, the orthographic projection, on the transition structure, of the at least one fire extinguishing structure disposed at the fuse portion covers the fuse portion and extends beyond the fuse portion.

With this configuration, one part of the orthographic projection of the at least one fire extinguishing structure on the transition structure covers the fuse portion, and the other part covers another region of the transition structure other than the fuse portion. In this way, the fire extinguishing structure performs cooling and fire extinguishing in time on the fuse portion from the source when the fuse portion is melting, and also effectively resolves a problem that high-temperature and high-pressure gases and flames that are generated by the fuse portion that is melting escape and spread to the main body portion of the electrode component. As a result, problems of short circuits or even thermal runaway in the battery cell are effectively resolved, and then a problem of thermal runaway in the battery is resolved, improving reliability of the battery.

In some embodiments, the battery further includes a second insulation structure, and at least a part of the second insulation structure is disposed on the fuse portion.

The second insulation structure disposed on the fuse portion achieves an insulating protection effect on the fuse portion, so that thermal propagation during melting of the fuse portion is mitigated to some extent. In addition, the arrangement of the second insulation structure further enhances structural strength at the fuse portion.

In some embodiments, an orthographic projection of the second insulation structure on the transition structure covers at least a part of the fuse portion, and the orthographic projection, on the transition structure, of the at least one fire extinguishing structure disposed at the fuse portion is located outside the orthographic projection of the second insulation structure on the transition structure.

With this configuration, the arrangement of the fire extinguishing structure allows no additional increase in the overall thickness of the transition structure, the second insulation structure, and the fire extinguishing structure, so that high energy density of the battery cell is effectively maintained.

In some embodiments, in a direction in which a current passes through the fuse portion, at least one end of the second insulation structure is provided with the fire extinguishing structure disposed at the fuse portion.

According to the foregoing technical solution, roughly in the direction in which the current passes through the fuse portion, the at least one side of the second insulation structure is provided with the fire extinguishing structure, so that the fire extinguishing structure effectively performs cooling and fire extinguishing during melting of the fuse portion, to resolve a problem that high temperatures and flames that are generated during melting of the fuse portion spread to the main body portion of the electrode component.

In some embodiments, the electrode component includes the main body portion and the tab connected to the main body portion, and the tab is provided with the second weak structure.

In this way, when the tab fuses due to overload, cooling and fire extinguishing are performed on high-temperature and high-pressure gases and flames that are generated at the second weak structure of the tab, thereby helping resolve problems of short circuits or even thermal runaway in the main body portion of the electrode component, improving reliability of the battery.

In some embodiments, an end portion that is of the tab and that is connected to the main body portion is a connection end portion, the second weak structure includes the connection end portion, and the at least one fire extinguishing structure is disposed on the connection end portion.

The at least one fire extinguishing structure is disposed on the connection end portion, so that the fire extinguishing structure is very close to the main body portion. In this case, when the tab fuses due to overload, cooling and fire extinguishing are implemented in time on the root that is of the tab and that is close to the main body portion, so that a rate at which high-temperature and high-pressure gases and flames that are generated during fusing of the tab spread to the main body portion is significantly limited. Therefore, this helps resolve problems of short circuits or even thermal runaway in the main body portion of the electrode component due to fusing of the tab, improving reliability of the battery.

In some embodiments, at least one side of the second weak structure is provided with the fire extinguishing structure in a thickness direction of the tab.

This configuration allows for very flexible layout of the fire extinguishing structure on the tab.

In some embodiments, the fire extinguishing structure includes a core for extinguishing fire and a shell for encapsulating the core.

With this configuration, when the fire extinguishing structure is in a high-temperature environment, the shell of the fire extinguishing structure ruptures, and the core in the shell cools high-temperature and high-pressure gases, and extinguishes flames, so as to achieve cooling and fire extinguishing effects.

In some embodiments, the core is a perfluorohexanone core; and/or the shell is a polymer shell.

This configuration allows the fire extinguishing structure to effectively perform cooling and fire extinguishing operations.

According to a second aspect, an embodiment of the present application provides a power-consuming apparatus, including a battery.

The power-consuming apparatus provided in the embodiments of the present application employs the foregoing battery, and the fire extinguishing structure is disposed at at least one of the first weak structure of the housing component and the second weak structure of the electrode component, so that the fire extinguishing structure performs cooling and fire extinguishing operations at at least one of the first weak structure and the second weak structure. In this way, a thermal runaway reaction and thermal propagation of the battery cell are mitigated, thereby resolving a problem of chain reactions caused by thermal runaway in adjacent battery cells, so as to mitigate thermal runaway in the entire battery, improving reliability of the battery.

The foregoing descriptions are merely an overview of technical solutions of the present application. To more clearly understand technical means of the present application, the technical means are implemented according to the content of this specification. In addition, to make the foregoing descriptions of the present application and other objectives, features, and advantages more apparent and understandable, the following describes specific implementations of the present application.

### BRIEF DESCRIPTION OF THE DRAWINGS

To describe the technical solutions in the embodiments of the present application more clearly, the following briefly describes the accompanying drawings required for describing the embodiments or exemplary technologies. Apparently, the accompanying drawings in the following descriptions show only some embodiments of the present application, and a person of ordinary skill in the art still derives other drawings from these accompanying drawings without creative efforts.
FIG. 1 is a schematic diagram of a vehicle according to some embodiments of the present application;
FIG. 2 is an exploded view of a battery according to some embodiments of the present application;
FIG. 3 is a diagram of a three-dimensional structure of a battery cell of a battery according to some embodiments of the present application;
FIG. 4 is an exploded view of FIG. 3;
FIG. 5 is a cross-sectional view along A-A in FIG. 3;
FIG. 6 is an enlarged view at B in FIG. 5;
FIG. 7 is a diagram of a three-dimensional structure of a fire extinguishing structure of the battery cell provided in FIG. 3;
FIG. 8 is a diagram of a three-dimensional structure of a battery according to some embodiments of the present application;
FIG. 9 is a cross-sectional view along C-C in FIG. 8;
FIG. 10 is an enlarged view at D in FIG. 9;
FIG. 11 is a diagram of a partial structure of a battery cell of a battery according to some embodiments of the present application;
FIG. 12 is a cross-sectional view of the battery cell provided in FIG. 11 along E-E in FIG. 11;
FIG. 13 is an enlarged view at F in FIG. 12;
FIG. 14 is a diagram of a three-dimensional structure of a housing and a fire extinguishing structure of the battery cell provided in FIG. 11;
FIG. 15 is a partially exploded view of a battery cell of a battery according to some embodiments of the present application;
FIG. 16 is a cross-sectional view of the battery cell provided in FIG. 15 along G-G in FIG. 15;
FIG. 17 is an enlarged view at H in FIG. 16;
FIG. 18 is a diagram of a three-dimensional structure of a battery according to some embodiments of the present application;
FIG. 19 is a cross-sectional view along I-I in FIG. 18;
FIG. 20 is an enlarged view at J in FIG. 19;
FIG. 21 is a cross-sectional view of a battery according to some embodiments of the present application;
FIG. 22 is an enlarged view at K in FIG. 21;
FIG. 23 is a diagram of a partial structure of a battery cell of a battery according to some embodiments of the present application;
FIG. 24 is an exploded view of FIG. 23;
FIG. 25 is a cross-sectional view along L-L in FIG. 23;
FIG. 26 is an enlarged view at M in FIG. 25;
FIG. 27 is a schematic diagram of a fire extinguishing structure of the battery cell provided in FIG. 23;
FIG. 28 is a cross-sectional view of a battery cell of a battery according to some embodiments of the present application;
FIG. 29 is an enlarged view at N in FIG. 28;
FIG. 30 is a diagram of a partial structure of a battery cell of a battery according to some embodiments of the present application;
FIG. 31 is a cross-sectional view along O-O in FIG. 30;
FIG. 32 is an enlarged view at P in FIG. 31;
FIG. 33 is a schematic diagram of a fire extinguishing structure of the battery cell provided in FIG. 30;
FIG. 34 is a diagram of a partial structure of a battery cell of a battery according to some embodiments of the present application;
FIG. 35 is a diagram of a structure of a battery cell of a battery according to some embodiments of the present application;
FIG. 36 is a partially exploded view of a battery cell of a battery according to some embodiments of the present application;
FIG. 37 is a cross-sectional view of the battery cell provided in FIG. 36 along Q-Q in FIG. 36;
FIG. 38 is an enlarged view at R in FIG. 37;
FIG. 39 is a schematic diagram of a fire extinguishing structure of the battery cell provided in FIG. 36;
FIG. 40 is a schematic diagram of a battery according to some embodiments of the present application;
FIG. 41 is an enlarged view at S in FIG. 40;
FIG. 42 is a diagram of a partial structure of the battery provided in FIG. 40;
FIG. 43 is a cross-sectional view along T-T in FIG. 42;
FIG. 44 is an enlarged view at U in FIG. 43;
FIG. 45 is a schematic diagram of a fire extinguishing structure of the battery provided in FIG. 40;
FIG. 46 is a diagram of a three-dimensional structure of a fire extinguishing structure and a thermal insulation structure of the battery provided in FIG. 40;
FIG. 47 is an exploded view of a transition structure and a fire extinguishing structure of a battery according to some embodiments of the present application;
FIG. 48 is a schematic diagram of the transition structure provided in FIG. 47;
FIG. 49 is a schematic diagram of the transition structure and the fire extinguishing structure provided in FIG. 47;
FIG. 50 is a cross-sectional view along V-V in FIG. 49;
FIG. 51 is an exploded view of a transition structure and a fire extinguishing structure of a battery according to some embodiments of the present application;
FIG. 52 is a schematic diagram of the transition structure and the fire extinguishing structure provided in FIG. 51;
FIG. 53 is an exploded view of a transition structure, a fire extinguishing structure, and a second insulation structure of a battery according to some embodiments of the present application;
FIG. 54 is a schematic diagram of the transition structure, the fire extinguishing structure, and the second insulation structure provided in FIG. 53;
FIG. 55 is a cross-sectional view along W-W in FIG. 54;
FIG. 56 is a diagram of a structure of a transition structure and a fire extinguishing structure of a battery according to some embodiments of the present application;
FIG. 57 is an exploded view of FIG. 56;
FIG. 58 is a diagram of a partial structure of a battery cell of a battery according to some embodiments of the present application; and
FIG. 59 is an enlarged view at X in FIG. 58.

Reference numerals in the figures:
1000: vehicle; 100: battery; 200: controller; 300: motor; 100a: battery cell; 10: electrode component; 11: second weak structure; 11a: fuse portion; 11b: connection end portion; 12: main body portion; 13: tab; 14: transition structure; 1401: fuse region; 14011: fuse hole; 141: second connection portion; 142: third connection portion; 143: fourth connection portion; 20: box; 21: first part; 22: second part; 30: housing component; 31: first weak structure; 31a: weld seam; 31b: pressure relief mechanism; 311b: pressure relief portion; 312b: first connection portion; 313b: second frangible score line; 32: housing; 321: second wall; 33: end cover; 331: first wall; 40: fire extinguishing structure; 401: through hole; 401a: first through hole; 401b: second through hole; 401c: third through hole; 40a: first fire extinguishing piece; 40b: second fire extinguishing piece; 40c: third fire extinguishing piece; 40d: fourth fire extinguishing piece; 40e: fifth fire extinguishing piece; 40f: sixth fire extinguishing piece; 40g: seventh fire extinguishing piece; 40h: eighth fire extinguishing piece; 40i: ninth fire extinguishing piece; 40j: tenth fire extinguishing piece; 41: first fire extinguishing portion; 42: second fire extinguishing portion; 43: third frangible score line; 50: first insulation structure; 51: lower plastic piece; 52: bottom support plate; 53: insulating film; 60: thermal insulation structure; 70: electrode terminal; 80: second insulation structure; H1: first distance; H2: second distance; H3: fourth distance; W1: first size; W2: second size; W3: third size; W4: fourth size; W5: fifth size; W6: sixth size; W7: seventh size; W8: eighth size; W9: ninth size; W10: tenth size; W11: eleventh size; W12: twelfth size; W13: thirteenth size; W14: fourteenth size; Z: first direction; X: second direction; Y: third direction.

### DETAILED DESCRIPTION

The embodiments of the present application are described in detail below, and examples of the embodiments are shown in the accompanying drawings, where the same or similar elements or the elements having the same or similar functions are denoted by the same or similar reference numerals throughout the description. The embodiments described below with reference to the accompanying drawings are examples, and are intended to explain the present application but cannot be construed as a limitation on the present application.

Unless otherwise specified, all implementations and optional implementations of the embodiments of the present application may be combined with each other to form new technical solutions.

Unless otherwise specified, all technical features and optional technical features of the embodiments of the present application may be combined with each other to form new technical solutions.

Understandably, in the description of the embodiments of the present application, orientations or position relationships indicated by the terms such as "length", "width", "up", "down", "front", "back", "left", "right", "vertical", "horizontal", "top", "bottom", "in", and "out" are orientations or position relationships based on the illustration in the drawings, and are merely intended for ease or brevity of description of the present application, but do not indicate or imply that the indicated apparatus or element needs to have a specific orientation or needs to be constructed and operated in a specific orientation. Therefore, such terms cannot be understood as a limitation on the present application.

In addition, the terms "first" and "second" are merely used for the purpose of description, and should not be construed as indicating or implying relative importance or implying a quantity of indicated technical features. Therefore, a feature limited by "first" or "second" may explicitly or implicitly include one or more features.

In the descriptions of the embodiments of the present application, "plurality of" means two or more, and unless otherwise explicitly and specifically limited, "two or more" includes two. Correspondingly, "a plurality of groups" means two or more groups, and includes two groups.

In the description of the embodiments of the present application, unless otherwise explicitly specified and defined, the terms such as "mount", "connect", "connection", and "fix" should be understood in a broad sense. For example, the connection may be a fixed connection, a detachable connection, or an integrated connection; or the connection may be a mechanical connection or an electrical connection; or the connection may be a direct connection, or may be an indirect connection through an intermediate medium, or may be an internal communication between two elements or an interaction relationship between two elements. A person of ordinary skill in the art may understand specific meanings of the foregoing terms in the present application based on a specific case.

The term "and/or" in the descriptions of the present application describes only an association relationship for describing associated objects and represents that three relationships may exist. For example, A and/or B may represent the following three cases: A exists, both A and B exist, and B exists. In addition, the character "/" in the present application generally indicates an "or" relationship between the associated objects.

In the descriptions of the embodiments of the present application, unless otherwise explicitly specified and limited, the technical terms "adjacent to" and "neighboring to" mean being close in position. For example, for three components A1, A2, and B, a distance between A1 and B is greater than a distance between A2 and B. In this case, A2 is closer to B than A1, that is, A2 is adjacent to B, or B is adjacent to A2. In other words, A2 is neighboring to B. In another example, when there are a plurality of components C, the plurality of components C are respectively C1, C2, ..., and CN. When one of the components C, for example, C2, is closer to the component B than the other components C, B is adjacent to C2, or C2 is adjacent to B. In other words, C2 is neighboring to B.

Although the present application is described with reference to preferred embodiments, various improvements may be made and the components may be replaced with equivalents without departing from the scope of the present application. Especially, as long as there is no structural conflict, the technical features mentioned in the embodiments may be combined in any way. The present application is not limited to the particular embodiments disclosed herein, but includes all technical solutions that fall within the scope of the claims.

Battery cells are at a risk of rapidly reaching high temperatures during use. This causes the battery cells to generate high-temperature and high-pressure gases and flames, leading to thermal runaway in the battery cells, and consequently resulting in thermal runaway in an entire battery.

In the related art, a battery cell may include a housing component and an electrode component disposed in the housing component.

In some cases, the electrode component is usually provided with a weak part. For example, the electrode component includes a main body portion, a tab connected to the main body portion, and a transition structure connected to the tab. The transition structure is provided with a weak fuse portion, and the fuse portion breaks in an overload case, to provide overload protection for the electrode component. During use of the battery cell, the weak part in the electrode component is likely to break due to overload. In this case, the broken part of the electrode component rapidly reaches high temperatures, and then generates high-temperature and high-pressure gases and flames. This causes short circuits or even thermal runaway in the electrode component, potentially resulting in thermal runaway in the entire battery.

In some cases, the housing component is usually provided with a weak part. During thermal runaway in the battery cell, high-temperature and high-pressure gases and flames that are generated by the battery cell are likely to break through the weak part of the housing component, and are ejected from the weak part of the housing component. Specifically, the housing component is formed with a weld seam and a pressure relief mechanism, and the weld seam and the pressure relief mechanism are weak parts in the battery cell. The battery cell generates high-temperature and high-pressure gases and flames during thermal runaway, and usually the high-temperature and high-pressure gases and flames are directionally released for pressure relief through the pressure relief mechanism. If the pressure relief mechanism fails to discharge the gases in time, the high-temperature and high-pressure gases and flames are further ejected out through the weld seam. As a result, during thermal runaway in the battery cell, high-temperature and high-pressure gases and flames are ejected and then spread to adjacent battery cells, causing chain reactions of the thermal runaway in the adjacent battery cells, and further leading to thermal runaway in the entire battery.

Based on the foregoing consideration, the embodiments of the present application provide a battery and a power-consuming apparatus. The fire extinguishing structure is disposed at at least one of the first weak structure of the housing component and the second weak structure of the electrode component, so that the fire extinguishing structure performs cooling and fire extinguishing operations at at least one of the first weak structure and the second weak structure. In this way, a thermal runaway reaction and thermal propagation of the battery cell are mitigated, thereby resolving a problem of chain reactions caused by thermal runaway in adjacent battery cells, so as to mitigate thermal runaway in the entire battery, improving reliability of the battery.

In some embodiments, the battery according to the embodiments of the present application may be used in a power-consuming apparatus using a battery as a power supply.

In the embodiments of the present application, the power-consuming apparatus may be, but is not limited to, a mobile phone, a tablet, a notebook computer, an electric toy, an electric tool, an electric bicycle, a vehicle, a ship, or a spacecraft. The electric toy may include a fixed or mobile electric toy, such as a game console, an electric toy car, an electric toy ship, or an electric toy airplane. The spacecraft may include an airplane, a rocket, a space shuttle, a spaceship, and the like. Classified by power source, the vehicle may be a fuel-powered vehicle, a gas-powered vehicle, or a new energy vehicle. The new energy vehicle may be a pure electric vehicle, a hybrid electric vehicle, an extended-range electric vehicle, or the like. Classified by drive method, the vehicle may be a front-wheel-drive vehicle, a rear-wheel-drive vehicle, or a four-wheel-drive vehicle.

In some embodiments, the battery according to the embodiments of the present application may be used in an energy storage system using a battery as an energy storage element. The energy storage system may include an energy storage container, an energy storage cabinet, and the like.

For convenience of description, an example in which the power-consuming apparatus is a vehicle is used in the embodiments of the present application for description.

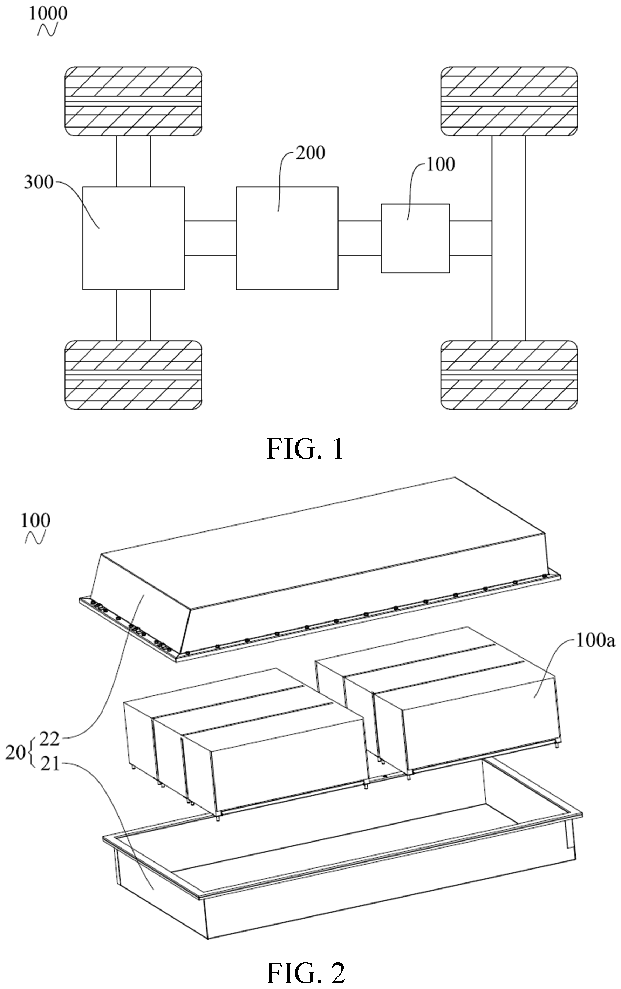

In some embodiments, referring to FIG. 1, FIG. 1 is a schematic diagram of a vehicle 1000 according to some embodiments of the present application. The foregoing battery 100 is disposed inside the vehicle 1000, and the battery 100 may be disposed at the bottom, head, or tail of the vehicle 1000. The battery 100 may be configured to supply power to the vehicle 1000. For example, the battery 100 may be used as an operation power supply of the vehicle 1000. The vehicle 1000 may further include a controller 200 and a motor 300. The controller 200 is configured to control the battery 100 to supply power to the motor 300, for example, to meet operating power requirements during starting, navigation, and traveling of the vehicle 1000.

In some embodiments, the battery 100 may serve not only as an operation power supply of the vehicle 1000, but also as a drive power supply of the vehicle 1000, to replace or partially replace fuel or natural gas to provide drive power for the vehicle 1000.

The battery 100 according to the embodiments of the present application may be a single physical module that includes one or more battery cells 100a to provide higher voltage and capacity.

In some embodiments, the battery 100 may include one battery cell 100a.

In some embodiments, referring to FIG. 2, FIG. 2 is an exploded view of the battery 100 according to some embodiments of the present application. The battery 100 may include a plurality of battery cells 100a.

The plurality of battery cells 100a may be connected in series, in parallel, or in series and parallel by a busbar component. The connection in series and parallel means that the plurality of battery cells 100a are connected in series and connected in parallel.

The plurality of battery cells 100a may be arranged and fixed to form a battery module. In an example, the plurality of battery cells 100a may be fixed by using cable ties to form a battery module. In an example, the plurality of battery cells 100a may alternatively be fixed by using an end plate and a side plate to form a battery module.

In some embodiments, referring to FIG. 2, FIG. 2 is an exploded view of the battery 100 according to some embodiments of the present application. The battery 100 may include a box 20 and at least one battery cell 100a. The box 20 is of a structure with an internal space, and the internal space of the box 20 is provided to accommodate the battery cell 100a.

The box 20 may have various structures. In some embodiments, the box 20 may include a first part 21 and a second part 22, and the first part 21 and the second part 22 cover each other, and jointly define the accommodating space 201. The first part 21 may be of a hollow structure with an opening at an end. The second part 22 is of a plate-shaped structure. The second part 22 covers the first part 21 on the opening side, for the first part 21 and the second part 22 to jointly define the internal space of the box 20. Alternatively, with reference to FIG. 2, the first part 21 and the second part 22 each may be of a hollow structure with an opening at an end. The opening side of the first part 21 covers the opening side of the second part 22, for the first part 21 and the second part 22 to jointly define the internal space of the box 20.

The box 20 formed by the first part 21 and the second part 22 may be in various shapes, such as a cylinder and a cuboid.

In some embodiments, with reference to FIG. 2, when there are a plurality of battery cells 100a, the plurality of battery cells 100a may be connected in series, in parallel, or in series and parallel to form an integral whole, and then the integral whole formed by the plurality of battery cells 100a is directly accommodated in the internal space of the box 20. Alternatively, in some other embodiments, when there are a plurality of battery cells 100a, the plurality of battery cells 100a may be first connected in series, in parallel, or in series and parallel, and arranged and fixed to form a battery module, and the battery module is accommodated in the internal space of the box 20. Alternatively, in still some other embodiments, when there are a plurality of battery cells 100a, the plurality of battery cells 100a may be first connected in series, in parallel, or in series and parallel, and arranged and fixed to form a plurality of battery modules. Then, the plurality of battery modules are connected in series, in parallel, or in series and parallel to form an integral whole, and are accommodated in the internal space of the box 20.

In some embodiments, the box 20 of the battery 100 may be used as a part of a chassis structure of the vehicle 1000. For example, a part of the box 20 may be at least a part of a chassis of the vehicle 1000. Alternatively, a part of the box 20 may be at least a part of a cross beam and a longitudinal beam of the vehicle 1000.

The battery cell 100a is the smallest unit for electric energy storage and output. The battery cell 100a may be a secondary battery or a primary battery. The battery cell 100a may be, but is not limited to, a metal battery, a lithium-sulfur battery, a sodium-ion battery, or a magnesium-ion battery. The battery cell 100a may be cylindrical, flat, rectangular, or in another shape.

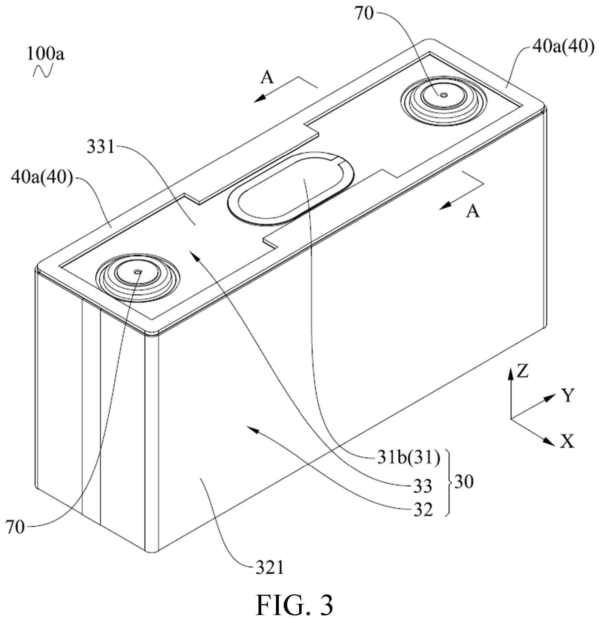

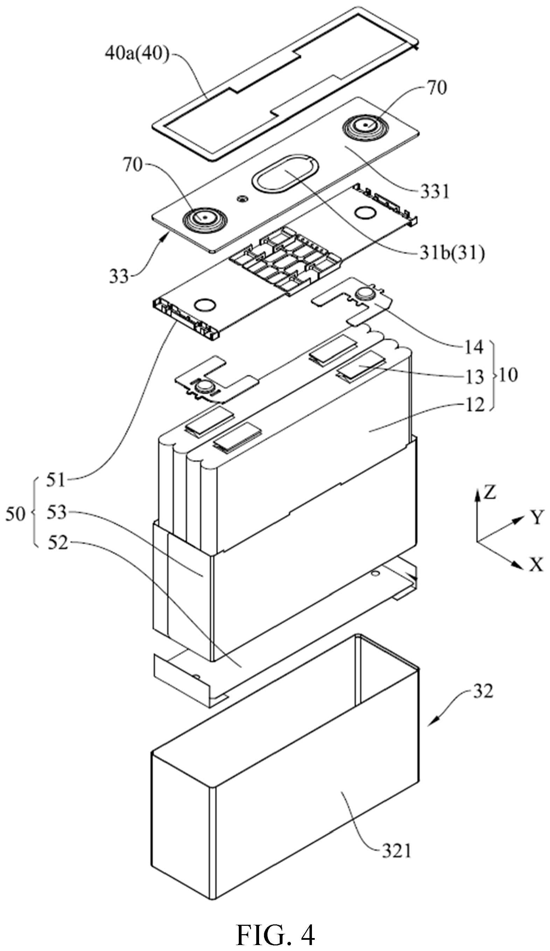

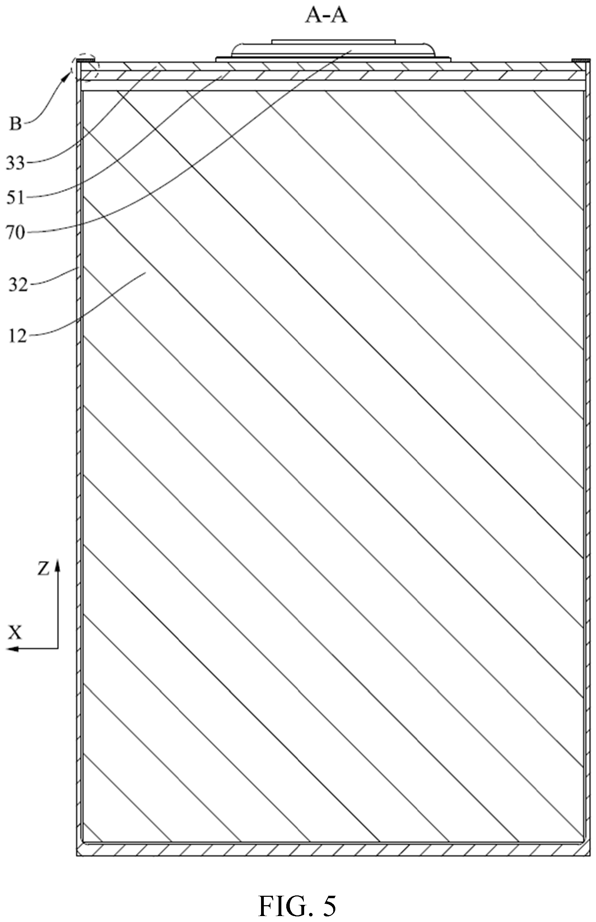

In some embodiments, refer to FIG. 3 to FIG. 5. FIG. 3 is a diagram of a three-dimensional structure of the battery cell 100a of the battery 100 according to some embodiments of the present application. FIG. 4 is an exploded view of FIG. 3. FIG. 5 is a cross-sectional view along A-A in FIG. 3. The battery cell 100a may include an electrode component 10 and a housing component 30.

The electrode component 10 is a component in the battery cell 100a, where electrochemical reactions occur. The electrode component 10 is primarily formed by winding or stacking a positive electrode plate and a negative electrode plate, and a separator is disposed between the positive electrode plate and the negative electrode plate. A part of the positive electrode plate and a part of the negative electrode plate that contain active substances form a main body portion 12 of the electrode component 10, and a part of the positive electrode plate and a part of the negative electrode plate that contain no active substances form respective tabs 13. The tab 13 of the positive electrode plate is a positive electrode tab, and the tab 13 of the negative electrode plate is a negative electrode tab. The positive electrode tab and the negative electrode tab may be located together at one end of the main body portion 12 or may be located respectively at two opposite ends of the main body portion 12.

In the battery cell 100a, there may be one or more electrode components 10.

In some embodiments, the battery cell 100a may further include an electrolyte, and the electrolyte is provided between the positive electrode plate and the negative electrode plate for ion conduction. The electrolyte in the embodiments of the present application may be liquid, gelled, or solid.

The housing component 30 is a component structure for defining an internal environment of the battery cell 100a. The housing component 30 is primarily configured to accommodate the electrode component 10 and the electrolyte.

In some embodiments, still refer to FIG. 3 to FIG. 5. The housing component 30 may include a housing 32 and an end cover 33. The housing 32 and the end cover 33 are components configured to jointly define an internal environment of the battery cell 100a. The internal environment defined by the housing 32 and the end cover 33 is for accommodating the electrode component 10 and the electrolyte.

The housing 32 and the end cover 33 may be independent components. Specifically, the housing 32 has an opening, and the end cover 33 is disposed at the opening of the housing 32, to jointly define, with the housing 32, the internal environment of the battery cell 100a, and isolate the internal environment of the battery cell 100a from an external environment. Alternatively, the housing 32 and the end cover 33 may be of an integrated structure. Specifically, a common connection surface may be formed between the end cover 33 and the housing 32 before the electrode component 10 is placed in the housing. After the electrode component 10 is placed in the housing, when encapsulation of the electrode component 10 is required, the end cover 33 is allowed to cover the housing 32.

There may be one end cover 33, as shown in FIG. 3 to FIG. 5. Alternatively, there may be two end covers 33, and the two end covers 33 are respectively disposed at two opposite ends of the housing 32.

The housing 32 may be in a cylindrical shape, a square shape, or another shape. This may be specifically determined based on a specific shape and size of the electrode component 10. In addition, the housing 32 and the end cover 33 may be made of various materials, such as copper, iron, aluminum, stainless steel, aluminum alloy, and plastic.

In some embodiments, referring to FIG. 3 to FIG. 5 together, the battery cell 100a may further include an electrode terminal 70. The electrode terminal 70 is a component with conductivity. The electrode terminal 70 is electrically connected to the electrode component 10, and is used as a current transmission end of the battery cell 100a for current transmission. The electrode terminal 70 may be, but is not limited to, a post.

In some embodiments, referring to FIG. 3 to FIG. 5 together, the electrode component 10 may further include a transition structure 14. The transition structure 14 is a metal structure with conductivity, and may be, for example, but is not limited to, a copper busbar. The transition structure 14 is disposed in the internal environment defined by the housing component 30.

The transition structure 14 is electrically connected to the electrode terminal 70 and the tab 13, to implement a connection between the electrode terminal 70 and the electrode component 10. In this way, the transition structure 14 enables current flow between the electrode component 10 and the electrode terminal 70.

In some embodiments, still referring to FIG. 3 to FIG. 5, there are two electrode terminals 70, and the two electrode terminals 70 are a positive electrode terminal and a negative electrode terminal. The transition structure 14 may also be divided into a positive electrode transition structure and a negative electrode transition structure. The positive electrode transition structure is electrically connected to the positive electrode terminal and the positive electrode tab. The negative electrode transition structure is electrically connected to the negative electrode terminal and the negative electrode tab.

In some embodiments, still referring to FIG. 3 to FIG. 5, the electrode terminal 70 is disposed on the housing component 30. Specifically, the electrode terminal 70 may be disposed on the housing 32 of the housing component 30, or may be disposed on the end cover 33 of the housing component 30.

The positive electrode terminal and the negative electrode terminal may be both disposed on the housing 32. Alternatively, as shown in FIG. 3 to FIG. 5, the positive electrode terminal and the negative electrode terminal are both disposed on the end cover 33. Alternatively, one of the positive electrode terminal and the negative electrode terminal is disposed on the housing 32, and the other is disposed on the end cover 33.

The positive electrode terminal and the negative electrode terminal may be disposed at a same end of the housing component 30. For example, as shown in FIG. 3 to FIG. 5, the positive electrode terminal and the negative electrode terminal are disposed on the end cover 33 at a same end of the housing component 30. Alternatively, the positive electrode terminal and the negative electrode terminal may be disposed respectively at two opposite ends of the housing component 30.

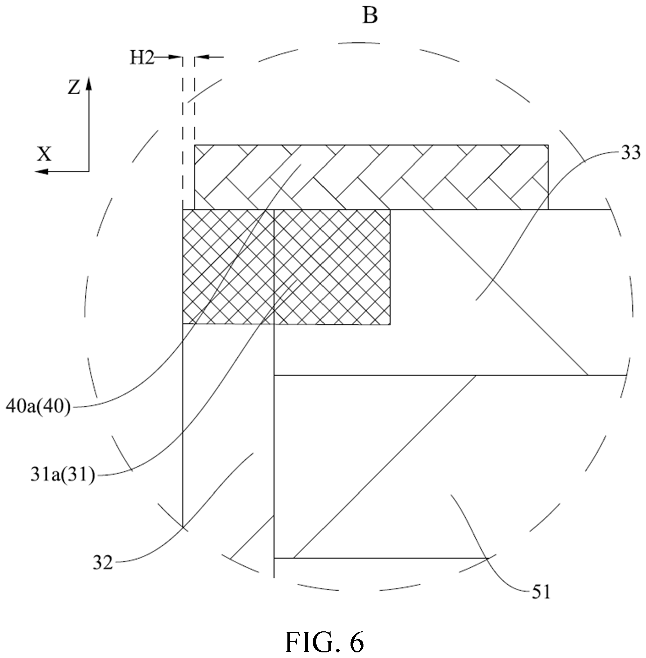

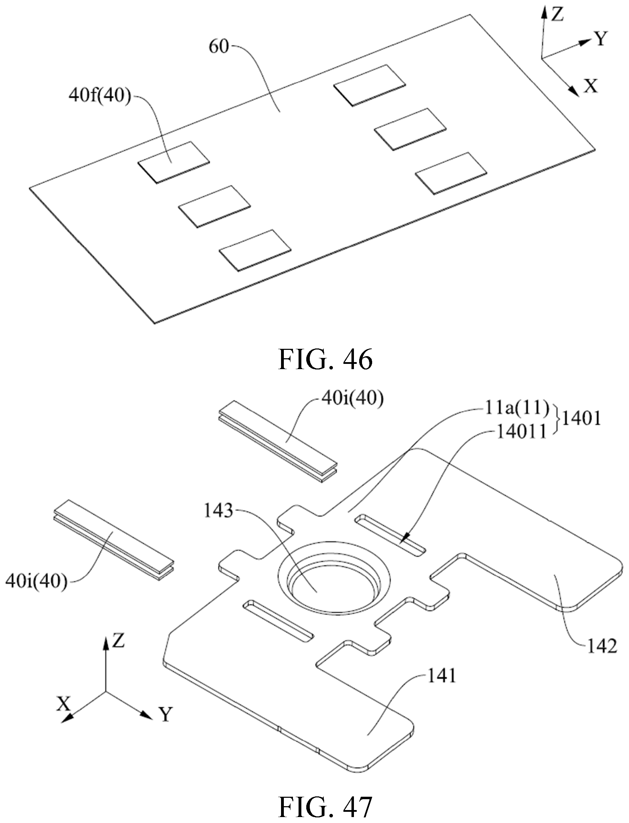

Refer to FIG. 3 to FIG. 6, and FIG. 47 together with other figures. FIG. 6 is an enlarged view at B in FIG. 5. FIG. 47 is an exploded view of the transition structure 14 and the fire extinguishing structure 40 of the battery 100 according to some embodiments of the present application. The battery 100 provided in the embodiments of the present application includes the electrode component 10, the housing component 30, and a fire extinguishing structure 40. The electrode component 10 is disposed in the housing component 30.

The fire extinguishing structure 40 is a structure that is made of a fire extinguishing material and that has a fire extinguishing function. Specifically, the fire extinguishing structure 40 suppresses generation and propagation of flames, and takes away heat in high-temperature and high-pressure gases and flames during operation, to achieve functions of cooling and fire extinguishing. In other words, the fire extinguishing structure 40 is primarily configured for cooling and fire extinguishing.

In some embodiments, refer to FIG. 3 to FIG. 6 together with other figures. The housing component 30 is provided with a first weak structure 31, and at least one fire extinguishing structure 40 is disposed at the first weak structure 31.

The first weak structure 31 is a weak part of the housing component 30. The housing 32 of the housing component 30 may be provided with the first weak structure 31. Alternatively, the end cover 33 of the housing component 30 may be provided with the first weak structure 31. Alternatively, the first weak structure 31 may be provided between the housing 32 and the end cover 33 of the housing component 30.

That the at least one fire extinguishing structure 40 is disposed at the first weak structure 31 means that the at least one fire extinguishing structure 40 is disposed at a position where cooling and fire extinguishing operations are allowed to be performed on the first weak structure 31. The at least one fire extinguishing structure 40 disposed at the first weak structure 31 may be in contact with the first weak structure 31; or may be disposed near the first weak structure 31 and spaced apart from the first weak structure 31. In other words, the fire extinguishing structure 40 is configured to perform cooling and fire extinguishing on the first weak structure 31, which may be understood as that the fire extinguishing structure 40 is disposed at the first weak structure 31.

Based on this, the at least one fire extinguishing structure 40 is disposed at the first weak structure 31, allowing the fire extinguishing structure 40 to perform cooling and fire extinguishing on the first weak structure 31. In this way, the temperature of high-temperature and high-pressure gases ejected from the first weak structure 31 is reduced, and flames ejected from the first weak structure 31 are extinguished.

In some embodiments, refer to FIG. 47 together with other figures. The electrode component 10 is provided with a second weak structure 11, and at least one fire extinguishing structure 40 is disposed at the second weak structure 11.

The second weak structure 11 is a weak part of the electrode component 10. The tab 13 of the electrode component 10 may be provided with the second weak structure 11. Alternatively, the transition structure 14 of the electrode component 10 may be provided with the second weak structure 11.

That the at least one fire extinguishing structure 40 is disposed at the second weak structure 11 means that the at least one fire extinguishing structure 40 is disposed at a position where cooling and fire extinguishing operations are allowed to be performed on the second weak structure 11. The at least one fire extinguishing structure 40 disposed at the second weak structure 11 may be in contact with the second weak structure 11; or may be disposed near the second weak structure 11 and spaced apart from the second weak structure 11. In other words, the fire extinguishing structure 40 is configured to perform cooling and fire extinguishing on the second weak structure 11, which may be understood as that the fire extinguishing structure 40 is disposed at the second weak structure 11.

Based on this, the at least one fire extinguishing structure 40 is disposed at the second weak structure 11, allowing the fire extinguishing structure 40 to perform cooling and fire extinguishing on the second weak structure 11. In this way, the temperature of high-temperature and high-pressure gases generated at the second weak structure 11 is reduced, and flames generated at the second weak structure 11 are extinguished.

It should be noted herein that, when the fire extinguishing structure 40 is allowed to perform cooling and fire extinguishing on the first weak structure 31 and the second weak structure 11, the fire extinguishing structure 40 is disposed at the first weak structure 31 and the second weak structure 11.

In the battery 100 provided in the embodiments of the present application, the fire extinguishing structure 40 is disposed at the first weak structure 31 of the housing component 30, allowing the fire extinguishing structure 40 to perform cooling and fire extinguishing operations at the first weak structure 31; and the fire extinguishing structure 40 is disposed at the second weak structure 11 of the electrode component 10, allowing the fire extinguishing structure 40 to perform cooling and fire extinguishing operations at the second weak structure 11. In this way, a thermal runaway reaction and thermal propagation of the battery cell 100a are mitigated, thereby resolving a problem of chain reactions caused by thermal runaway in adjacent battery cells 100a, so as to mitigate thermal runaway in the entire battery 100, improving reliability of the battery 100.

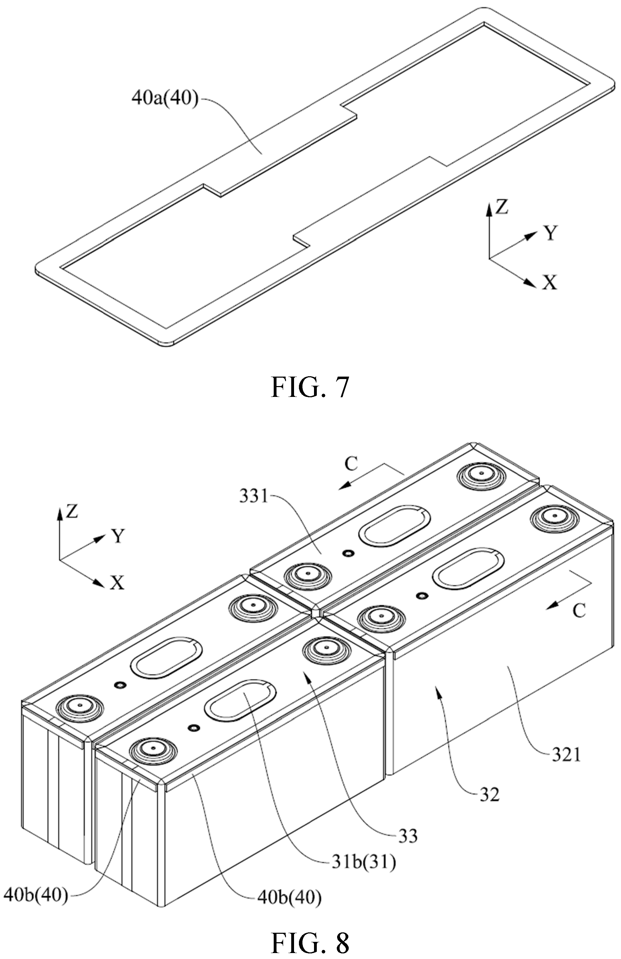

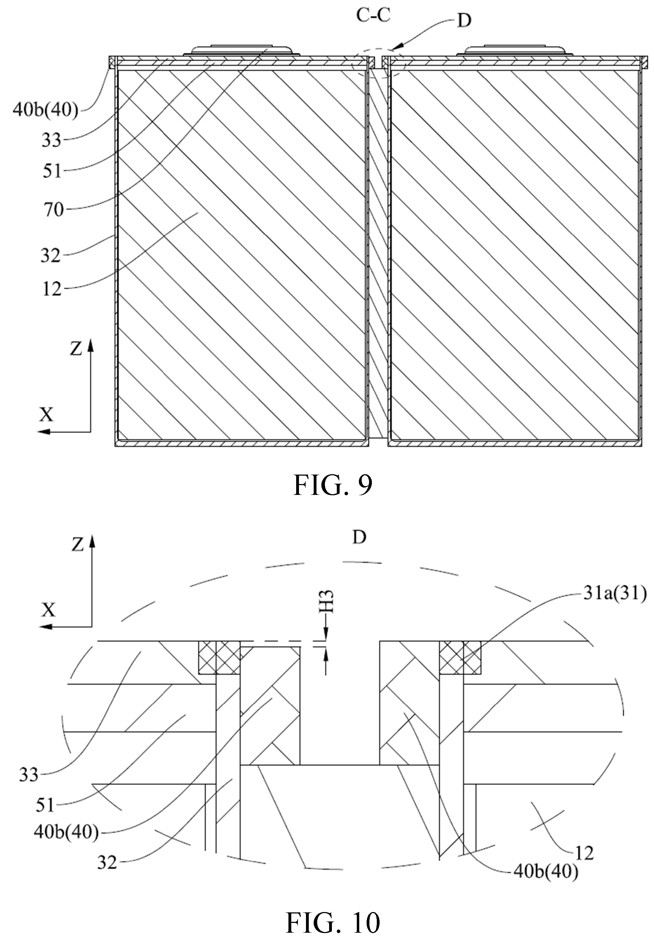

In some embodiments, refer to FIG. 3 to FIG. 10 together with other figures. FIG. 7 is a diagram of a three-dimensional structure of the fire extinguishing structure 40 of the battery cell 100a provided in FIG. 3. FIG. 8 is a diagram of a three-dimensional structure of the battery 100 according to some embodiments of the present application. FIG. 9 is a cross-sectional view along C-C in FIG. 8. FIG. 10 is an enlarged view at D in FIG. 9. The at least one fire extinguishing structure 40 disposed at the first weak structure 31 is in contact with the housing component 30.

As shown in FIG. 3 to FIG. 10, the at least one fire extinguishing structure 40 disposed at the first weak structure 31 may be in contact with the first weak structure 31 of the housing component 30. The at least one fire extinguishing structure 40 disposed at the first weak structure 31 may alternatively be in contact with another position of the housing component 30 other than the first weak structure 31.

As shown in FIG. 3 to FIG. 6, the at least one fire extinguishing structure 40 disposed at the first weak structure 31 may be in contact with the end cover 33 of the housing component 30. As shown in FIG. 8 to FIG. 10, the at least one fire extinguishing structure 40 disposed at the first weak structure 31 may alternatively be in contact with the housing 32 of the housing component 30.

As shown in FIG. 3 to FIG. 10, the at least one fire extinguishing structure 40 disposed at the first weak structure 31 may be in contact with an outer wall of the housing component 30. The at least one fire extinguishing structure 40 disposed at the first weak structure 31 may alternatively be in contact with an inner wall of the housing component 30.

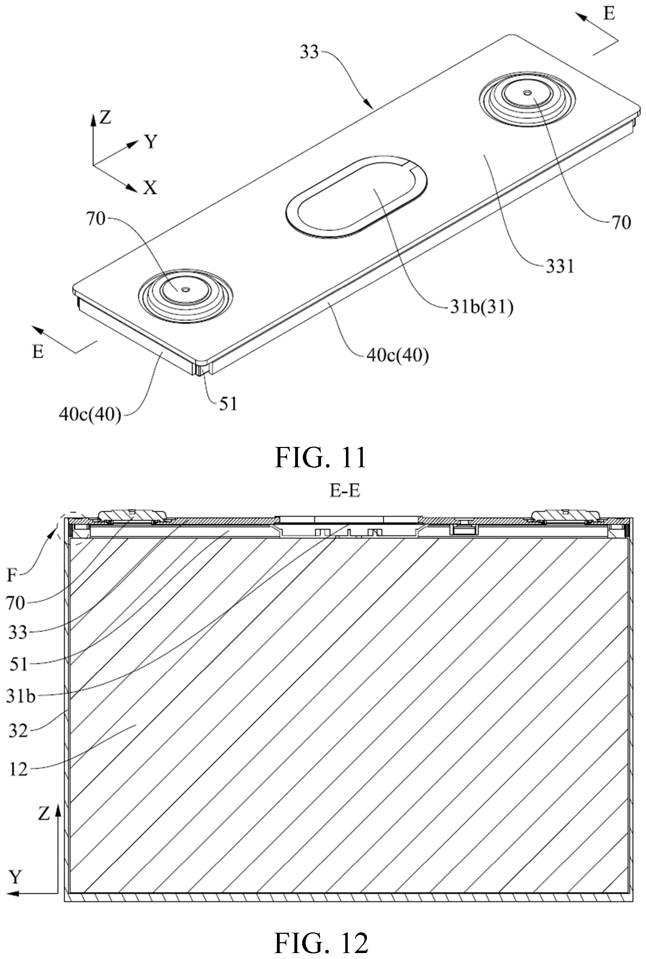

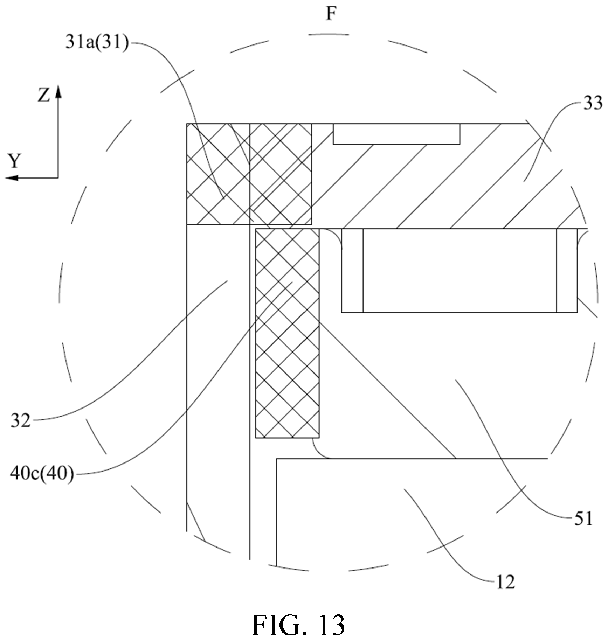

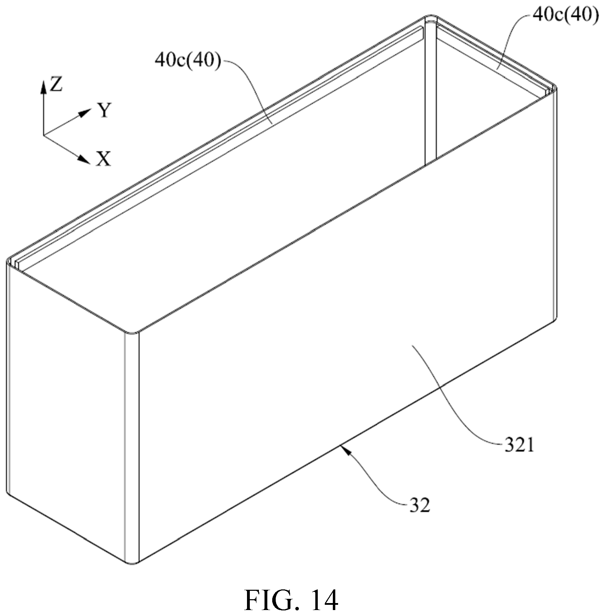

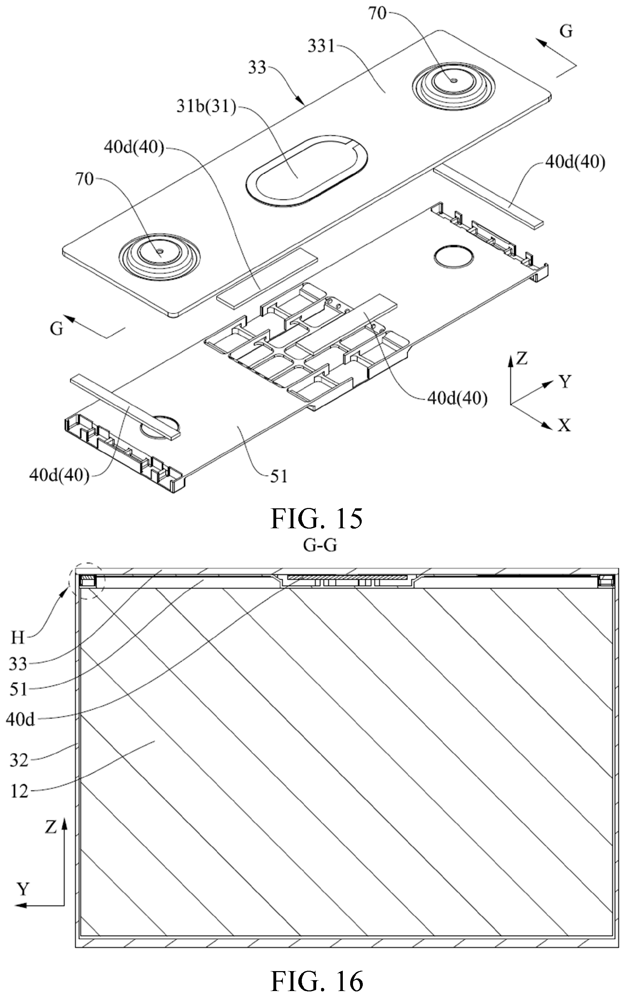

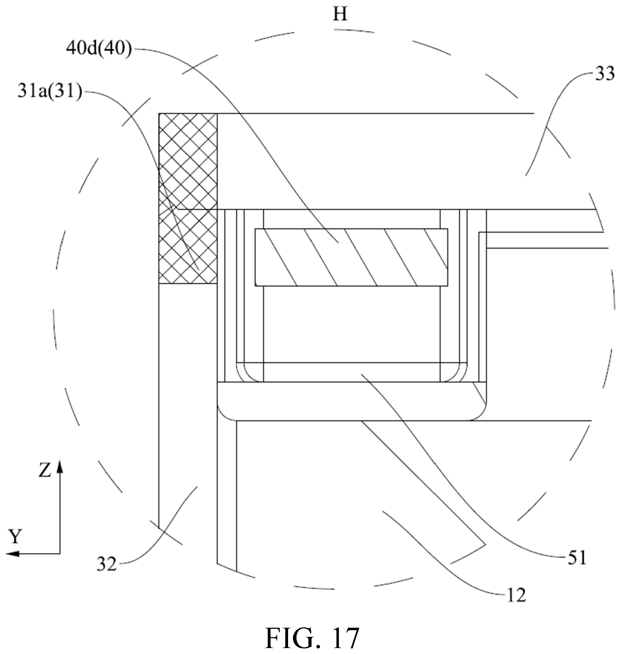

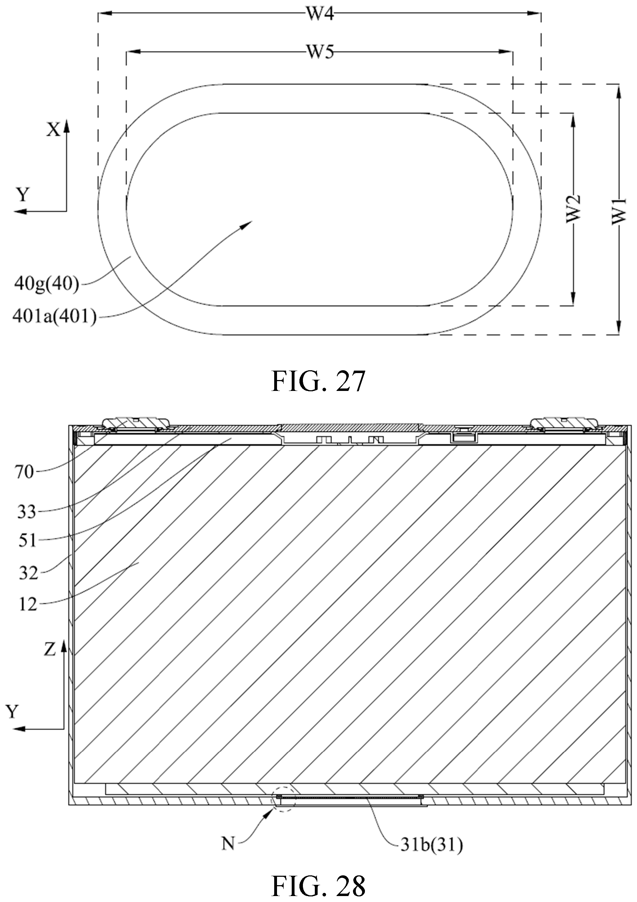

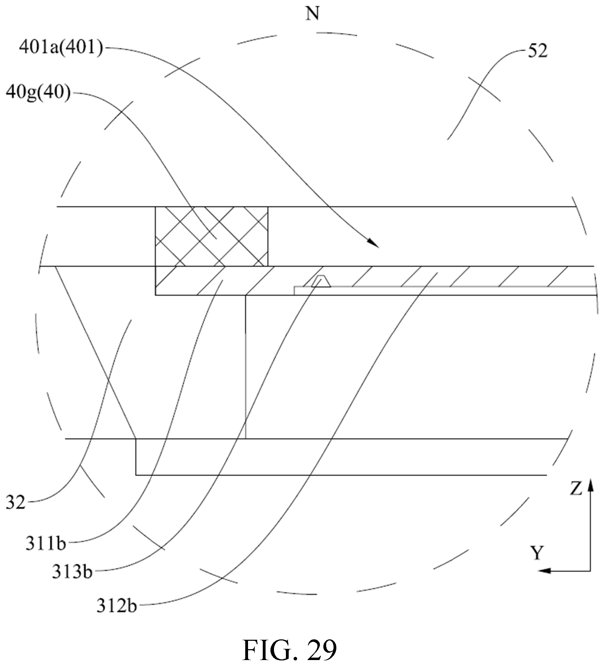

In some embodiments, refer to FIG. 11 to FIG. 17, FIG. 28, and FIG. 29 together with other figures. FIG. 11 is a diagram of a partial structure of the battery cell 100a of the battery 100 according to some embodiments of the present application. FIG. 12 is a cross-sectional view of the battery cell 100a provided in FIG. 11 along E-E in FIG. 11. FIG. 13 is an enlarged view at F in FIG. 12. FIG. 14 is a diagram of a three-dimensional structure of the housing 32 and the fire extinguishing structure 40 of the battery 100 provided in FIG. 11. FIG. 15 is an exploded view of the battery cell 100a of the battery 100 according to some embodiments of the present application. FIG. 16 is a cross-sectional view of the battery cell 100a provided in FIG. 15 along G-G in FIG. 15. FIG. 17 is an enlarged view at H in FIG. 16. FIG. 28 is a cross-sectional view of the battery cell 100a of the battery 100 according to some embodiments of the present application. FIG. 29 is an enlarged view at N in FIG. 28. A first insulation structure 50 is disposed between the housing component 30 and the electrode component 10, and the at least one fire extinguishing structure 40 disposed at the first weak structure 31 is disposed on the first insulation structure 50.

The first insulation structure 50 is a component with insulation properties. The first insulation structure 50 is disposed between the housing component 30 and the electrode component 10, to provide insulation between the housing component 30 and the electrode component 10.

That the first insulation structure 50 is disposed between the housing component 30 and the electrode component 10 means that the first insulation structure 50 is disposed between a main part of the electrode component 10 and an inner wall of the housing component 30. The main part of the electrode component 10 may be the main body portion 12 of the electrode component 10.

The first insulation structure 50 may have various structures, including but not limited to the following several possible designs:

In some possible designs, as shown in FIG. 11 to FIG. 13 and FIG. 15 to FIG. 17, the first insulation structure 50 includes a lower plastic piece 51. The lower plastic piece 51 is disposed between the main body portion 12 of the electrode component 10 and the inner wall of the housing component 30. Specifically, the lower plastic piece 51 is disposed between the inner wall of the housing component 30 and an end portion that is of the main body portion 12 and that has the tab 13, to provide insulation between the electrode component 10 and the housing component 30. The at least one fire extinguishing structure 40 disposed at the first weak structure 31 is disposed on the lower plastic piece 51.

The lower plastic piece 51 may alternatively be disposed between the transition structure 14 and the inner wall of the housing component 30.

In some possible designs, as shown in FIG. 28 and FIG. 29, the first insulation structure 50 includes a bottom support plate 52, and the bottom support plate 52 is disposed between the electrode component 10 and the inner wall of the housing component 30. The bottom support plate 52 is configured to support the electrode component 10, and is configured to provide insulation between the electrode component 10 and the housing component 30. The at least one fire extinguishing structure 40 disposed at the first weak structure 31 is disposed on the bottom support plate 52. In an example, the tab 13 of the electrode component 10 is disposed at an end of the main body portion 12, the lower plastic piece 51 is disposed between the inner wall of the housing component 30 and the end that is of the main body portion 12 and that has the tab 13, and the bottom support plate 52 is disposed between the housing component 30 and an end that is of the main body portion 12 and that is away from the tab 13.

In some possible designs, the first insulation structure 50 may include an insulating film 53 wrapped around the electrode component 10, and the fire extinguishing structure 40 disposed at the first weak structure 31 may be disposed on the insulating film 53.

In some possible designs, refer to FIG. 14 together with other figures. The at least one fire extinguishing structure 40 disposed at the first weak structure 31 may be disposed on the first insulation structure 50, and may be in contact with the inner wall of the housing component 30. In an example, as shown in FIG. 14, the at least one fire extinguishing structure 40 disposed at the first weak structure 31 is disposed on the lower plastic piece 51 of the first insulation structure 50, and is in contact with the inner wall of the housing component 30.

According to the foregoing technical solution, the at least one fire extinguishing structure 40 disposed at the first weak structure 31 is in contact with the housing component 30 or is disposed on the first insulation structure 50 in the housing component 30, to perform cooling and fire extinguishing on the first weak structure 31, thereby allowing for highly flexible arrangement of the fire extinguishing structure 40 disposed at the first weak structure 31.

In some embodiments, the at least one fire extinguishing structure 40 disposed at the second weak structure 11 is in contact with the housing component 30.

In some embodiments, the first insulation structure 50 is disposed between the housing component 30 and the electrode component 10, and the at least one fire extinguishing structure 40 disposed at the second weak structure 11 is disposed on the first insulation structure 50.

It should be further noted that the at least one fire extinguishing structure 40 disposed at the first weak structure 31 may be disposed outside the housing component 30, as shown in FIG. 3 to FIG. 10. The at least one fire extinguishing structure 40 disposed at the first weak structure 31 may alternatively be disposed in the housing component 30, as shown in FIG. 11 to FIG. 17.

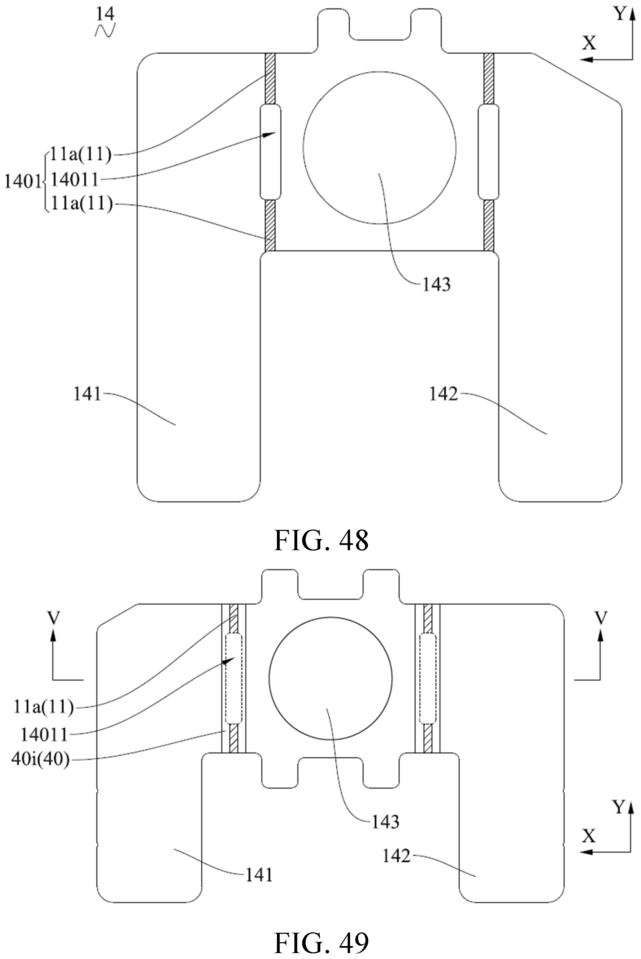

As shown in FIG. 47 and FIG. 48, the at least one fire extinguishing structure 40 disposed at the second weak structure 11 is disposed in the housing component 30.

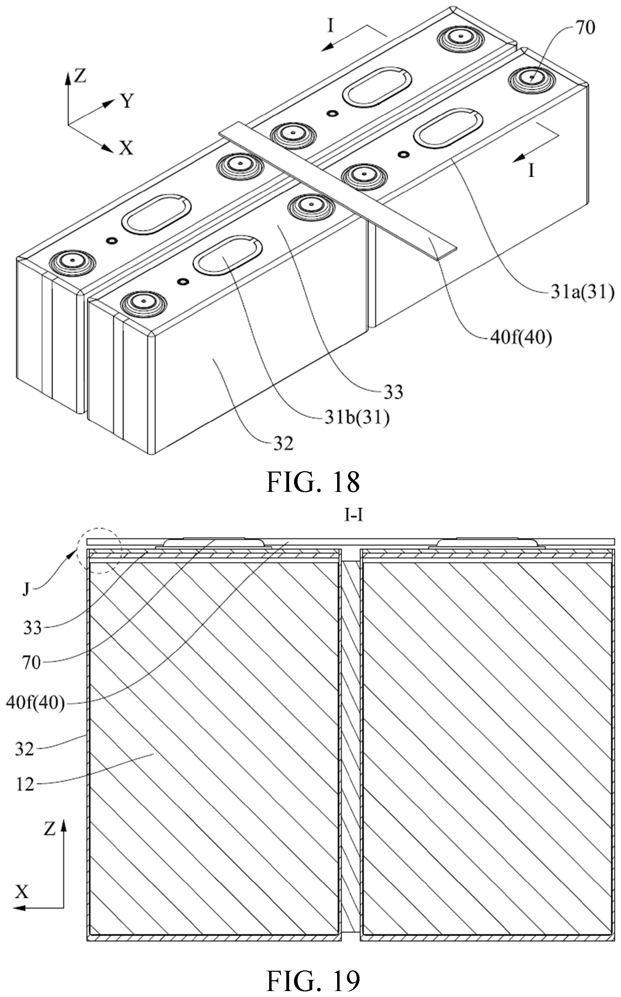

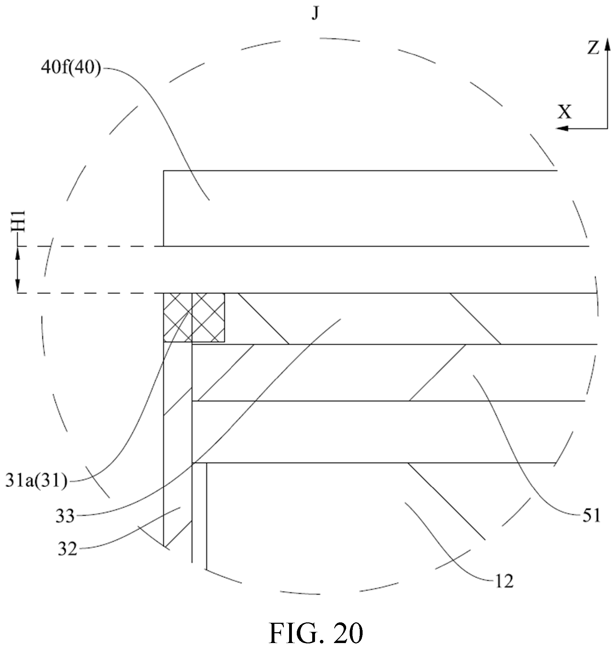

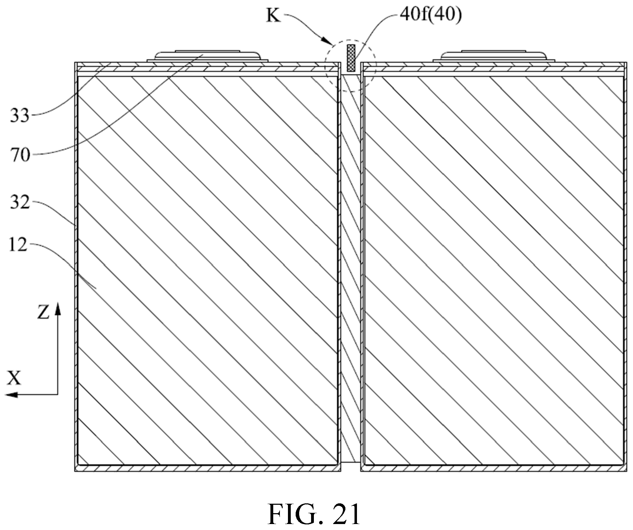

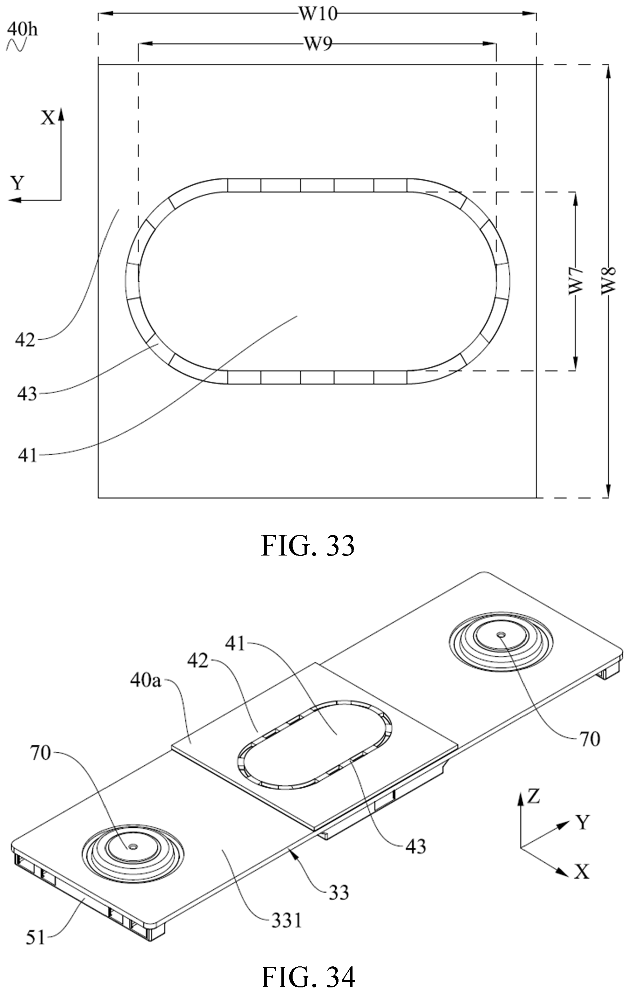

In some embodiments, refer to FIG. 18 to FIG. 22 together with other figures. FIG. 18 is a diagram of a three-dimensional structure of the battery 100 according to some embodiments of the present application. FIG. 19 is a cross-sectional view along I-I in FIG. 18. FIG. 20 is an enlarged view at J in FIG. 19. FIG. 21 is a cross-sectional view of the battery 100 according to some embodiments of the present application. FIG. 33 is an enlarged view at K in FIG. 21. The at least one fire extinguishing structure 40 disposed at the first weak structure 31 is disposed outside the housing component 30, and is spaced apart from and opposite to the first weak structure 31.

According to the foregoing technical solution, during thermal runaway in the battery cell 100a, the at least one fire extinguishing structure 40 is allowed to perform cooling and fire extinguishing on high-temperature and high-pressure gases and flames that are ejected from the first weak structure 31. In this way, a thermal runaway reaction and thermal propagation of the battery cell 100a are mitigated, thereby resolving a problem of chain reactions caused by thermal runaway in adjacent battery cells 100a, so as to mitigate thermal runaway in the entire battery 100, improving reliability of the battery 100.

For ease of description, the at least one fire extinguishing structure 40 that is disposed at the first weak structure 31 and outside the housing component 30, and that is spaced apart from and opposite to the first weak structure 31 is defined as a sixth fire extinguishing piece 40f. In other words, the sixth fire extinguishing piece 40f is disposed outside the housing component 30, and is spaced apart from and opposite to the first weak structure 31, allowing the sixth fire extinguishing piece 40f to be disposed at the first weak structure 31.

In some embodiments, refer to FIG. 18 to FIG. 22 together with other figures. The at least one sixth fire extinguishing piece 40f disposed at the first weak structure 31 is disposed outside the housing component 30, and in a direction in which the sixth fire extinguishing piece 40f is opposite to the first weak structure 31, a distance between the sixth fire extinguishing piece 40f and the first weak structure 31 is a first distance H1, and the first distance H1 is ≥ 5 mm and ≤ 15 mm.

Specifically, the first distance H1 may be 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, or the like.

In some embodiments, refer to FIG. 18 to FIG. 22 together with other figures. The first distance H1 is ≤ 10 mm.

Specifically, the first distance H1 may be 5 mm, 5.5 mm, 6 mm, 6.5 mm, 7 mm, 7.5 mm, 8 mm, 8.5 mm, 9 mm, 9.5 mm, 10 mm, or the like.

With this configuration, there is an appropriate distance between the first weak structure 31 and the fire extinguishing structure 40 disposed at the first weak structure 31, allowing the sixth fire extinguishing piece 40f to sufficiently perform cooling and fire extinguishing operations on high-temperature and high-pressure gases and flames, and providing gas discharge space between the sixth fire extinguishing piece 40f and the first weak structure 31. In this way, a thermal runaway reaction and thermal propagation of the battery cell 100a are mitigated, to mitigate thermal runaway in the battery 100, improving reliability of the battery 100.

In some embodiments, refer to FIG. 3 to FIG. 22 together with other figures. A weld seam 31a is formed on the housing component 30, the first weak structure 31 includes the weld seam 31a, and the at least one fire extinguishing structure 40 is disposed at the weld seam 31a.

The weld seam 31a is a mark formed by welding on the housing component 30.

The first weak structure 31 includes the weld seam 31a, which means that at least a part of the first weak structure 31 is the weld seam 31a.

That the at least one fire extinguishing structure 40 is disposed at the weld seam 31a means that the at least one fire extinguishing structure 40 is disposed at a position where cooling and fire extinguishing operations are allowed to be performed on the weld seam 31a. The at least one fire extinguishing structure 40 disposed at the weld seam 31a may be in contact with the weld seam 31a; or may be disposed near the weld seam 31a and spaced apart from the weld seam 31a. In other words, the fire extinguishing structure 40 is configured to perform cooling and fire extinguishing on the weld seam 31a, which may be understood as that the fire extinguishing structure 40 is disposed at the weld seam 31a.

The at least one fire extinguishing structure 40 that is disposed near the weld seam 31a and spaced apart from the weld seam 31a may be in contact with another position of the housing component 30 other than the weld seam 31a, for example, may be in contact with at least one of another position of the housing 32 of the housing component 30 other than the weld seam 31a, and another position of the end cover 33 other than the weld seam 31a.

The at least one fire extinguishing structure 40 that is disposed near the weld seam 31a and spaced apart from the weld seam 31a may alternatively be disposed on the first insulation structure 50, for example, may be disposed on the lower plastic piece 51.

Based on this, the at least one fire extinguishing structure 40 is disposed at the weld seam 31a, allowing the fire extinguishing structure 40 to perform cooling and fire extinguishing on the weld seam 31a. In this way, the temperature of high-temperature and high-pressure gases ejected from the weld seam 31a is reduced, and flames ejected from the weld seam 31a are extinguished.

In some embodiments, refer to FIG. 3 to FIG. 22 together with other figures. The housing component 30 includes a housing 32 and an end cover 33, and the end cover 33 is disposed on the housing 32 to enclose, with the housing 32, a space for accommodating the electrode component 10.

In some embodiments, refer to FIG. 3 to FIG. 22 together with other figures. The housing 32 and the end cover 33 are welded together, and a first weld seam is formed between the housing 32 and the end cover 33. The weld seam 31a includes the first weld seam, and the at least one fire extinguishing structure 40 is disposed at the first weld seam.

The first weld seam is a mark formed by welding on the housing 32 and the end cover 33. The weld seam 31a in FIG. 3 to FIG. 22 is the first weld seam.

That the weld seam 31a includes the first weld seam means that at least a part of the weld seam 31a is the first weld seam.

The at least one fire extinguishing structure 40 is disposed at the first weld seam, so that the at least one fire extinguishing structure 40 performs cooling and fire extinguishing operations on the first weld seam.

In some other embodiments, the housing 32 is formed with a second weld seam. The weld seam 31a includes the second weld seam, and the at least one fire extinguishing structure 40 is disposed at the second weld seam.

The second weld seam is a mark formed by welding on the housing 32.

That the weld seam 31a includes the second weld seam means that at least a part of the weld seam 31a is the second weld seam.

The at least one fire extinguishing structure 40 is disposed at the second weld seam, so that the at least one fire extinguishing structure 40 performs cooling and fire extinguishing operations on the second weld seam.

Based on the foregoing structure, there are many types and positions of the weld seams 31a on which cooling and fire extinguishing are implemented by using the fire extinguishing structure 40.

In some embodiments, refer to FIG. 3 to FIG. 22 together with other figures. The end cover 33 is disposed at an end portion of the housing 32 in a first direction Z.

The end cover 33 and the housing 32 may be sequentially distributed in the first direction Z. Alternatively, as shown in FIG. 3 to FIG. 22, the end cover 33 may be disposed at an opening of the end portion of the housing 32 in the first direction Z, so that the housing 32 roughly surrounds an outer periphery of the end cover 33 around the first direction Z. In other words, the end cover 33 and the housing 32 are roughly distributed in directions perpendicular to the first direction Z.

Specifically, two opposite end portions of the end cover 33 in a second direction X and two opposite end portions of the end cover 33 in a third direction Y are separately welded to the housing 32 to form the first weld seam. To be specific, the first weld seam is formed at the end portion of the housing component 30 in the first direction Z with the two opposite end portions in the second direction X and the two opposite end portions in the third direction Y.

The first direction Z is perpendicular to the second direction X, the second direction X is perpendicular to the third direction Y, and the first direction Z is perpendicular to the third direction Y.

In some cases, the first direction Z may be a height direction of the battery cell 100a. The second direction X may be a width direction of the battery cell 100a, that is, a thickness direction of the battery cell 100a. The third direction Y may be a length direction of the battery cell 100a.

In some cases, the height of the battery cell 100a is greater than the length of the battery cell 100a, and the length of the battery cell 100a is greater than the width of the battery cell 100a.

In some embodiments, refer to FIG. 3 to FIG. 7 together with other figures. The at least one fire extinguishing structure 40 disposed at the first weld seam is a first fire extinguishing piece 40a, and the first fire extinguishing piece 40a is in contact with an outer wall of the housing component 30 in the first direction Z. On a projection plane perpendicular to the first direction Z, a distance between an outer edge of the housing component 30 and the first fire extinguishing piece 40a is ≤ 6 mm in a width direction of the first weld seam.

It may be understood that, the first fire extinguishing piece 40a is in contact with the outer wall that is of the housing component 30 and that is away from the electrode component 10 in the first direction Z. The first fire extinguishing piece 40a may be in contact with an outer wall that is of the end cover 33 of the housing component 30 and that is away from the electrode component 10 in the first direction Z, or may be in contact with an outer wall that is of the housing 32 of the housing component 30 and that is away from the electrode component 10 in the first direction Z.

On the projection plane perpendicular to the first direction Z, the distance between the first fire extinguishing piece 40a and the outer edge of a part with the first weld seam of the housing component 30 in the width direction of the first weld seam is ≤ 6 mm, and may be specifically 0, 0.5 mm, 1 mm, 1.5 mm, 2 mm, 2.5 mm, 3 mm, 3.5 mm, 4 mm, 4.5 mm, 5 mm, 5.5 mm, or the like.

In some possible designs, as shown in FIG. 5 and FIG. 6, the first weld seam is formed at at least one end portion of the end cover 33 in the second direction X with the housing 32, so that at the end portion of the housing component 30 in the first direction Z, the at least one end portion in the second direction X is formed with the first weld seam, and the width direction of the first weld seam at the at least one end portion of the housing component 30 in the second direction X is the second direction X. The first fire extinguishing piece 40a is in contact with the outer wall in the first direction Z of the at least one end portion in the second direction X at the end portion of the housing component 30 in the first direction Z. In addition, in the second direction X, the distance between the first fire extinguishing piece 40a and the outer edge of the part with the first weld seam of the housing component 30 is a second distance H2, and the second distance H2 is ≤ 6 mm. In this way, the first fire extinguishing piece 40a is in contact with the outer wall of the housing component 30 in the first direction Z at the first weld seam on the at least one end portion of the end cover 33 in the second direction X.

In an example, as shown in FIG. 5 and FIG. 6, on a cross section perpendicular to the third direction Y, a distance between a left outer edge of the housing component 30 in the second direction X and a left edge of the first fire extinguishing piece 40a in the second direction X is the second distance H2.

In some other possible designs, the first weld seam is formed at at least one end portion of the end cover 33 in the third direction Y with the housing 32, so that at the end portion of the housing component 30 in the first direction Z, the at least one end portion in the third direction Y is formed with the first weld seam, and the width direction of the first weld seam at the at least one end portion of the housing component 30 in the third direction Y is the third direction Y. The first fire extinguishing piece 40a is in contact with the outer wall in the first direction Z of the at least one end portion in the third direction Y at the end portion of the housing component 30 in the first direction Z. In addition, in the third direction Y, the distance between the first fire extinguishing piece 40a and the outer edge of the part with the first weld seam of the housing component 30 is a third distance, and the third distance is ≤ 6 mm. In this way, the first fire extinguishing piece 40a is in contact with the outer wall of the housing component 30 in the first direction Z at the first weld seam on the at least one end portion of the end cover 33 in the third direction Y.

In an example, the first weld seam is formed at the housing 32 separately with the two opposite end portions of the end cover 33 in the second direction X and the two opposite end portions of the end cover 33 in the third direction Y. In this case, at the end portion of the housing component 30 in the first direction Z, the first weld seam is separately formed at the two opposite end portions in the second direction X and the two opposite end portions in the third direction Y. In addition, on the outer wall of the housing component 30 in the first direction Z, the first fire extinguishing piece 40a is in contact with both the first weld seam at the two opposite end portions of the end cover 33 in the second direction X and the first weld seam at the two opposite end portions of the end cover 33 in the third direction Y, so that the first fire extinguishing piece 40a is arranged around the first direction Z.

A plurality of first fire extinguishing pieces 40a may be connected to each other or may be spaced apart from each other.

According to the foregoing technical solution, the first fire extinguishing piece 40a is in contact with the outer wall of the housing component 30 in the first direction Z and is disposed at the first weld seam, allowing cooling and fire extinguishing operations to be performed on the first weld seam.

In some embodiments, on the projection plane perpendicular to the first direction Z, the first fire extinguishing piece 40a covers 80% or more of the first weld seam in the width direction, specifically 80%, 81%, 82%, 85%, 88%, 90%, 91%, 92%, 95%, 98%, 100%, or the like.

In an example, as shown in FIG. 5 and FIG. 6, on the cross section perpendicular to the third direction Y, a projection line of the first fire extinguishing piece 40a on the first weld seam covers 80% or more of the first weld seam.

In this way, the first fire extinguishing piece 40a is as close as possible to the first weld seam, so that cooling and fire extinguishing effects of the first fire extinguishing piece 40a on the first weld seam are improved, helping resolve problems of thermal runaway and thermal propagation of the battery cell 100a.

In some other embodiments, refer to FIG. 8 to FIG. 10 together with other figures. The at least one fire extinguishing structure 40 disposed at the first weld seam is a second fire extinguishing piece 40b, and the second fire extinguishing piece 40b is in contact with an outer wall of the housing component 30 in a direction perpendicular to the first direction Z. A distance between an outer edge of the housing component 30 and the second fire extinguishing piece 40b is ≤ 6 mm in the first direction Z.

The direction perpendicular to the first direction Z may be the second direction X above or may be the third direction Y above.

In some possible designs, as shown in FIG. 8 to FIG. 10, the second fire extinguishing piece 40b is in contact with the outer wall of the housing component 30 in the second direction X, and in the first direction Z, the distance between the second fire extinguishing piece 40b and the outer edge of a part with the first weld seam of the housing component 30 is a fourth distance H3. In this way, the outer wall of the housing component 30 in the second direction X is in contact with the second fire extinguishing piece 40b at the first weld seam.

In some possible designs, as shown in FIG. 8 to FIG. 10, the second fire extinguishing piece 40b is in contact with the outer wall of the housing component 30 in the third direction Y, and in the first direction Z, the distance between the second fire extinguishing piece 40b and the outer edge of a part with the first weld seam of the housing component 30 is a fourth distance H3. In this way, the outer wall of the housing component 30 in the third direction Y is in contact with the second fire extinguishing piece 40b at the first weld seam.

The fourth distance H3 is ≤ 6 mm, and may be specifically 0, 0.5 mm, 1 mm, 1.5 mm, 2 mm, 2.5 mm, 3 mm, 3.5 mm, 4 mm, 4.5 mm, 5 mm, 5.5 mm, or the like.

A plurality of second fire extinguishing pieces 40b may be connected to each other or may be spaced apart from each other.

According to the foregoing technical solution, the second fire extinguishing piece 40b is in contact with the outer wall of the housing component 30 in the direction perpendicular to the first direction Z and is disposed at the first weld seam, allowing cooling and fire extinguishing operations to be performed on the first weld seam.

In some embodiments, on a cross section parallel to the first direction Z, a projection line of the second fire extinguishing piece 40b on the first weld seam covers 80% or more of the first weld seam, specifically 80%, 81%, 82%, 85%, 88%, 90%, 91%, 92%, 95%, 98%, 100%, or the like.

In this way, the second fire extinguishing piece 40b is as close as possible to the first weld seam, so that cooling and fire extinguishing effects of the second fire extinguishing piece 40b on the first weld seam are improved, helping resolve problems of thermal runaway and thermal propagation of the battery cell 100a.

According to the foregoing technical solution, the fire extinguishing structure 40 is as close as possible to the first weld seam, so that cooling and fire extinguishing effects of the fire extinguishing structure 40 on the first weld seam are improved, helping resolve problems of thermal runaway and thermal propagation of the battery cell 100a.

In some embodiments, refer to FIG. 3 to FIG. 10 together with other figures. The at least one fire extinguishing structure 40 disposed at the weld seam 31a is in contact with a surface of the weld seam 31a.

The at least one fire extinguishing structure 40 may be in contact with an outer surface of the weld seam 31a. The at least one fire extinguishing structure 40 may alternatively be in contact with an inner surface of the weld seam 31a.

In some possible designs, the first fire extinguishing piece 40a is in contact with an outer surface that is of the first weld seam and that is away from the electrode component 10.

In some possible designs, the second fire extinguishing piece 40b is in contact with an outer surface that is of the first weld seam and that is away from the electrode component 10.

According to the foregoing technical solution, the fire extinguishing structure 40 is in contact with the surface of the weld seam 31a, so that cooling and fire extinguishing effects of the fire extinguishing structure 40 on the weld seam 31a are improved, to well mitigate thermal runaway and thermal propagation of the battery cell 100a, improving reliability of the battery 100.

The first fire extinguishing piece 40a is in contact with the outer wall of the housing component 30, so that the first fire extinguishing piece 40a is used as a partial structure of the battery cell 100a. Based on this, a plurality of first fire extinguishing pieces 40a on the battery cell 100a may be connected to each other or may be spaced apart from each other. The first fire extinguishing pieces 40a on a plurality of battery cells 100a may be connected to each other or may be spaced apart from each other.

The second fire extinguishing piece 40b is in contact with the outer wall of the housing component 30, so that the second fire extinguishing piece 40b is used as a partial structure of the battery cell 100a. Based on this, a plurality of second fire extinguishing pieces 40b on the battery cell 100a may be connected to each other or may be spaced apart from each other. The second fire extinguishing pieces 40b on a plurality of battery cells 100a may be connected to each other or may be spaced apart from each other.

In some embodiments, refer to FIG. 11 to FIG. 17 together with other figures. The first insulation structure 50 is disposed between the housing component 30 and the electrode component 10, and the first insulation structure 50 is disposed between the electrode component 10 and the weld seam 31a. The at least one fire extinguishing structure 40 disposed at the weld seam 31a is disposed between the first insulation structure 50 and the housing component 30 along a path from the electrode component 10 to the weld seam 31a.

The first insulation structure 50 is disposed between the main part of the electrode component 10 and the weld seam 31a, which may be specifically understood as being disposed between the main body portion 12 of the electrode component 10 and the weld seam 31a.

The weld seam 31a may be the first weld seam or may be the second weld seam.

The path from the electrode component 10 to the weld seam 31a may be considered as a path along which high-temperature and high-pressure gases and flames that are generated by the electrode component 10 spread to the weld seam 31a.

That the first insulation structure 50 is disposed between the electrode component 10 and the weld seam 31a means that the first insulation structure 50 is disposed on the path from the electrode component 10 to the weld seam 31a. In this case, the high-temperature and high-pressure gases and flames that are generated by the electrode component 10 pass through the first insulation structure 50 on the path along which the high-temperature and high-pressure gases and flames spread to the weld seam 31a, and specifically pass through a gap between the first insulation structure 50 and the housing component 30.

The first insulation structure 50 is disposed between the electrode component 10 and the weld seam 31a, and the at least one fire extinguishing structure 40 is disposed between the first insulation structure 50 and the housing component 30 along the path from the electrode component 10 to the weld seam 31a. This means that the first insulation structure 50 and the at least one fire extinguishing structure 40 are disposed on the path from the electrode component 10 to the weld seam 31a, and the at least one fire extinguishing structure 40 is disposed between the housing component 30 and the first insulation structure 50. Specifically, the at least one fire extinguishing structure 40 is disposed at the gap between the housing component 30 and the first insulation structure 50.

Along the path from the electrode component 10 to the weld seam 31a, the at least one fire extinguishing structure 40 disposed between the first insulation structure 50 and the housing component 30 may be in contact with the inner wall of the housing component 30, or may be disposed on the first insulation structure 50.

In an example, as shown in FIG. 11 to FIG. 17, the first insulation structure 50 may include the lower plastic piece 51 above.

With this configuration, high-temperature and high-pressure gases and flames that are generated by the electrode component 10 pass through the at least one fire extinguishing structure 40 between the first insulation structure 50 and the housing component 30 along their path toward the weld seam 31a, so that the at least one fire extinguishing structure 40 performs cooling and fire extinguishing on the high-temperature and high-pressure gases and flames along the path from the electrode component 10 to the weld seam 31a. This reduces the temperature of the high-temperature and high-pressure gases ejected from the weld seam 31a and extinguishes the flames ejected from the weld seam 31a, so as to mitigate a thermal runaway reaction and thermal propagation of the battery cell 100a. In this way, thermal runaway in the battery 100 is mitigated, improving reliability of the battery 100.

It may be understood that, the at least one fire extinguishing structure 40 is disposed between the first insulation structure 50 and the housing component 30, so that the at least one fire extinguishing structure 40 is disposed in the housing component 30, to form a partial structure of the battery cell 100a. In this case, a third fire extinguishing piece 40c and a fourth fire extinguishing piece 40d that are described below are disposed in the housing component 30, and form partial structures of the battery cell 100a.

In some embodiments, refer to FIG. 11 to FIG. 14 together with other figures. The at least one fire extinguishing structure 40 disposed between the first insulation structure 50 and the housing component 30 is a third fire extinguishing piece 40c along the path from the electrode component 10 to the weld seam 31a. The third fire extinguishing piece 40c is disposed between the first insulation structure 50 and the housing component 30 in a direction perpendicular to a distribution direction of the electrode component 10 and the first insulation structure 50.

The weld seam 31a may be the first weld seam or may be the second weld seam.

The distribution direction of the electrode component 10 and the first insulation structure 50 is a distribution direction of the main part of the electrode component 10 and the main part of the first insulation structure 50, and may be specifically a distribution direction of the main body portion 12 of the electrode component 10 and the first insulation structure 50.

For ease of description, the distribution direction of the electrode component 10 and the first insulation structure 50 is set as the first direction Z. In this case, the main body portion 12 of the electrode component 10 and the first insulation structure 50 are distributed in the first direction Z. In the first direction Z, the first insulation structure 50 is disposed between the inner wall of the housing component 30 and the main body portion 12. The direction perpendicular to the first direction Z may be the second direction X or may be the third direction Y.

In some possible designs, refer to FIG. 11 to FIG. 14 together with other figures. The third fire extinguishing piece 40c is disposed between the first insulation structure 50 and the inner wall of the housing component 30 in the second direction X, so that the third fire extinguishing piece 40c is disposed between the first insulation structure 50 and the housing component 30 along the path from the electrode component 10 to the weld seam 31a.

In some other possible designs, refer to FIG. 11 to FIG. 14 together with other figures. The third fire extinguishing piece 40c is disposed between the first insulation structure 50 and the inner wall of the housing component 30 in the third direction Y, so that the third fire extinguishing piece 40c is disposed between the first insulation structure 50 and the housing component 30 along the path from the electrode component 10 to the weld seam 31a.

A plurality of third fire extinguishing pieces 40c may be connected to each other or may be spaced apart from each other.

As shown in FIG. 11 to FIG. 13, the third fire extinguishing piece 40c may be disposed on the first insulation structure 50, and specifically may be in contact with the first insulation structure 50. As shown in FIG. 14, the third fire extinguishing piece 40c may be in contact with the inner wall of the housing component 30, and specifically may be in contact with the inner wall of the housing 32 of the housing component 30.

With this configuration, the third fire extinguishing piece 40c is disposed between the first insulation structure 50 and the housing component 30 along the path from the electrode component 10 to the weld seam 31a, and then is allowed to effectively perform cooling and fire extinguishing on high-temperature and high-pressure gases and flames along the path from the electrode component 10 to the weld seam 31a. This reduces the temperature of the high-temperature and high-pressure gases ejected from the weld seam 31a and extinguishes the flames ejected from the weld seam 31a, so as to mitigate a thermal runaway reaction and thermal propagation of the battery cell 100a. In this way, thermal runaway in the battery 100 is mitigated, improving reliability of the battery 100.

In some embodiments, refer to FIG. 15 to FIG. 17 together with other figures. The housing component 30 is provided with a pressure relief mechanism 31b.

The pressure relief mechanism 31b is a mechanism that allows the battery cell 100a to relieve the internal pressure when the internal pressure or temperature of the battery cell 100a reaches a threshold. For example, when the battery cell 100a operates normally, the internal gas pressure of the battery cell 100a is lower than a pressure value for opening the pressure relief mechanism 31b, the pressure relief mechanism 31b is in a closed state, and the gas inside the battery cell 100a is not in communication with the external air. When thermal runaway occurs in the battery cell 100a due to internal and external factors such as overcharging and over-discharging, overheating, and mechanical impact, a large amount of high-temperature and high-pressure gases are generated inside the battery cell 100a, causing the pressure inside the battery cell 100a to be higher than the pressure value for opening the pressure relief mechanism 31b. In this case, the pressure relief mechanism 31b changes from the closed state to an open state, and then the high-temperature and high-pressure gases inside the battery cell 100a exit from the battery cell 100a through the pressure relief mechanism 31b.

The pressure relief mechanism 31b may be a structure with structural strength of at least a part lower than that of another part of the housing component 30, or the pressure relief mechanism 31b may be a pressure valve or the like. In this way, when thermal runaway occurs in the battery cell 100a, the high-temperature and high-pressure gases and flames that are generated inside the battery cell 100a break through the pressure relief mechanism 31b to be released outside the battery cell 100a.

The housing 32 of the housing component 30 may be provided with the pressure relief mechanism 31b. The end cover 33 of the housing component 30 may alternatively be provided with the pressure relief mechanism 31b.

In some embodiments, refer to FIG. 15 to FIG. 17 together with other figures. The pressure relief mechanism 31b is spaced apart from the weld seam 31a. The at least one fire extinguishing structure 40 disposed between the first insulation structure 50 and the housing component 30 is a fourth fire extinguishing piece 40d along the path from the electrode component 10 to the weld seam 31a. The fourth fire extinguishing piece 40d is disposed between the housing component 30 and the first insulation structure 50, and is disposed between the pressure relief mechanism 31b and the weld seam 31a.

The weld seam 31a may be the first weld seam or may be the second weld seam.

In an example, the pressure relief mechanism 31b is disposed at the end portion of the housing component 30 in the first direction Z. In the first direction Z, the first insulation structure 50 is disposed between the housing component 30 and the main body portion 12 of the electrode component 10, so that the first insulation structure 50 is also disposed between the pressure relief mechanism 31b and the main body portion 12 in the first direction Z. The pressure relief mechanism 31b is spaced apart from the weld seam 31a in the direction perpendicular to the first direction Z. The fourth fire extinguishing piece 40d is disposed in the first direction Z between the first insulation structure 50 and an inner wall that is of the housing component 30 and that is provided with the pressure relief mechanism 31b, and is disposed between the pressure relief mechanism 31b and the weld seam 31a in the direction perpendicular to the first direction Z.

It should be noted herein that, during thermal runaway in the battery cell 100a, high-temperature and high-pressure gases and flames that are generated by the battery cell 100a pass through the first insulation structure 50 and spread to the pressure relief mechanism 31b, to implement directional pressure relief by using the pressure relief mechanism 31b. The fourth fire extinguishing piece 40d is disposed between the housing component 30 and the first insulation structure 50, and is disposed between the pressure relief mechanism 31b and the weld seam 31a. In this case, in a process in which high-temperature and high-pressure gases and flames that are generated inside the battery cell 100a are released to the pressure relief mechanism 31b through the first insulation structure 50, when the escaping high-temperature and high-pressure gases and flames spread toward the weld seam 31a, the fourth fire extinguishing piece 40d performs cooling and fire extinguishing on the high-temperature and high-pressure gases and flames, thereby helping reduce the temperature of the high-temperature and high-pressure gases released from the weld seam 31a and extinguish the flames released from the weld seam 31a, and mitigating thermal runaway and thermal propagation of the battery cell 100a, to improve reliability of the battery 100.

In some embodiments, refer to FIG. 15 to FIG. 17 together with other figures. The housing component 30 includes the housing 32 and the end cover 33, and the end cover 33 is disposed at the end portion of the housing 32 in the first direction Z to enclose, with the housing 32, the space for accommodating the electrode component 10. The first weld seam is formed between the housing 32 and the end cover 33, and the weld seam 31a includes the first weld seam. The end cover 33 is provided with the pressure relief mechanism 31b. The first insulation structure 50 is disposed between the end cover 33 and the electrode component 10 in the first direction Z. The fourth fire extinguishing piece 40d is disposed between the end cover 33 and the first insulation structure 50 in the first direction Z, and is disposed between the pressure relief mechanism 31b and the housing 32 in the direction perpendicular to the first direction Z.

In the first direction Z, the first insulation structure 50 is disposed between the end cover 33 and the electrode component 10, and the end cover 33 is provided with the pressure relief mechanism 31b, so that the first insulation structure 50 is disposed between the pressure relief mechanism 31b and the electrode component 10 in the first direction Z.

The fourth fire extinguishing piece 40d is disposed between the end cover 33 and the first insulation structure 50 in the first direction Z, and the fourth fire extinguishing piece 40d is also disposed between the pressure relief mechanism 31b and the housing 32 in the direction perpendicular to the first direction Z. The first weld seam is formed between the housing 32 and the end cover 33, so that the fourth fire extinguishing piece 40d is disposed between the first insulation structure 50 and the first weld seam.

In an example, refer to FIG. 15 to FIG. 17 together with other figures. The fourth fire extinguishing piece 40d is disposed between the end cover 33 and the first insulation structure 50 in the first direction Z, and the fourth fire extinguishing piece 40d is also disposed between the pressure relief mechanism 31b and the housing 32 in the second direction X. In this way, the fourth fire extinguishing piece 40d is disposed between the first insulation structure 50 and the first weld seam.

In an example, refer to FIG. 15 to FIG. 17 together with other figures. The fourth fire extinguishing piece 40d is disposed between the end cover 33 and the first insulation structure 50 in the first direction Z, and the fourth fire extinguishing piece 40d is also disposed between the pressure relief mechanism 31b and the housing 32 in the third direction Y. In this way, the fourth fire extinguishing piece 40d is disposed between the first insulation structure 50 and the first weld seam.

According to the foregoing technical solution, when high-temperature and high-pressure gases and flames that are generated by the electrode component 10 and released from the first insulation structure 50 to the pressure relief mechanism 31b are released to the weld seam 31a, the fourth fire extinguishing piece 40d performs cooling and fire extinguishing operations specifically, thereby mitigating thermal runaway and thermal propagation of the battery cell 100a, so as to improve reliability of the battery 100.

In some embodiments, refer to FIG. 15 to FIG. 17 together with other figures. In the first direction Z, a groove is provided on a side that is of the first insulation structure 50 and that faces the housing component 30, and at least a part of the fourth fire extinguishing piece 40d is disposed in the groove.

In some embodiments, the fourth fire extinguishing piece 40d may be in contact with the first insulation structure 50, or may be in contact with the housing 32, or may be in contact with the end cover 33.

In some embodiments, refer to FIG. 18 to FIG. 22 together with other figures. The at least one fire extinguishing structure 40 disposed at the weld seam 31a is disposed outside the housing component 30, and is spaced apart from and opposite to the weld seam 31a.

It may be understood that the at least one sixth fire extinguishing piece 40f is disposed outside the housing component 30 and is disposed opposite to the weld seam 31a. In a direction in which the sixth fire extinguishing piece 40f and the weld seam 31a are opposite to each other, the sixth fire extinguishing piece 40f and the weld seam 31a are spaced apart. In this way, the at least one sixth fire extinguishing piece 40f is disposed at the weld seam 31a.

The weld seam 31a may be the first weld seam or may be the second weld seam.

According to the foregoing technical solution, during thermal runaway in the battery cell 100a, the at least one fire extinguishing structure 40 is allowed to perform cooling and fire extinguishing on high-temperature and high-pressure gases and flames that are ejected from the weld seam 31a. In this way, a thermal runaway reaction and thermal propagation of the battery cell 100a are mitigated, thereby resolving a problem of chain reactions caused by thermal runaway in adjacent battery cells 100a, so as to mitigate thermal runaway in the entire battery 100, improving reliability of the battery 100.

The at least one sixth fire extinguishing piece 40f may be spaced apart from and opposite to a weld seam 31a of one battery cell 100a, or may be spaced apart from and opposite to weld seams 31a of a plurality of battery cells 100a.

In some embodiments, refer to FIG. 18 to FIG. 22 together with other figures. The housing component 30 includes the housing 32 and the end cover 33, the first weld seam is formed between the housing 32 and the end cover 33, and the electrode component 10 is disposed in a space enclosed by the housing 32 and the end cover 33. The end cover 33 is disposed at an end portion of the housing 32 in a first direction Z.

In some possible designs, refer to FIG. 18 to FIG. 20 together with other figures. In the first direction Z, the at least one sixth fire extinguishing piece 40f is disposed outside the housing component 30, and is spaced apart from and opposite to the first weld seam.

The direction in which the at least one sixth fire extinguishing piece 40f is opposite to the first weld seam is the first direction Z. In the first direction Z, a distance between the sixth fire extinguishing piece 40f and the first weld seam is a first distance H1.

In an example, a distance between the fire extinguishing structure 40 and the first weld seam is ≥ 5 mm and ≤ 10 mm.

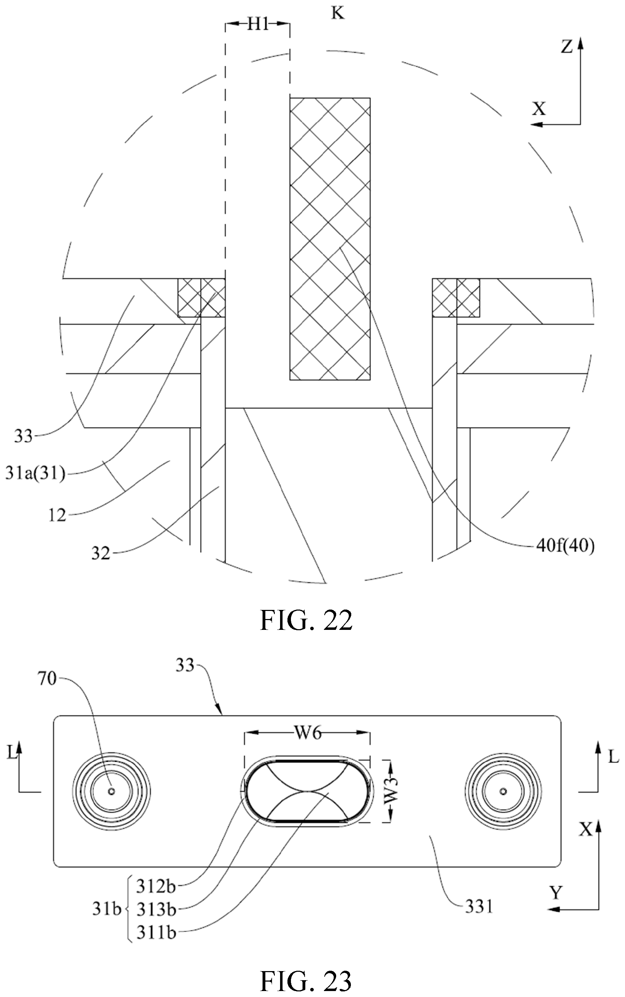

In some possible designs, refer to FIG. 21 and FIG. 22 together with other figures. In the direction perpendicular to the first direction Z, the at least one sixth fire extinguishing piece 40f is disposed outside the housing component 30, and is spaced apart from and opposite to the first weld seam.

The direction in which the at least one sixth fire extinguishing piece 40f is opposite to the first weld seam is the direction perpendicular to the first direction Z. In the direction perpendicular to the first direction Z, a distance between the sixth fire extinguishing piece 40f and the first weld seam is a first distance H1.

The direction perpendicular to the first direction Z may be the second direction X or may be the third direction Y.

In an example, as shown in FIG. 21 and FIG. 22, in the second direction X, the at least one sixth fire extinguishing piece 40f is disposed outside the housing component 30, and is spaced apart from and opposite to the first weld seam.

In some embodiments, refer to FIG. 21 and FIG. 22. The battery 100 includes a plurality of battery cells 100a, at least some of the battery cells 100a are distributed in the second direction X, and the at least one sixth fire extinguishing piece 40f is disposed between two battery cells 100a distributed in the second direction X, and is spaced apart from and opposite to the first weld seam.

In some other embodiments, the battery cell 100a includes a plurality of battery cells 100a, at least some of the battery cells 100a are distributed in the third direction Y, and the at least one sixth fire extinguishing piece 40f is disposed between two battery cells 100a distributed in the third direction Y, and is spaced apart from and opposite to the first weld seam.

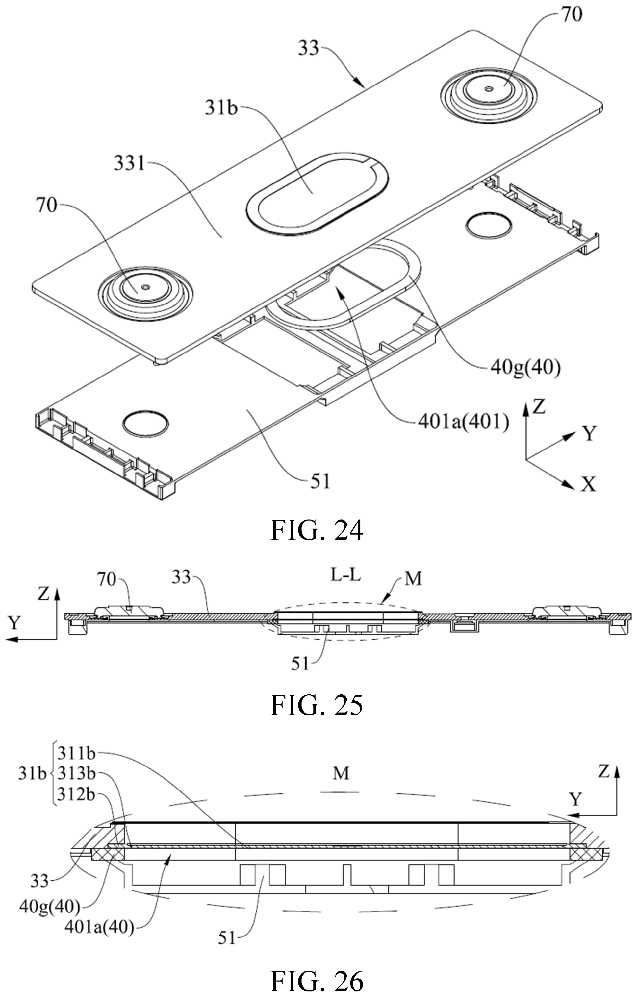

In some embodiments, refer to FIG. 23 to FIG. 29 together with other figures. FIG. 23 is a diagram of a partial structure of the battery cell 100a of the battery 100 according to some embodiments of the present application. FIG. 24 is an exploded view of FIG. 23. FIG. 25 is a cross-sectional view along L-L in FIG. 23. FIG. 26 is an enlarged view at M in FIG. 25. FIG. 27 is a schematic diagram of the fire extinguishing structure 40 of the battery cell 100a provided in FIG. 23. FIG. 28 is a cross-sectional view of the battery cell 100a of the battery 100 according to some embodiments of the present application. FIG. 29 is an enlarged view at N in FIG. 28. The housing component 30 includes a first wall 331 and the pressure relief mechanism 31b, and the first weak structure 31 includes the pressure relief mechanism 31b. The pressure relief mechanism 31b includes a pressure relief portion 311b, the first wall 331 is connected to an outer periphery of the pressure relief portion 311b, and the at least one fire extinguishing structure 40 is disposed at the pressure relief portion 311b.

For explanations of the pressure relief mechanism 31b, refer to the foregoing related parts, and details are not described herein again.

The pressure relief portion 311b is a part of the pressure relief mechanism 31b for pressure relief. Specifically, during thermal runaway in the battery cell 100a, high-temperature and high-pressure gases and flames inside the battery cell 100a break through the pressure relief portion 311b, thereby implementing pressure relief.

The first weak structure 31 includes the pressure relief mechanism 31b, which means that at least a part of the first weak structure 31 is the pressure relief mechanism 31b.

The first wall 331 is a physical wall with the pressure relief mechanism 31b of the housing component 30. As shown in FIG. 23 to FIG. 27, the first wall 331 may be disposed on the end cover 33 of the housing component 30. As shown in FIG. 28 and FIG. 29, the first wall 331 may alternatively be disposed on the housing 32 of the housing component 30.

The first wall 331 is connected to an outer periphery of the pressure relief portion 311b. Specifically, the first wall 331 surrounds the outer periphery of the pressure relief portion 311b and is connected to the pressure relief portion 311b. The first wall 331 may be directly connected to the pressure relief portion 311b. Alternatively, as shown in FIG. 23 to FIG. 27, the pressure relief mechanism 31b further includes a first connection portion 312b, the first connection portion 312b surrounds the outer periphery of the pressure relief portion 311b and is connected to the pressure relief portion 311b, and the first wall 331 is connected to the first connection portion 312b.

That the at least one fire extinguishing structure 40 is disposed at the pressure relief portion 311b means that the at least one fire extinguishing structure 40 is disposed at a position where cooling and fire extinguishing operations are allowed to be performed on the pressure relief portion 311b. The at least one fire extinguishing structure 40 disposed at the pressure relief portion 311b may be in contact with the pressure relief portion 311b; or may be disposed near the pressure relief portion 311b and spaced apart from the pressure relief portion 311b. In other words, the fire extinguishing structure 40 is configured to perform cooling and fire extinguishing on the pressure relief portion 311b, which may be understood as that the fire extinguishing structure 40 is disposed at the pressure relief portion 311b.

The at least one fire extinguishing structure 40 that is disposed near the pressure relief portion 311b and that is spaced apart from the pressure relief portion 311b may be disposed at another position of the housing component 30 other than the pressure relief portion 311b, for example, may be disposed on the first wall 331 of the housing component 30, or may be disposed on the housing 32 of the housing component 30.

The at least one fire extinguishing structure 40 that is disposed near the pressure relief portion 311b and that is spaced apart from the pressure relief portion 311b may alternatively be disposed on the first connection portion 312b of the pressure relief mechanism 31b, or may be disposed on the lower plastic piece 51 of the first insulation structure 50, or may be disposed on the bottom support plate 52 of the first insulation structure 50.

The at least one fire extinguishing structure 40 disposed at the pressure relief portion 311b may be disposed outside the housing component 30. The fire extinguishing structure 40 may be connected to or spaced apart from the first fire extinguishing piece 40a, or may be connected to or spaced apart from the second fire extinguishing piece 40b.

The at least one fire extinguishing structure 40 disposed at the pressure relief portion 311b may be disposed in the housing component 30. The fire extinguishing structure 40 may be connected to or spaced apart from the third fire extinguishing piece 40c, or may be connected to or spaced apart from the fourth fire extinguishing piece 40d.

Based on this, the at least one fire extinguishing structure 40 is disposed at the pressure relief portion 311b, allowing the fire extinguishing structure 40 to perform cooling and fire extinguishing on the pressure relief portion 311b. In this way, the temperature of high-temperature and high-pressure gases ejected from the pressure relief portion 311b is reduced, and flames ejected from the pressure relief portion 311b are extinguished. To be specific, the at least one fire extinguishing structure 40 is disposed at the pressure relief portion 311b, to perform cooling and fire extinguishing on the high-temperature and high-pressure gases and flames that are ejected from the pressure relief portion 311b, so that a thermal runaway reaction and thermal propagation of the battery cell 100a are mitigated, improving reliability of the battery 100.

In some embodiments, the pressure relief portion 311b is separately disposed on the first wall 331. For example, the pressure relief portion 311b may be a pressure valve disposed on the first wall 331.

In some embodiments, the first wall 331 and the pressure relief portion 311b are directly connected and integrally disposed. A first frangible score line is provided between the first wall 331 and the pressure relief portion 311b.

The first frangible score line may be a frangible mark such as a notch or a dashed line.

Based on this, when thermal runaway occurs in the battery cell 100a, high-temperature and high-pressure gases and flames that are generated inside the battery cell 100a break through the pressure relief portion 311b, so that the first frangible score line between the pressure relief portion 311b and the first wall 331 breaks, thereby implementing pressure relief of the pressure relief portion 311b.

In some embodiments, the pressure relief mechanism 31b further includes a first connection portion 312b, the first connection portion 312b surrounds the outer periphery of the pressure relief portion 311b and is connected to the pressure relief portion 311b, and the first wall 331 is connected to the first connection portion 312b.

In some possible designs, the pressure relief portion 311b and the first connection portion 312b are separately disposed.

Alternatively, in some other possible designs, as shown in FIG. 23 to FIG. 29, the pressure relief portion 311b and the first connection portion 312b are integrally disposed, and a second frangible score line 313b is provided between the pressure relief portion 311b and the first connection portion 312b.

The second frangible score line 313b may be a frangible mark such as a notch or a dashed line.

Based on this, when thermal runaway occurs in the battery cell 100a, high-temperature and high-pressure gases and flames that are generated inside the battery cell 100a break through the pressure relief portion 311b, so that the second frangible score line 313b between the pressure relief portion 311b and the first connection portion 312b breaks, thereby implementing pressure relief of the pressure relief portion 311b.

The first wall 331 and the first connection portion 312b are separately disposed. Alternatively, the first wall 331 and the first connection portion 312b are integrally disposed.

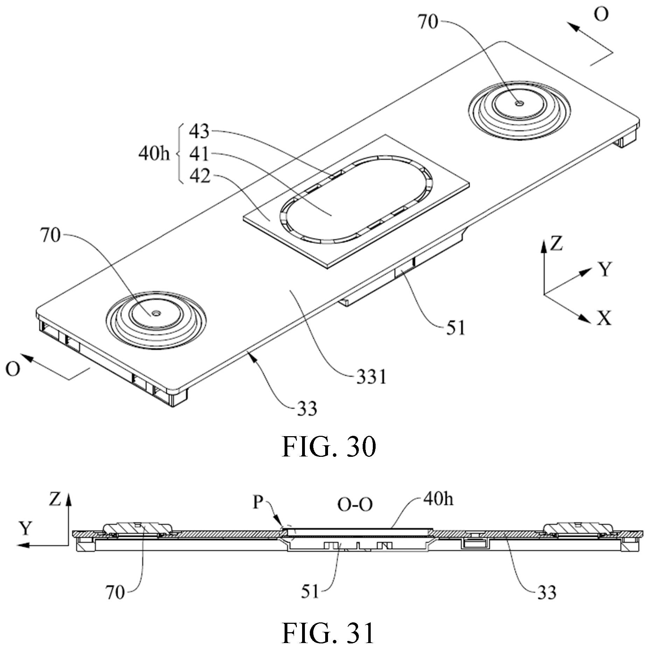

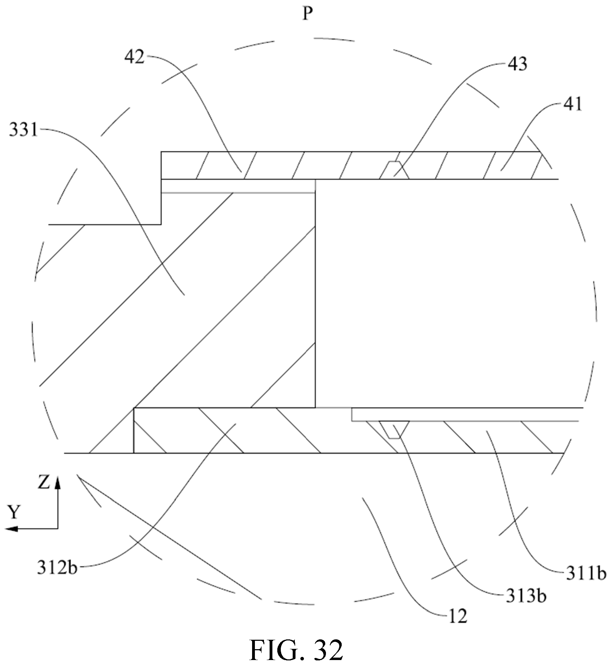

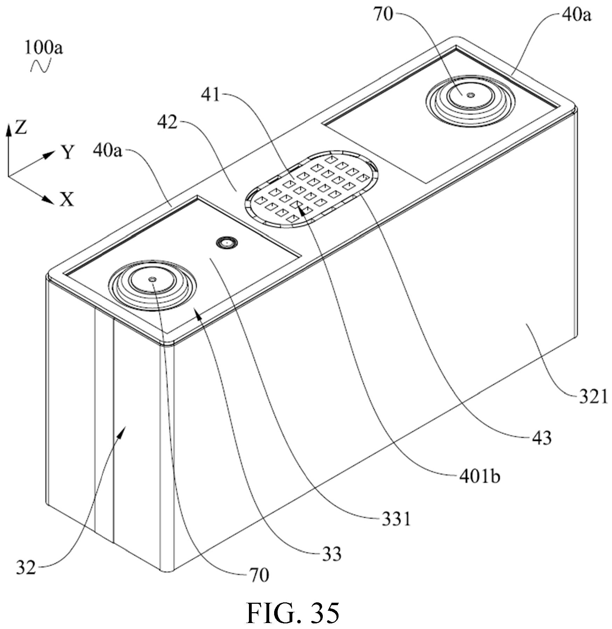

In some embodiments, refer to FIG. 23 to FIG. 35 together with other figures. FIG. 30 is a diagram of a partial structure of the battery cell 100a of the battery 100 according to some embodiments of the present application. FIG. 31 is a cross-sectional view along O-O in FIG. 30. FIG. 32 is an enlarged view at P in FIG. 31. FIG. 33 is a schematic diagram of the fire extinguishing structure 40 of the battery cell 100a provided in FIG. 30. FIG. 34 is a diagram of a partial structure of the battery cell 100a of the battery 100 according to some embodiments of the present application. FIG. 35 is a diagram of a structure of the battery cell 100a of the battery 100 according to some embodiments of the present application. The at least one fire extinguishing structure 40 disposed at the pressure relief portion 311b is provided with a through hole 401, and the pressure relief portion 311b is opposite to the through hole 401 and is exposed to the through hole 401.

Specifically, in a distribution direction of the first wall 331 and the electrode component 10, the at least one fire extinguishing structure 40 is provided with the through hole 401, and the pressure relief portion 311b is opposite to the through hole 401 and is exposed to the through hole 401. In this way, the fire extinguishing structure 40 with the through hole 401 is disposed at the pressure relief portion 311b. In an example, the distribution direction of the first wall 331 and the electrode component 10 is the first direction Z.

According to the foregoing technical solution, during thermal runaway in the battery cell 100a, high-temperature and high-pressure gases and flames that are generated in the battery cell 100a break through the pressure relief portion 311b of the pressure relief mechanism 31b, to exit from the battery cell 100a through the pressure relief portion 311b, and then the at least one fire extinguishing structure 40 disposed at the pressure relief portion 311b performs cooling and fire extinguishing on the high-temperature and high-pressure gases and flames. In addition, the high-temperature and high-pressure gases and flames further pass through the through hole 401 when breaking through the pressure relief portion 311b, so that a problem that the fire extinguishing structure 40 obstructs the high-temperature and high-pressure gases and flames is resolved, facilitating release of the high-temperature and high-pressure gases and flames. Therefore, a problem of a thermal runaway reaction and thermal propagation of the battery cell 100a is resolved, thereby mitigating thermal runaway in the battery 100, so as to improve reliability of the battery 100.

The fire extinguishing structure 40 with the through hole 401 may be disposed on an outer side of the pressure relief portion 311b. The fire extinguishing structure 40 may be disposed on the first wall 331, or may be disposed on the first connection portion 312b, or may be disposed outside the housing component 30.

The fire extinguishing structure 40 with the through hole 401 may alternatively be disposed on an inner side of the pressure relief portion 311b. The fire extinguishing structure 40 may be disposed on the first wall 331, or may be disposed on the first connection portion 312b, or may be disposed on the pressure relief portion 311b, or may be disposed on the bottom support plate 52, or may be disposed on the lower plastic piece 51.

In some embodiments, refer to FIG. 23 to FIG. 29 together with other figures. The at least one fire extinguishing structure 40 provided with the through hole 401 is a seventh fire extinguishing piece 40g. The seventh fire extinguishing piece 40g is provided with a first through hole 401a, for the seventh fire extinguishing piece 40g to be of a roughly annular structure. The through hole 401 includes the first through hole 401a, the seventh fire extinguishing piece 40g is disposed on an inner side of the pressure relief portion 311b, and the first through hole 401a is opposite to the pressure relief portion 311b.

In some possible designs, as shown in FIG. 23 to FIG. 27, the seventh fire extinguishing piece 40g is disposed on the first connection portion 312b. In some possible designs, as shown in FIG. 23 to FIG. 27, the seventh fire extinguishing piece 40g is disposed on the first wall 331.

In some possible designs, the seventh fire extinguishing piece 40g is disposed on the lower plastic piece 51 of the first insulation structure 50.

In some possible designs, as shown in FIG. 28 and FIG. 29, the seventh fire extinguishing piece 40g is disposed on the bottom support plate 52.

In some embodiments, refer to FIG. 23 to FIG. 29 together with other figures. In a direction perpendicular to the distribution direction of the first wall 331 and the electrode component 10, a ratio of a size of the first through hole 401a to a size of the pressure relief portion 311b is ≥ 0.8 and ≤ 1.2.

For ease of description, the distribution direction of the first wall 331 and the electrode component 10 is set as the first direction Z, and the direction perpendicular to the first direction Z may include the second direction X or may include the third direction Y.

In an example, refer to FIG. 23 and FIG. 27 together with other figures. In the second direction X, a size of the seventh fire extinguishing piece 40g is a first size W1, a size of the first through hole 401a is a second size W2, and a size of the pressure relief portion 311b is a third size W3. The first size W1 is greater than the third size W3, and 0.8 ≤ second size W2/third size W3 ≤ 1.2, specifically 0.8, 0.85, 0.9, 0.95, 1, 1.05, 1.1, 1.15, or the like.

In an example, refer to FIG. 23 to FIG. 27 together with other figures. In the third direction Y, a size of the seventh fire extinguishing piece 40g is a fourth size W4, a size of the first through hole 401a is a fifth size W5, and a size of the pressure relief portion 311b is a sixth size W6. The fourth size W4 is greater than the sixth size W6, and 0.8 ≤ fifth size W5/sixth size W6 ≤ 1.2, specifically 0.8, 0.85, 0.9, 0.95, 1, 1.05, 1.1, 1.15, or the like.

The size of the seventh fire extinguishing piece 40g is greater than the size of the first through hole 401a, so that the seventh fire extinguishing piece 40g is disposed on at least one of the first connection portion 312b, the first wall 331, and the first insulation structure 50. In this way, when the pressure relief portion 311b is broken through, the seventh fire extinguishing piece 40g is kept at its position, and then continuously performs cooling and fire extinguishing on high-temperature and high-pressure gases and flames, thereby helping mitigate a thermal runaway reaction and thermal propagation of the battery cell 100a, to improve reliability of the battery 100.

The ratio of the size of the first through hole 401a to the size of the pressure relief portion 311b is ≥ 0.8 and ≤ 1.2, so that the size of the first through hole 401a is within an appropriate range. This allows the first through hole 401a to effectively pass high-temperature and high-pressure gases and flames without affecting gas discharge of the pressure relief portion 311b. This also allows the seventh fire extinguishing piece 40g to be effectively in contact with high-temperature and high-pressure gases and flames, to sufficiently perform cooling and fire extinguishing.

The seventh fire extinguishing piece 40g may form a part of the battery cell 100a.

In some embodiments, refer to FIG. 30 to FIG. 35 together with other figures. The at least one fire extinguishing structure 40 disposed at the pressure relief portion 311b includes a first fire extinguishing portion 41 and a second fire extinguishing portion 42. The second fire extinguishing portion 42 is connected to an outer periphery of the first fire extinguishing portion 41. The first fire extinguishing portion 41 is configured to move relative to the second fire extinguishing portion 42 for pressure relief. The first fire extinguishing portion 41 and the pressure relief portion 311b are disposed opposite to each other in a distribution direction of the first wall 331 and the electrode component 10.

For ease of description, the fire extinguishing structure 40 including the first fire extinguishing portion 41 and the second fire extinguishing portion 42 is defined as an eighth fire extinguishing piece 40h.

The first fire extinguishing portion 41 and the second fire extinguishing portion 42 are two parts of the eighth fire extinguishing piece 40h, and both have functions of cooling and fire extinguishing.

The second fire extinguishing portion 42 surrounds an outer periphery of the first fire extinguishing portion 41 and is connected to the first fire extinguishing portion 41.

The first fire extinguishing portion 41 may be disposed on an outer side of the pressure relief portion 311b. In this case, the second fire extinguishing portion 42 is located outside the first wall 331, and may be connected to the first wall 331, or may be connected to the first connection portion 312b, or may be connected to another position.

The first fire extinguishing portion 41 may alternatively be disposed on an inner side of the pressure relief portion 311b. In this case, the second fire extinguishing portion 42 is located in the housing component 30, and may be connected to the first wall 331, or may be connected to the first connection portion 312b, or may be connected to the lower plastic piece 51 of the first insulation structure 50, or may be connected to the bottom support plate 52 of the first insulation structure 50.

In an example, as shown in FIG. 30 to FIG. 35, the eighth fire extinguishing piece 40h is disposed on the outer side of the pressure relief portion 311b, and the second fire extinguishing portion 42 is connected to the first wall 331.

In an example, as shown in FIG. 34 and FIG. 35, the second fire extinguishing portion 42 of the eighth fire extinguishing piece 40h is connected to the first fire extinguishing piece 40a.

During thermal runaway in the battery cell 100a, high-temperature and high-pressure gases and flames that are generated inside the battery cell 100a break through the pressure relief portion 311b and the first fire extinguishing portion 41, thereby implementing pressure relief. In addition, the second fire extinguishing portion 42 and the first fire extinguishing portion 41 are allowed to perform cooling and fire extinguishing on the high-temperature and high-pressure gases and flames, and help discharge gases, so that a thermal runaway reaction and thermal propagation of the battery cell 100a are mitigated, to resolve a problem of thermal runaway in the battery 100, improving reliability of the battery 100.

The eighth fire extinguishing piece 40h may form a part of the battery cell 100a.

In some embodiments, as shown in FIG. 35, the first fire extinguishing portion 41 of the eighth fire extinguishing piece 40h is provided with the through hole 401, which is a second through hole 401b.

In some embodiments, refer to FIG. 33 together with FIG. 23 and other figures. In the direction perpendicular to the distribution direction of the first wall 331 and the electrode component 10, a size of the second fire extinguishing portion 42 is greater than a size of the pressure relief portion 311b, and a ratio of the size of the pressure relief portion 311b to a size of the first fire extinguishing portion 41 is ≥ 0.8 and ≤ 1.2.

For ease of description, the distribution direction of the first wall 331 and the electrode component 10 is set as the first direction Z, and the direction perpendicular to the first direction Z may include the second direction X or may include the third direction Y.

In an example, refer to FIG. 23 and FIG. 33 together with other figures. In the second direction X, the size of the first fire extinguishing portion 41 is a seventh size W7, and the size of the second fire extinguishing portion 42 is an eighth size W8. The eighth size W8 is greater than the third size W3, and 0.8 ≤ third size W3/seventh size W7 ≤ 1.2. The third size W3/seventh size W7 may be specifically 0.8, 0.85, 0.9, 0.95, 1, 1.05, 1.1, 1.15, or the like.

In an example, refer to FIG. 23 to FIG. 33 together with other figures. In the third direction Y, the size of the first fire extinguishing portion 41 is a ninth size W9, and the size of the second fire extinguishing portion 42 is a tenth size W10. The tenth size W10 is greater than the sixth size W6, and 0.8 ≤ sixth size W6/ninth size W9 ≤ 1.2. The sixth size W6/ninth size W9 may be specifically 0.8, 0.85, 0.9, 0.95, 1, 1.05, 1.1, 1.15, or the like.

The size of the second fire extinguishing portion 42 is set to be greater than the size of the pressure relief portion 311b, so that the second fire extinguishing portion 42 is connected to at least one of the first connection portion 312b, the first wall 331, and the first insulation structure 50. In this way, when the pressure relief portion 311b and the first fire extinguishing portion 41 are broken through, the second fire extinguishing portion 42 is kept at its position, and then continuously performs cooling and fire extinguishing on high-temperature and high-pressure gases and flames, thereby helping mitigate a thermal runaway reaction in the battery cell 100a.

The ratio of the size of the pressure relief portion 311b to the size of the first fire extinguishing portion 41 is set to be ≥ 0.8 and ≤ 1.2, so that the size of the first fire extinguishing portion 41 is within an appropriate range. This allows the first fire extinguishing portion 41 to effectively perform cooling and fire extinguishing on high-temperature and high-pressure gases and flames that break through the pressure relief portion 311b. In addition, the first fire extinguishing portion 41 does not excessively prevent release of the high-temperature and high-pressure gases and flames. In this way, a thermal runaway reaction in the battery cell 100a is effectively mitigated.

In some embodiments, refer to FIG. 30 to FIG. 35 together with other figures. In the distribution direction of the first wall 331 and the electrode component 10, the first fire extinguishing portion 41 is disposed on a side that is of the pressure relief portion 311b and that is away from the electrode component 10.

The first fire extinguishing portion 41 is disposed on the side that is of the pressure relief portion 311b and that is away from the electrode component 10, so that the first fire extinguishing portion 41 is disposed on an outer side of the pressure relief portion 311b. In this way, a problem that the fire extinguishing structure 40 on an inner side of the pressure relief portion 311b prevents high-temperature and high-pressure gases and flames from pressure relief through the pressure relief portion 311b is resolved, helping improve pressure relief in the battery cell 100a and mitigate a thermal runaway reaction in the battery cell 100a.

In some embodiments, refer to FIG. 30 to FIG. 35 together with other figures. A frangible score line is provided between the first fire extinguishing portion 41 and the second fire extinguishing portion 42, and the frangible score line is a third frangible score line 43.

The third frangible score line 43 may be a frangible mark such as a notch or a dashed line.

Based on this, when thermal runaway occurs in the battery cell 100a, high-temperature and high-pressure gases and flames that are generated inside the battery cell 100a also break through the first fire extinguishing portion 41 while breaking through the pressure relief portion 311b, so that the third frangible score line 43 between the first fire extinguishing portion 41 and the second fire extinguishing portion 42 breaks, resolving a problem that the first fire extinguishing portion 41 prevents release of the high-temperature and high-pressure gases and flames, and helping mitigate a thermal runaway reaction in the battery cell 100a.

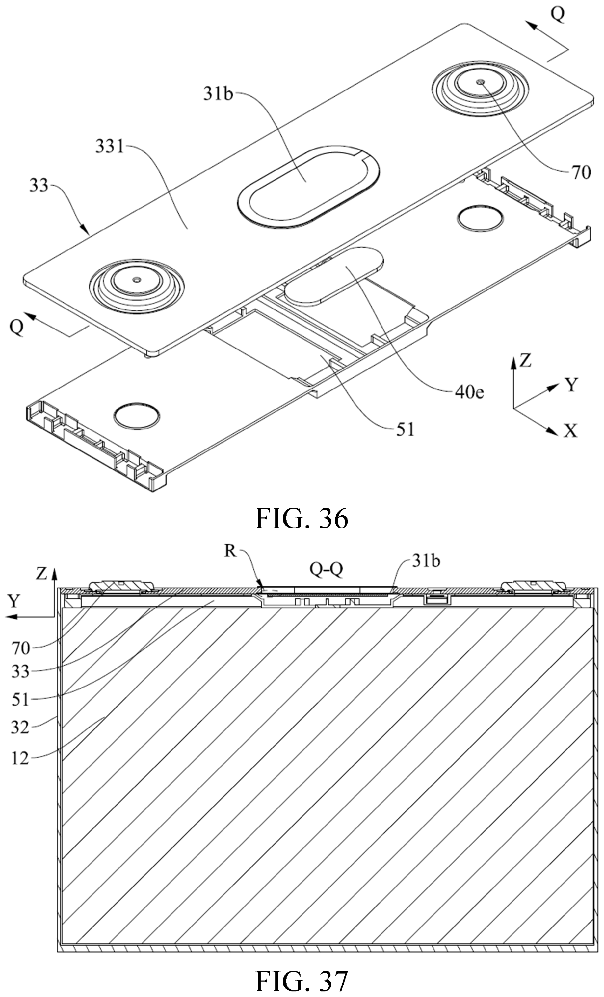

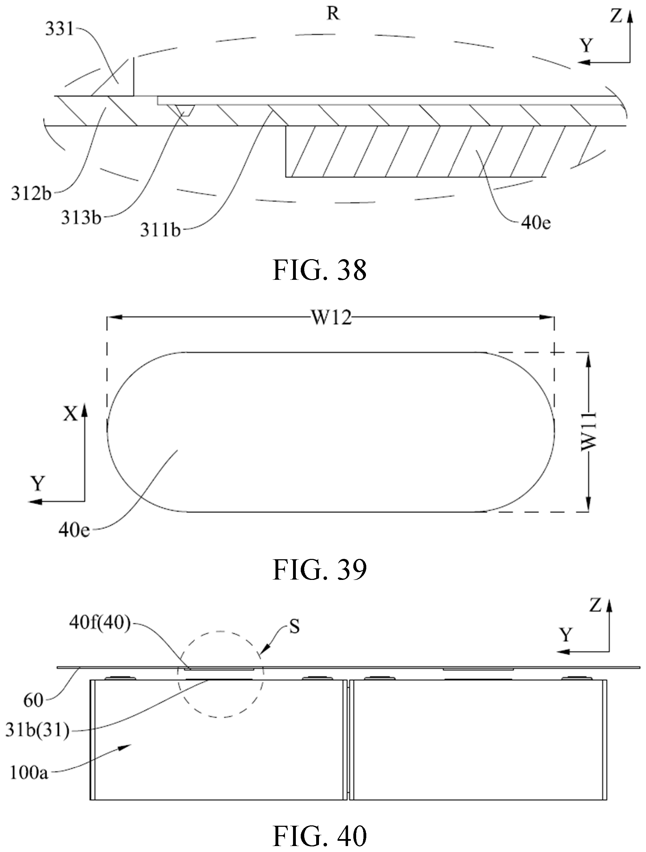

In some embodiments, refer to FIG. 36 to FIG. 39 together with other figures. FIG. 36 is a partially exploded view of the battery cell 100a of the battery 100 according to some embodiments of the present application. FIG. 37 is a cross-sectional view of the battery cell 100a provided in FIG. 36 along Q-Q in FIG. 36. FIG. 38 is an enlarged view at R in FIG. 37. FIG. 39 is a schematic diagram of the fire extinguishing structure 40 of the battery cell 100a provided in FIG. 36. The at least one fire extinguishing structure 40 disposed at the pressure relief portion 311b is a fifth fire extinguishing piece 40e. In the distribution direction of the first wall 331 and the electrode component 10, the fifth fire extinguishing piece 40e is disposed on a side that is of the pressure relief portion 311b and that faces the electrode component 10, and is disposed opposite to the pressure relief portion 311b.

The arrangement of the fifth fire extinguishing piece 40e allows the fifth fire extinguishing piece 40e to perform, when high-temperature and high-pressure gases and flames inside the battery cell 100a are released to the pressure relief portion 311b, cooling and fire extinguishing on the high-temperature and high-pressure gases and flames, thereby mitigating thermal runaway and thermal propagation of the battery cell 100a.

In some embodiments, the fifth fire extinguishing piece 40e is provided with the through hole 401, which is a third through hole 401c.

The fifth fire extinguishing piece 40e may be disposed on the pressure relief portion 311b, or may be disposed on the first insulation structure 50.

In some embodiments, the fifth fire extinguishing piece 40e may also include the first fire extinguishing portion 41 and the second fire extinguishing portion 42, that is, the fifth fire extinguishing piece 40e may be the eighth fire extinguishing piece 40h.

In some embodiments, refer to FIG. 36 to FIG. 39 together with other figures. The fifth fire extinguishing piece 40e is connected to the pressure relief portion 311b.

According to the foregoing technical solution, during thermal runaway in the battery cell 100a, when high-temperature and high-pressure gases and flames that are generated inside the battery cell 100a break through the pressure relief portion 311b, the fifth fire extinguishing piece 40e moves with the pressure relief portion 311b, thereby facilitating release of the high-temperature and high-pressure gases and flames. In addition, as the fifth fire extinguishing piece 40e moves with the pressure relief portion 311b, the fifth fire extinguishing piece 40e continuously performs cooling and fire extinguishing operations, so that a problem of a thermal runaway reaction and thermal propagation of the battery cell 100a is efficiently resolved, so as to resolve a problem of thermal runaway in the battery 100, improving reliability of the battery 100.

In some embodiments, refer to FIG. 36 to FIG. 39 together with other figures. A projection of the fifth fire extinguishing piece 40e is located within a projection of the pressure relief portion 311b in the distribution direction of the first wall 331 and the electrode component 10.

The projection of the fifth fire extinguishing piece 40e in the distribution direction of the first wall 331 and the electrode component 10 is the projection of the fifth fire extinguishing piece 40e on a projection plane perpendicular to the distribution direction of the first wall 331 and the electrode component 10. The projection of the pressure relief portion 311b in the distribution direction of the first wall 331 and the electrode component 10 is the projection of the pressure relief portion 311b on the projection plane perpendicular to the distribution direction of the first wall 331 and the electrode component 10.

For ease of description, the distribution direction of the first wall 331 and the electrode component 10 is set as the first direction Z. The direction perpendicular to the first direction Z may include the second direction X or may include the third direction Y.

That the projection of the fifth fire extinguishing piece 40e is located within the projection of the pressure relief portion 311b in the distribution direction of the first wall 331 and the electrode component 10 means that an outer contour of the projection of the pressure relief portion 311b surrounds an outer periphery of the projection of the fifth fire extinguishing piece 40e. Specifically, in the direction perpendicular to the first direction Z, a size of the pressure relief portion 311b is greater than a size of the fifth fire extinguishing piece 40e.

In an example, refer to FIG. 39 and FIG. 23 together with other figures. In the second direction X, the size of the fifth fire extinguishing piece 40e is an eleventh size W11, and the eleventh size W11 is less than the third size W3 of the pressure relief portion 311b.

In an example, refer to FIG. 39 and FIG. 23 together with other figures. In the third direction Y, the size of the fifth fire extinguishing piece 40e is a twelfth size W12, and the twelfth size W12 is less than the sixth size W6 of the pressure relief portion 311b.

According to the foregoing technical solution, the fifth fire extinguishing piece 40e has as little impact as possible on movement of the pressure relief portion 311b relative to the first wall 331, so that high-temperature and high-pressure gases and flames smoothly break through the pressure relief portion 311b without being affected by the fifth fire extinguishing piece 40e. In addition, the fifth fire extinguishing piece 40e continuously performs cooling and fire extinguishing, helping resolve a problem of a thermal runaway reaction and thermal propagation of the battery cell 100a.

It should be noted herein that the fifth fire extinguishing piece 40e is spaced apart from the third fire extinguishing piece 40c, the fourth fire extinguishing piece 40d, the seventh fire extinguishing piece 40g, and the eighth fire extinguishing piece 40h, for the fifth fire extinguishing piece 40e to move with the pressure relief portion 311b.

In some embodiments, the housing component 30 further includes a second wall 321 connected to the first wall 331, the at least one fire extinguishing structure 40 disposed at the pressure relief portion 311b is in contact with the second wall 321, and the second wall 321 is a wall having the largest area among all walls of the housing component 30.

The second wall 321 is a physical wall of the housing component 30. The housing 32 of the housing component 30 may be provided with the second wall 321, and the end cover 33 of the housing component 30 may also be provided with the second wall 321.

It may be understood that the at least one fire extinguishing structure 40 disposed at the pressure relief portion 311b is in contact with a position that is of the second wall 321 and that is close to the pressure relief portion 311b. In an example, the pressure relief portion 311b is disposed at an end of the housing component 30 in the first direction Z, and the at least one fire extinguishing structure 40 disposed at the pressure relief portion 311b is in contact with an end portion that is of the second wall 321 and that is close to the pressure relief portion 311b in the first direction Z.

The at least one fire extinguishing structure 40 disposed at the pressure relief portion 311b is in contact with the wall having the largest area among all the walls of the housing component 30, so that the fire extinguishing structure 40 is as close as possible to the pressure relief portion 311b, and then performs cooling and fire extinguishing effectively on high-temperature and high-pressure gases and flames at the pressure relief portion 311b.

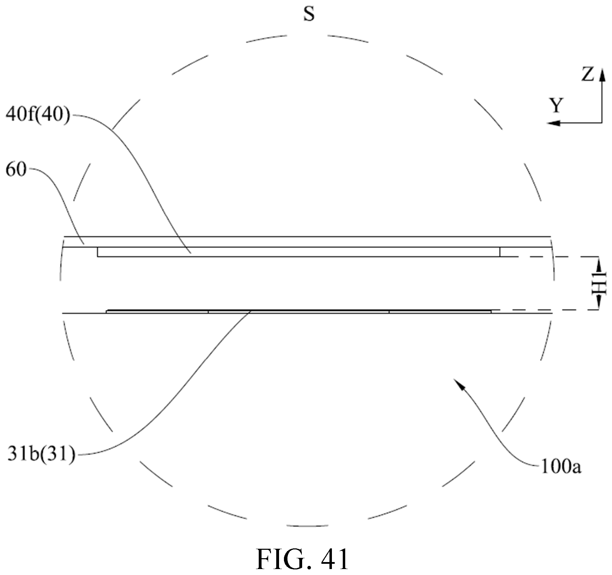

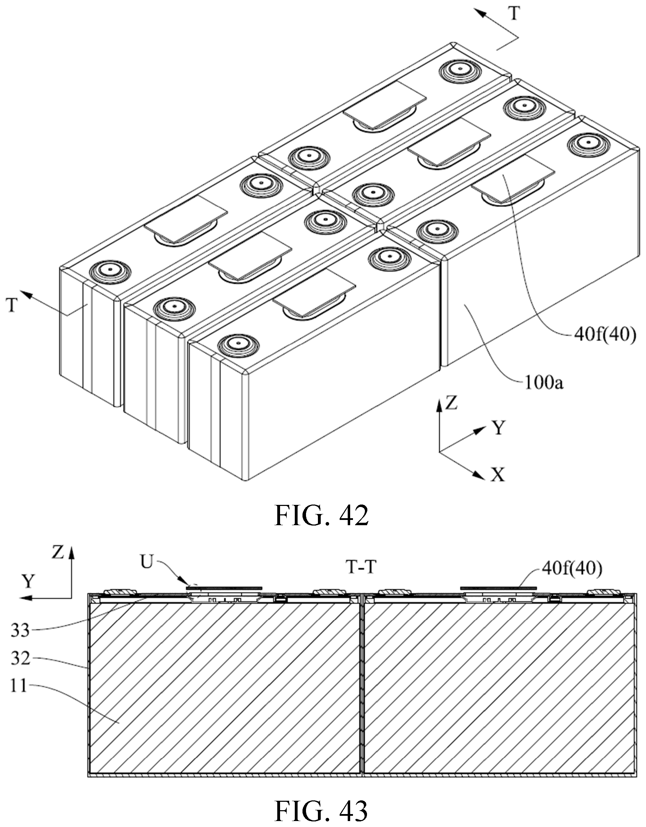

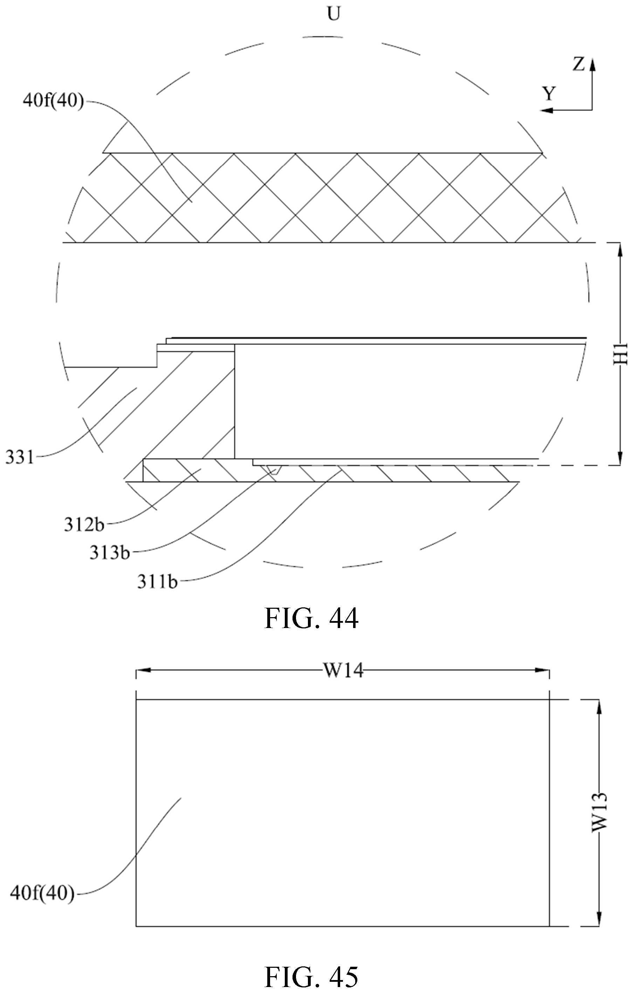

In some embodiments, refer to FIG. 40 to FIG. 46 together with other figures. FIG. 40 is a schematic diagram of the battery 100 according to some embodiments of the present application. FIG. 41 is an enlarged view at S in FIG. 40. FIG. 42 is a diagram of a partial structure of the battery 100 provided in FIG. 40. FIG. 43 is a cross-sectional view along T-T in FIG. 42. FIG. 44 is an enlarged view at U in FIG. 43. FIG. 45 is a schematic diagram of the fire extinguishing structure 40 of the battery 100 provided in FIG. 40. FIG. 46 is a diagram of a three-dimensional structure of the fire extinguishing structure 40 and the thermal insulation structure 60 of the battery 100 provided in FIG. 40. In the distribution direction of the first wall 331 and the electrode component 10, the at least one fire extinguishing structure 40 disposed at the pressure relief portion 311b is disposed outside the housing component 30, and is spaced apart from and opposite to the pressure relief portion 311b.

It may be understood that, the at least one sixth fire extinguishing piece 40f is disposed outside the housing component 30, and is spaced apart from and opposite to the pressure relief portion 311b, allowing the sixth fire extinguishing piece 40f to be disposed at the pressure relief portion 311b.

The at least one sixth fire extinguishing piece 40f may be spaced apart from and opposite to one pressure relief portion 311b, or may be spaced apart from and opposite to a plurality of pressure relief portions 311b.

According to the foregoing technical solution, during thermal runaway in the battery cell 100a, the at least one fire extinguishing structure 40 is allowed to perform cooling and fire extinguishing on high-temperature and high-pressure gases and flames that are ejected from the pressure relief portion 311b. In this way, a thermal runaway reaction and thermal propagation of the battery cell 100a are mitigated, thereby resolving a problem of chain reactions caused by thermal runaway in adjacent battery cells 100a, so as to mitigate thermal runaway in the entire battery 100, improving reliability of the battery 100.

The direction in which the at least one sixth fire extinguishing piece 40f is opposite to the pressure relief portion 311b is the distribution direction of the first wall 331 and the electrode component 10. The distribution direction of the first wall 331 and the electrode component 10 is the first direction Z.

In the distribution direction of the first wall 331 and the electrode component 10, the at least one sixth fire extinguishing piece 40f is disposed outside the housing component 30, and is spaced apart from and opposite to the pressure relief portion 311b. A distance between the sixth fire extinguishing piece 40f and the pressure relief portion 311b is the first distance H1.

In an example, in the distribution direction of the first wall 331 and the electrode component 10, the first distance H1 between the pressure relief portion 311b and the at least one sixth fire extinguishing piece 40f disposed outside the housing component 30 is ≥ 5 mm and ≤ 15 mm.

In some embodiments, refer to FIG. 18 to FIG. 20 and FIG. 40 to FIG. 46 together with other figures. The at least one fire extinguishing structure 40 that is disposed outside the housing component 30 and that is spaced apart from and opposite to the first weak structure 31 is a sixth fire extinguishing piece 40f. A projection of the first weak structure 31 is located within a projection of the sixth fire extinguishing structure 40 on a projection plane perpendicular to a direction in which the sixth fire extinguishing piece 40f and the first weak structure 31 are opposite to each other.

That the projection of the first weak structure 31 is located within the projection of the sixth fire extinguishing piece 40f on the projection plane perpendicular to the direction in which the sixth fire extinguishing piece 40f and the first weak structure 31 are opposite to each other means that an outer contour of the projection of the sixth fire extinguishing piece 40f surrounds an outer periphery of the projection of the first weak structure 31 on the projection plane perpendicular to the direction in which the sixth fire extinguishing piece 40f and the first weak structure 31 are opposite to each other.

In an example, as shown in FIG. 18 to FIG. 20, the housing component 30 includes the housing 32 and the end cover 33, the end cover 33 is disposed at the end portion of the housing 32 in the first direction Z, the first weld seam is formed between the housing 32 and the end cover 33, and the first weak structure 31 includes the first weld seam. In the first direction Z, the at least one sixth fire extinguishing piece 40f is located outside the housing component 30, and is spaced apart from and opposite to the first weld seam. A projection of the first weld seam is located within the projection of the sixth fire extinguishing piece 40f on a projection plane perpendicular to the first direction Z. Specifically, in the second direction X, a size of the sixth fire extinguishing piece 40f is a thirteenth size W13, and the thirteenth size W13 is greater than a size of the first weld seam. In the third direction Y, a size of the sixth fire extinguishing piece 40f is a fourteenth size W14, and the fourteenth size W14 is greater than a size of the first weld seam.

In an example, refer to FIG. 40 to FIG. 46 together with FIG. 23 and other figures. The first weak structure 31 includes the pressure relief mechanism 31b, the pressure relief mechanism 31b includes the pressure relief portion 311b, the pressure relief portion 311b is connected to the first wall 331 of the housing component 30, and the first wall 331 and the electrode component 10 are distributed in the first direction Z. In the first direction Z, the at least one sixth fire extinguishing piece 40f is located outside the housing component 30, and is spaced apart from and opposite to the pressure relief portion 311b. A projection of the pressure relief portion 311b is located within the projection of the sixth fire extinguishing piece 40f on a projection plane perpendicular to the first direction Z. Specifically, in the second direction X, the size of the sixth fire extinguishing piece 40f is a thirteenth size W13, and the thirteenth size W13 is greater than the third size W3 of the pressure relief portion 311b. In the third direction Y, the size of the sixth fire extinguishing piece 40f is a fourteenth size W14, and the fourteenth size W14 is greater than the sixth size W6 of the pressure relief portion 311b.

This configuration allows the sixth fire extinguishing piece 40f to effectively perform cooling and fire extinguishing operations on high-temperature and high-pressure gases and flames at the first weak structure 31, thereby helping mitigate a thermal runaway reaction and thermal propagation of the battery cell 100a, to improve reliability of the battery 100.

In some embodiments, refer to FIG. 40 to FIG. 46 together with other figures. The battery 100 further includes a thermal insulation structure 60, and the thermal insulation structure 60 is spaced apart from and opposite to the housing component 30. The at least one fire extinguishing structure 40 is disposed on the thermal insulation structure 60, and is spaced apart from and opposite to the first weak structure 31.

The thermal insulation structure 60 is a structure disposed opposite to the housing component 30 to thermally isolate the battery cell 100a to a certain extent. The thermal insulation structure 60 may include at least one of a mica structure, a ceramic structure, a glass fiber structure, a carbon fiber structure, a carbon-carbon composite component, and a pre-oxidized fiber aerogel component. In an example, the thermal insulation structure 60 is a mica plate.

In some possible designs, the thermal insulation structure 60 and the fire extinguishing structure 40 are made of the same material and integrally disposed, that is, the fire extinguishing structure 40 may replace the thermal insulation structure 60. Alternatively, in some other possible designs, the thermal insulation structure 60 and the fire extinguishing structure 40 are separately disposed.

That the fire extinguishing structure 40 is disposed on the thermal insulation structure 60 may be but is not limited to that the fire extinguishing structure 40 is bonded to the thermal insulation structure 60.

In an example, as shown in FIG. 40 to FIG. 46, the thermal insulation structure 60 is spaced apart from an end of the housing component 30 in the first direction Z, and the at least one sixth fire extinguishing piece 40f is disposed on a side that is of the thermal insulation structure 60 and that faces the housing component 30 in the first direction Z, and is spaced apart from and opposite to the first weak structure 31.

In an example, as shown in FIG. 46, the thermal insulation structure 60 is provided with a plurality of sixth fire extinguishing pieces 40f that are spaced apart from each other, and each sixth fire extinguishing piece 40f is spaced apart from and opposite to each pressure relief portion 311b.

In some embodiments, the battery 100 further includes a wire harness isolation plate spaced apart from and opposite to the housing component 30, and the at least one fire extinguishing structure 40 is disposed on the wire harness isolation plate, and is spaced apart from and opposite to the first weak structure 31.

The harness isolation plate is a plate that provides isolation between the housing component 30 and the box 20.

In an example, the wire harness isolation plate is spaced apart from an end of the housing component 30 in the first direction Z, and the at least one fire extinguishing structure 40 is disposed on a side that is of the wire harness isolation plate and that faces the housing component 30 in the first direction Z, and is spaced apart from and opposite to the first weak structure 31.

According to the foregoing technical solution, the fire extinguishing structure 40 is flexibly disposed at a plurality of positions of the battery 100, for the at least one fire extinguishing structure 40 to be disposed outside the housing component 30 and to be spaced apart from and opposite to the first weak structure 31. This facilitates the layout of the fire extinguishing structure 40 in the battery 100.

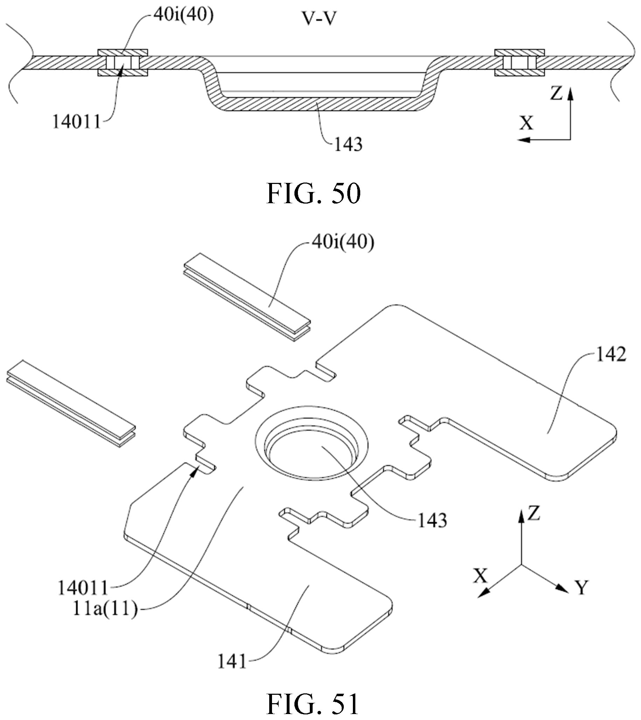

In some embodiments, refer to FIG. 4 and FIG. 47 to FIG. 50 together with other figures. FIG. 47 is an exploded view of the transition structure 14 and the fire extinguishing structure 40 of the battery 100 according to some embodiments of the present application. FIG. 48 is a schematic diagram of the transition structure 14 provided in FIG. 47. FIG. 49 is a schematic diagram of the transition structure 14 and the fire extinguishing structure 40 provided in FIG. 47. FIG. 50 is a cross-sectional view along V-V in FIG. 47. FIG. 49 shows a fuse portion 11a by using section lines and shows a fuse hole 14011 by using dashed lines. The electrode component 10 includes the main body portion 12, the tab 13, and the transition structure 14. The tab 13 is connected to the main body portion 12, and the transition structure 14 is connected to the tab 13. The transition structure 14 is provided with a fuse portion 11a, the second weak structure 11 includes the fuse portion 11a, and the at least one fire extinguishing structure 40 is disposed at the fuse portion 11a.

The tab 13 may be a positive electrode tab, and correspondingly, the transition structure 14 is a positive electrode transition structure. Alternatively, the tab 13 may be a negative electrode tab, and correspondingly, the transition structure 14 is a negative electrode transition structure.

The transition structure 14 is electrically connected to the tab 13. This ensures normal operation of circuits under normal operating conditions to some extent. In addition, under extreme operating conditions such as short circuits, the transition structure 14 is required to immediately fuse, so as to cut off the circuit. A fuse region 1401 is required on the transition structure 14. Under extreme operating conditions such as short circuits, the transition structure 14 is required to break at the fuse region 1401, so that the circuit connected to the transition structure 14 is disconnected. The transition structure 14 requires a sufficient cross-sectional area at the fuse region 1401 to achieve normal conduction. However, the cross-sectional area cannot be excessively large, so that the transition structure 14 is allowed to fuse immediately in the case of a short circuit.

The fuse region 1401 is a region where the transition structure 14 is breakable. The fuse portion 11a is a part of the transition structure 14, specifically at least a partial region of the fuse region 1401, and is a component that is meltable and that allows, in the case of melting, the circuit connected to the transition structure 14 to be disconnected. The fuse region 1401 includes at least one fuse portion 11a. When the fuse portion 11a in the fuse region 1401 melts, the transition structure 14 breaks at the fuse region 1401, and then the circuit is disconnected.

The second weak structure 11 includes the fuse portion 11a, which means that at least a part of the second weak structure 11 is the fuse portion 11a.

That the at least one fire extinguishing structure 40 is disposed at the fuse portion 11a means that the at least one fire extinguishing structure 40 is disposed at a position where cooling and fire extinguishing operations are allowed to be performed on the fuse portion 11a. The at least one fire extinguishing structure 40 disposed at the fuse portion 11a may be in contact with the fuse portion 11a; or may be disposed near the fuse portion 11a and spaced apart from the fuse portion 11a. In other words, the fire extinguishing structure 40 is allowed to perform cooling and fire extinguishing on the fuse portion 11a, which may be understood as that the fire extinguishing structure 40 is disposed at the fuse portion 11a.

The at least one fire extinguishing structure 40 that is disposed near the fuse portion 11a and that is spaced apart from the fuse portion 11a may be in contact with another position of the transition structure 14 other than the fuse portion 11a; or may be disposed on another component other than the transition structure 14, for example, may be disposed on at least one of a second insulation structure 80, the housing component 30, the first insulation structure 50, and the tab 13 that are described below.

The at least one fire extinguishing structure 40 is disposed at the fuse portion 11a, making it possible to perform cooling and fire extinguishing operations, when the fuse portion 11a melts, on high-temperature and high-pressure gases and flames that are generated by the fuse portion 11a. In this way, a problem that the high-temperature and high-pressure gases and flames that are generated by the fuse portion 11a that is melting spread to the main body portion 12 of the electrode component 10 is resolved, so as to mitigate a thermal runaway reaction and thermal propagation of the battery cell 100a, thereby improving reliability of the battery 100.

For ease of description, the fire extinguishing structure 40 disposed at the fuse portion 11a is defined as a ninth fire extinguishing piece 40i.

The ninth fire extinguishing piece 40i may be connected to the third fire extinguishing piece 40c, the fourth fire extinguishing piece 40d, or another fire extinguishing structure 40 disposed in the housing component 30, or may be spaced apart from the third fire extinguishing piece 40c, the fourth fire extinguishing piece 40d, or another fire extinguishing structure 40 disposed in the housing component 30.

A plurality of ninth fire extinguishing pieces 40i may be connected to each other or may be spaced apart from each other.

The ninth fire extinguishing piece 40i may form a part of the battery cell 100a.

In some embodiments, refer to FIG. 47 to FIG. 50 together with other figures. The at least one fire extinguishing structure 40 disposed at the fuse portion 11a is in contact with the fuse portion 11a. In other words, the ninth fire extinguishing piece 40i is in contact with the fuse portion 11a.

One ninth fire extinguishing piece 40i may be in contact with one or more fuse portions 11a.

This configuration allows the at least one fire extinguishing structure 40 in contact with the fuse portion 11a to perform cooling and fire extinguishing on the fuse portion 11a in time, to quickly suppress propagation of high-temperature and high-pressure gases and flames that are generated by the fuse portion 11a that is melting, and mitigate thermal runaway reactions such as short circuits or even explosions in the battery cell 100a, improving reliability of the battery 100.

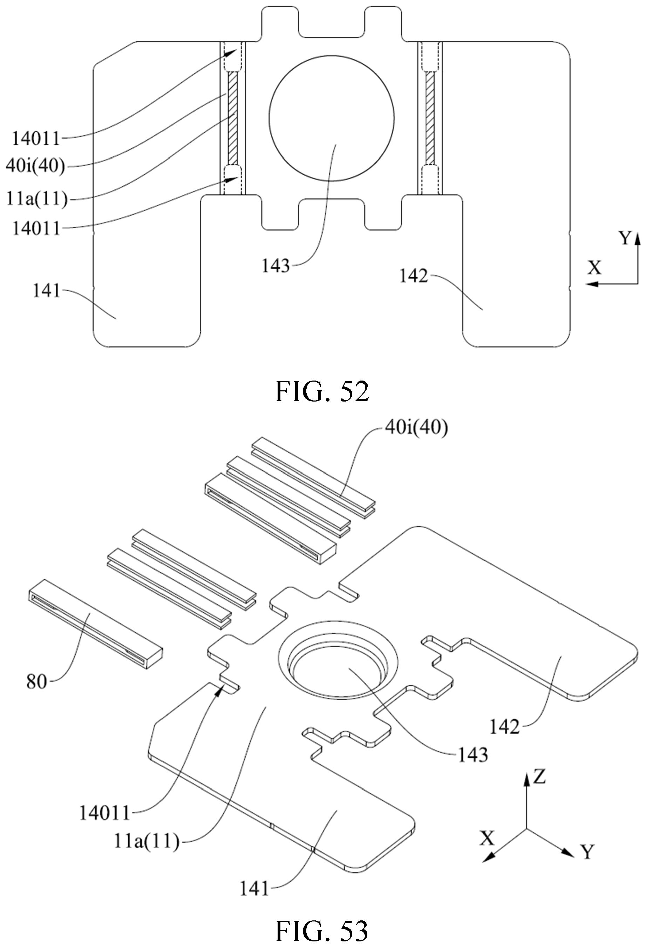

In some embodiments, refer to FIG. 47 to FIG. 52 together with other figures. FIG. 51 is an exploded view of the transition structure 14 and the fire extinguishing structure 40 of the battery 100 according to some embodiments of the present application. FIG. 52 is a schematic diagram of the transition structure 14 and the fire extinguishing structure 40 provided in FIG. 51. FIG. 52 shows a fuse portion 11a by using section lines and shows a fuse hole 14011 by using dashed lines. An orthographic projection, on the transition structure 14, of the at least one fire extinguishing structure 40 disposed at the fuse portion 11a covers the fuse portion 11a. In other words, an orthographic projection of the ninth fire extinguishing piece 40i on the transition structure 14 covers the fuse portion 11a.

It may be understood that the orthographic projection of the ninth fire extinguishing piece 40i on the transition structure 14 surrounds an outer periphery of the fuse portion 11a.

It may be understood that the orthographic projection of the ninth fire extinguishing piece 40i on the transition structure 14 covers at least one fuse portion 11a. In an example, as shown in FIG. 47 to FIG. 50, an orthographic projection of one ninth fire extinguishing piece 40i on the transition structure 14 may cover a plurality of fuse portions 11a. In another example, as shown in FIG. 51 and FIG. 52, an orthographic projection of one ninth fire extinguishing piece 40i on the transition structure 14 may cover one fuse portion 11a. In an example, as shown in FIG. 47 to FIG. 52, orthographic projections of all ninth fire extinguishing pieces 40i on the transition structure 14 cover all fuse portions 11a.

It should be noted herein that, the orthographic projection of the fire extinguishing structure 40 on the transition structure 14 is a projection of the fire extinguishing structure 40 onto the transition structure 14 in a distribution direction of a main part of the fire extinguishing structure 40 and the transition structure 14. In an example, the main part of the fire extinguishing structure 40 is disposed on at least one side of the transition structure 14 in the first direction Z, and the orthographic projection of the fire extinguishing structure 40 on the transition structure 14 is a projection of the fire extinguishing structure 40 onto the transition structure 14 in the first direction Z.

The main part of the fire extinguishing structure 40 is an effective operating part of the fire extinguishing structure 40, that is, a main body portion of the fire extinguishing structure 40. The main part of the fire extinguishing structure 40 is disposed on at least one side of the transition structure 14 in the first direction Z. This does not exclude the possibility that the fire extinguishing structure 40 further includes a part distributed with the transition structure 14 in another direction other than the first direction Z.

According to the foregoing technical solution, the fire extinguishing structure 40 is allowed to perform cooling and fire extinguishing in a large region. Specifically, the fire extinguishing structure 40 performs cooling and fire extinguishing in time on the fuse portion 11a from the source, and further resolves a problem of escaping high temperatures and flames that are generated by the fuse portion 11a that is melting. Therefore, problems of thermal runaway such as short circuits or even explosions in the electrode component 10 are resolved, improving reliability of the battery 100.

In some embodiments, refer to FIG. 47 to FIG. 52 together with other figures. A main part of the ninth fire extinguishing piece 40i is disposed on at least one side of the transition structure 14 in the first direction Z, that is, the main part of the ninth fire extinguishing piece 40i and the transition structure 14 are distributed in the first direction Z. The fuse region 1401 extends through the transition structure 14 in the second direction X. The first direction Z is perpendicular to the second direction X.

The transition structure 14 is disposed at an end portion of the main body portion 12 of the electrode component 10 in the first direction Z, and the first direction Z may be a thickness direction of the transition structure 14.

In some embodiments, refer to FIG. 47 to FIG. 52 together with other figures. The fuse region 1401 further includes a fuse hole 14011, and the fuse hole 14011 and the fuse portion 11a are distributed in the second direction X.

The fuse hole 14011 is a through hole formed on the transition structure 14 in the first direction Z.

In an example, as shown in FIG. 47 to FIG. 50, the fuse portion 11a is separately provided at two opposite ends of the fuse hole 14011 in the second direction X.

In an example, as shown in FIG. 51 and FIG. 52, the fuse hole 14011 is separately provided at two opposite ends of the fuse portion 11a in the second direction X.

The orthographic projection of the ninth fire extinguishing piece 40i onto the transition structure 14 in the first direction Z may further cover the fuse hole 14011.

In some embodiments, refer to FIG. 47 to FIG. 52 together with other figures. The orthographic projection, on the transition structure 14, of the at least one fire extinguishing structure 40 disposed at the fuse portion 11a covers the fuse portion 11a and extends beyond the fuse portion 11a.

With this configuration, one part of the orthographic projection of the at least one fire extinguishing structure 40 on the transition structure 14 covers the fuse portion 11a, and the other part covers another region of the transition structure 14 other than the fuse portion 11a. In this way, the fire extinguishing structure 40 performs cooling and fire extinguishing in time on the fuse portion 11a from the source when the fuse portion 11a is melting, and also effectively resolves a problem that high-temperature and high-pressure gases and flames that are generated by the fuse portion 11a that is melting escape and spread to the main body portion 12 of the electrode component 10. As a result, problems of short circuits or even thermal runaway in the battery cell 100a are effectively resolved, and then a problem of thermal runaway in the battery 100 is resolved, improving reliability of the battery 100.

In some embodiments, refer to FIG. 47 to FIG. 52 together with other figures. The ninth fire extinguishing piece 40i is primarily distributed with the transition structure 14 in the first direction Z. The projection of the ninth fire extinguishing piece 40i onto the transition structure 14 in the first direction Z covers the fuse portion 11a, and extends beyond at least one end of the fuse portion 11a in the second direction X.

In some embodiments, refer to FIG. 47 to FIG. 52 together with other figures. The ninth fire extinguishing piece 40i is primarily distributed with the transition structure 14 in the first direction Z. The projection of the ninth fire extinguishing piece 40i onto the transition structure 14 in the first direction Z covers the fuse portion 11a, and extends beyond at least one end of the fuse portion 11a in the third direction Y.

The third direction Y is perpendicular to the first direction Z and the second direction X.

The third direction Y is roughly a direction in which a current passes through the fuse portion 11a.

With this configuration, the ninth fire extinguishing piece 40i is allowed to suppress propagation of high-temperature and high-pressure gases and flames that are generated during melting of the fuse portion 11a to the main body portion 12 of the electrode component 10, resolving problems of short circuits or even thermal runaway in the battery cell 100a.

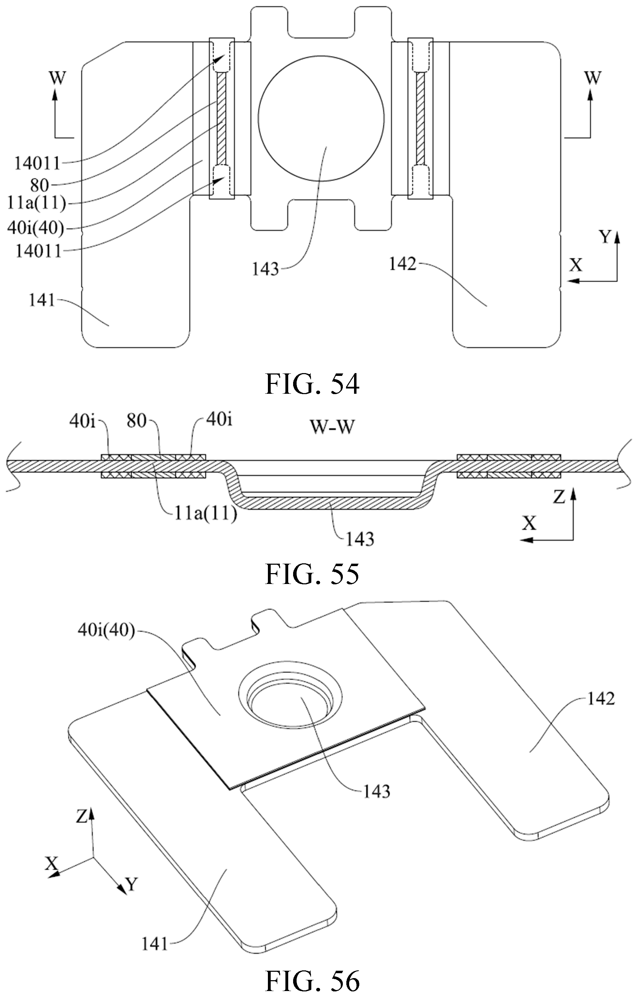

In some embodiments, refer to FIG. 53 to FIG. 55 together with other figures. FIG. 53 is an exploded view of the transition structure 14, the fire extinguishing structure 40, and the second insulation structure 80 of the battery 100 according to some embodiments of the present application. FIG. 54 is a schematic diagram of the transition structure 14, the fire extinguishing structure 40, and the second insulation structure 80 provided in FIG. 53. FIG. 55 is a cross-sectional view along W-W in FIG. 54. FIG. 54 shows a fuse hole 14011 by using dashed lines and shows a fuse portion 11a by using section lines. The battery 100 further includes a second insulation structure 80, and at least a part of the second insulation structure 80 is disposed on the fuse portion 11a.

The second insulation structure 80 is a structure with insulation properties, and may be made of, but not limited to, an insulation rubber material.

When at least a part of the second insulation structure 80 is disposed on the fuse portion 11a, the ninth fire extinguishing piece 40i may be disposed on the second insulation structure 80; or may not be disposed on the second insulation structure 80.

The second insulation structure 80 disposed on the fuse portion 11a achieves an insulating protection effect on the fuse portion 11a, so that thermal propagation during melting of the fuse portion 11a is mitigated to some extent. In addition, the arrangement of the second insulation structure 80 further enhances structural strength at the fuse portion 11a.

In some embodiments, refer to FIG. 53 to FIG. 55 together with other figures. An orthographic projection of the second insulation structure 80 on the transition structure 14 covers the fuse portion 11a.

This configuration allows the second insulation structure 80 to significantly provide insulation protection and structural strength protection for the fuse portion 11a.

In some embodiments, refer to FIG. 53 to FIG. 55 together with other figures. An orthographic projection of the second insulation structure 80 on the transition structure 14 covers at least a part of the fuse portion 11a, and the orthographic projection, on the transition structure 14, of the at least one fire extinguishing structure 40 disposed at the fuse portion 11a is located outside the orthographic projection of the second insulation structure 80 on the transition structure 14.

The orthographic projection of the second insulation structure 80 on the transition structure 14 is a projection of the second insulation structure 80 onto the transition structure 14 in a distribution direction of a main part of the second insulation structure 80 and the transition structure 14.

In an example, the main part of the second insulation structure 80 is disposed on at least one side of the transition structure 14 in the first direction Z, and the main part of the ninth fire extinguishing piece 40i is also disposed on at least one side of the transition structure 14 in the first direction Z. The projection of the second insulation structure 80 onto the transition structure 14 in the first direction Z covers at least a part of the fuse portion 11a, and the projection of the ninth fire extinguishing piece 40i onto the transition structure 14 in the first direction Z is located outside the projection of the second insulation structure 80 onto the transition structure 14 in the first direction Z. In other words, on a projection plane perpendicular to the first direction Z, the projection of the second insulation structure 80 covers at least a part of the projection of the fuse portion 11a, and the projection of the ninth fire extinguishing piece 40i is located outside the projection of the second insulation structure 80.

With this configuration, the arrangement of the fire extinguishing structure 40 allows no additional increase in the overall thickness of the transition structure 14, the second insulation structure 80, and the fire extinguishing structure 40, so that high energy density of the battery cell 100a is effectively maintained.

In some embodiments, refer to FIG. 53 to FIG. 55 together with other figures. In a direction in which a current passes through the fuse portion 11a, at least one end of the second insulation structure 80 is provided with the fire extinguishing structure 40 disposed at the fuse portion 11a.

According to the foregoing technical solution, roughly in the direction in which the current passes through the fuse portion 11a, the at least one end of the second insulation structure 80 is provided with the fire extinguishing structure 40, so that the fire extinguishing structure 40 effectively performs cooling and fire extinguishing during melting of the fuse portion 11a, to resolve a problem that high temperatures and flames that are generated during melting of the fuse portion 11a spread to the main body portion 12 of the electrode component 10.

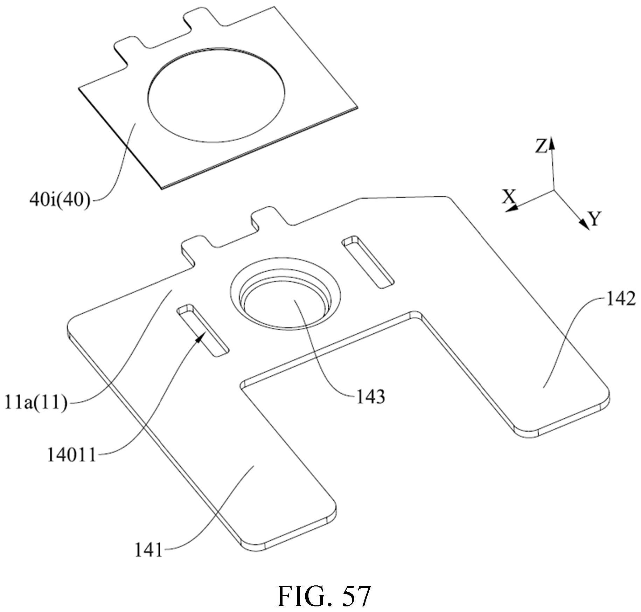

In some embodiments, refer to FIG. 47 and FIG. 57 together with other figures. FIG. 56 is a diagram of a structure of the transition structure 14 and the fire extinguishing structure 40 of the battery 100 according to some embodiments of the present application. FIG. 57 is an exploded view of FIG. 56. The transition structure 14 includes a second connection portion 141, a third connection portion 142, and a fourth connection portion 143. The second connection portion 141 and the third connection portion 142 are connected to the tabs 13. The fourth connection portion 143 is connected between the second connection portion 141 and the third connection portion 142. The fuse portion 11a is disposed between the second connection portion 141 and the fourth connection portion 143, and the fuse portion 11a is disposed between the third connection portion 142 and the fourth connection portion 143. The ninth fire extinguishing piece 40i is disposed at the fuse portion 11a between the second connection portion 141 and the fourth connection portion 143, and the ninth fire extinguishing piece 40i is also disposed at the fuse portion 11a between the third connection portion 142 and the fourth connection portion 143.

The second connection portion 141, the third connection portion 142, and the fourth connection portion 143 are three parts of the transition structure 14. The second connection portion 141 and the third connection portion 142 are parts on the transition structure 14 for electrically connecting to the tabs 13, and the fourth connection portion 143 is a part on the transition structure 14 for electrically connecting to the electrode terminal 70.

Based on this, a current in the main body portion 12 of the electrode component 10 may be divided into two branches. One branch is first passing through the second connection portion 141, then passing through the fuse portion 11a between the second connection portion 141 and the fourth connection portion 143, and then passing through the fourth connection portion 143, to reach the electrode terminal 70. The other branch is first passing through the third connection portion 142, then passing through the fuse portion 11a between the third connection portion 142 and the fourth connection portion 143, and then passing through the fourth connection portion 143, to reach the electrode terminal 70. Based on this, the arrangement of the second connection portion 141 and the third connection portion 142 allows the transition structure 14 to pass large currents.

The ninth fire extinguishing piece 40i at the fuse portion 11a between the second connection portion 141 and the fourth connection portion 143 and the ninth fire extinguishing piece 40i at the fuse portion 11a between the third connection portion 142 and the fourth connection portion 143 may be separately disposed, as shown in FIG. 47 to FIG. 55. The ninth fire extinguishing piece 40i at the fuse portion 11a between the second connection portion 141 and the fourth connection portion 143 and the ninth fire extinguishing piece 40i at the fuse portion 11a between the third connection portion 142 and the fourth connection portion 143 may alternatively be integrally disposed, as shown in FIG. 56 and FIG. 57.

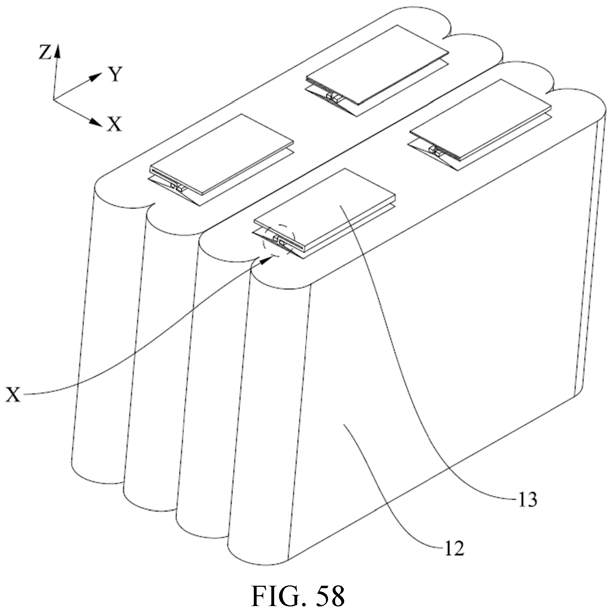

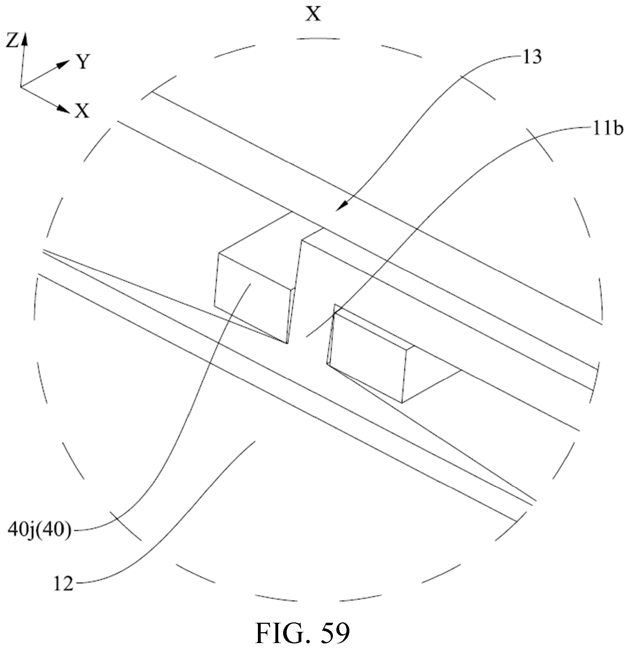

In some embodiments, refer to FIG. 58 and FIG. 59 together with other figures. FIG. 58 is a diagram of a partial structure of the battery cell 100a of the battery 100 according to some embodiments of the present application. FIG. 59 is an enlarged view at X in FIG. 58. The electrode component 10 includes the main body portion 12 and the tab 13 connected to the main body portion 12, and the tab 13 is provided with the second weak structure 11.

It may be understood that, the at least one fire extinguishing structure 40 is disposed at the second weak structure 11 of the tab 13, to perform cooling and fire extinguishing on the second weak structure 11 of the tab 13.

In this way, when the tab 13 fuses due to overload, cooling and fire extinguishing are performed on high-temperature and high-pressure gases and flames that are generated at the second weak structure 11 of the tab 13, thereby helping resolve problems of short circuits or even thermal runaway in the main body portion 12 of the electrode component 10, improving reliability of the battery 100.

For ease of description, the at least one fire extinguishing structure 40 disposed at the second weak structure 11 of the tab 13 is defined as a tenth fire extinguishing piece 40j.

The tenth fire extinguishing piece 40j may be disposed on the tab 13; or may be disposed near the tab 13 and spaced apart from the tab 13. The tenth fire extinguishing piece 40j that is disposed near the tab 13 and that is spaced apart from the tab 13 may be disposed at the housing component 30, the first insulation structure 50, the transition structure 14, or another position.

The tenth fire extinguishing piece 40j may form a part of the battery cell 100a.

In some embodiments, refer to FIG. 58 and FIG. 59 together with other figures. An end portion that is of the tab 13 and that is connected to the main body portion 12 is a connection end portion 11b, the second weak structure 11 includes the connection end portion 11b, and the at least one fire extinguishing structure 40 disposed the second weak structure 11 of the tab 13 is disposed on the connection end portion 11b.

The connection end portion 11b is a part of the tab 13 for connecting to the main body portion 12.

The second weak structure 11 includes the connection end portion 11b, which means that at least a part of the second weak structure 11 is the connection end portion 11b.

The at least one fire extinguishing structure 40 is disposed on the connection end portion 11b, so that the fire extinguishing structure 40 is very close to the main body portion 12. In this case, when the tab 13 fuses due to overload, cooling and fire extinguishing are implemented in time on the root that is of the tab 13 and that is close to the main body portion 12, so that a rate at which high-temperature and high-pressure gases and flames that are generated during fusing of the tab 13 spread to the main body portion 12 is significantly limited. Therefore, this helps resolve problems of short circuits or even thermal runaway in the main body portion 12 of the electrode component 10 due to fusing of the tab 13, improving reliability of the battery 100.

In some embodiments, refer to FIG. 58 and FIG. 59 together with other figures. At least one side of the second weak structure 11 is provided with the fire extinguishing structure 40 in a thickness direction of the tab 13.

As shown in FIG. 58 and FIG. 59, the fire extinguishing structure 40 is separately provided on two opposite sides of the tab 13 in the thickness direction. Alternatively, the fire extinguishing structure 40 is provided on one side of the tab 13 in the thickness direction.

This configuration allows for very flexible layout of the fire extinguishing structure 40 on the tab 13.

In addition, when the fire extinguishing structure 40 is separately provided on two opposite sides of the tab 13 in the thickness direction, the fire extinguishing structure 40 is allowed to substantially perform cooling and fire extinguishing operations during fusing of the tab 13, so that a problem that high temperatures and flames that are generated during fusing of the tab 13 spread to the main body portion 12 is resolved, a risk of short circuits or even thermal runaway explosions in the main body portion 12 is reduced, improving reliability of the battery 100.

When the at least one fire extinguishing structure 40 is disposed at the connection end portion 11b, that at least one side of the second weak structure 11 is provided with the fire extinguishing structure 40 in the thickness direction of the tab 13 means that at least one side of the connection end portion 11b in the thickness direction is provided with the fire extinguishing structure 40.

Specifically, as shown in FIG. 17, at least one side of the connection end portion 11b is provided with the fire extinguishing structure 40 in the thickness direction of the tab 13. The thickness direction of the tab 13 at the connection end portion 11b is parallel to the third direction Y above, the width direction of the tab 13 at the connection end portion 11b is parallel to the second direction X above, and the height direction of the tab 13 at the connection end portion 11b is parallel to the first direction Z above.

In some embodiments, the fire extinguishing structure 40 includes a core for extinguishing fire and a shell for encapsulating the core.

With this configuration, when the fire extinguishing structure 40 is in a high-temperature environment, the shell of the fire extinguishing structure 40 ruptures, and the core in the shell cools high-temperature and high-pressure gases, and extinguishes flames, so as to achieve cooling and fire extinguishing effects.

In some embodiments, the core is a perfluorohexanone core.

The perfluorohexanone core is a core made of a perfluorohexanone material.

With this configuration, when the fire extinguishing structure 40 is in a high-temperature environment, and the shell of the fire extinguishing structure 40 ruptures, the perfluorohexanone material of the perfluorohexanone core decomposes at the high temperature into fluorine, oxygen, and carbon atoms, and these atoms undergo radical reactions with hydrogen in high-temperature and high-pressure gases and flames, to obtain stable compounds, so that propagation of the flames is effectively suppressed. In addition, heat is taken away during decomposition of the perfluorohexanone material, to reduce the temperature of the high-temperature and high-pressure gases and flames, thereby suppressing generation of flames. Therefore, the fire extinguishing structure 40 suppresses generation and propagation of flames, achieving cooling and fire extinguishing effects.

In some embodiments, the shell is a polymer shell.

The polymer shell is a shell made of a polymer material. The polymer material may include one or more of polyesters, polyurethanes, phenolic resins, urea-formaldehyde resins, polyurea resins, polymer silicon, naturally derived polymers, acrylic resins, and epoxy resins.

The arrangement of the polymer shell allows the shell to protect the core, and the rupture in the high-temperature environment allows the core to perform cooling and fire extinguishing operations.

In some embodiments, the fire extinguishing structure 40 includes a microcapsule, and the microcapsule includes the shell and the core.

In some embodiments, there are a plurality of microcapsules, and the plurality of microcapsules are secured by using a polymer binder or another binder.

Specifically, the polymer binder secures shells of the plurality of microcapsules.

In some embodiments, the plurality of microcapsules form a fire extinguishing layer of the fire extinguishing structure 40. The fire extinguishing structure 40 may further include an adhesive layer. The adhesive layer is disposed on the fire extinguishing layer and is provided for adhesion.

In some embodiments, the fire extinguishing structure 40 may further include a base, and the microcapsules may be disposed on a coating of the base, to form the fire extinguishing layer.

In some embodiments, in the fire extinguishing structure 40, a weight ratio of the perfluorohexanone material to the polymer material ranges from 20% to 90%, specifically 20%, 30%, 40%, 50%, 60%, 70%, 80%, 90%, or the like.

This configuration allows the fire extinguishing structure 40 to contain a high content of perfluorohexanone, thereby achieving good cooling and fire extinguishing effects.

In some embodiments, in the fire extinguishing structure 40, a weight ratio of the perfluorohexanone material to the polymer material ranges from 50% to 85%, specifically 50%, 55%, 60%, 65%, 70%, 75%, 80%, 85%, or the like.

In some embodiments, a thickness of the entire fire extinguishing structure 40 ranges from 0.2 mm to 10 mm, that is, a sum of thicknesses of the fire extinguishing layer and the adhesion layer ranges from 0.2 mm to 10 mm, specifically 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 0.7 mm, 0.75 mm, 0.8 mm, 0.9 mm, or the like.

In some embodiments, the thickness of the fire extinguishing layer ranges from 0.2 mm to 0.45 mm, specifically 0.5 mm, 1 mm, 1.5 mm, 2 mm, 2.5 mm, 3 mm, 3.5 mm, 4 mm, 4.5 mm, or the like.

This configuration allows the fire extinguishing layer to have an appropriate thickness, so that the fire extinguishing structure 40 has a small volume and provides a good fire extinguishing effect.

In some embodiments, the thickness of the adhesive layer ranges from 0.02 mm to 2 mm, specifically 0.05 mm, 0.1 mm, 0.15 mm, 0.2 mm, 0.3 mm, 0.5 mm, 0.8 mm, 1 mm, 1.2 mm, 1.3 mm, 1.5 mm, 1.8 mm, or the like.

In some embodiments, the thickness of the fire extinguishing structure 40 ranges from 0.3 mm to 3 mm, specifically 0.5 mm, 1 mm, 1.5 mm, 2 mm, 2.5 mm, 3 mm, or the like.

Referring to FIG. 1, the power-consuming apparatus provided in the embodiments of the present application includes the battery 100. The battery 100 in this embodiment is the same as the battery 100 in the foregoing embodiment. For details, refer to the related descriptions of the battery 100 in the foregoing embodiment, and details are not described herein again.

The power-consuming apparatus provided in the embodiments of the present application employs the foregoing battery 100, and the fire extinguishing structure 40 is disposed at at least one of the first weak structure 31 of the housing component 30 and the second weak structure 11 of the electrode component 10, so that the fire extinguishing structure 40 performs cooling and fire extinguishing operations at at least one of the first weak structure 31 and the second weak structure 11. In this way, a thermal runaway reaction and thermal propagation of the battery cell 100a are mitigated, thereby resolving a problem of chain reactions caused by thermal runaway in adjacent battery cells 100a, so as to mitigate thermal runaway in the entire battery 100, improving reliability of the battery 100.

In an embodiment of the present application, as shown in FIG. 3 to FIG. 6, the battery 100 includes the housing component 30, the electrode component 10, and the fire extinguishing structure 40. The housing component 30 includes the housing 32 and the end cover 33, the end cover 33 is disposed at an end portion of the housing 32 in the first direction Z, and the weld seam 31a is formed between the end cover 33 and the housing 32. The electrode component 10 is disposed in the internal environment defined by the housing 32 and the end cover 33. The fire extinguishing structure 40 is in contact with the outer surface that is of the weld seam 31a and that is away from the electrode component 10 in the first direction Z.

The above content is only optional embodiments of the present application, but is not intended to limit the present application. For a person skilled in the art, various modifications and variations may be made to the present application. Any modification, equivalent replacement, or improvement made within the spirit and principle of the present application shall fall within the scope of the claims of the present application.

## Claims

1. A battery (100), comprising:
a housing component (30);
an electrode component (10), disposed in the housing component (30); and
a fire extinguishing structure (40), wherein
the housing component (30) is provided with a first weak structure (31), and at least one fire extinguishing structure (40) is disposed at the first weak structure (31); and/or the electrode component (10) is provided with a second weak structure (11), and at least one fire extinguishing structure (40) is disposed at the second weak structure (11).

2. The battery (100) according to claim 1, wherein the at least one fire extinguishing structure (40) disposed at the first weak structure (31) is in contact with the housing component (30); and/or
a first insulation structure (50) is disposed between the housing component (30) and the electrode component (10), and the at least one fire extinguishing structure (40) disposed at the first weak structure (31) is disposed on the first insulation structure (50).

3. The battery (100) according to claim 1 or 2, wherein the at least one fire extinguishing structure (40) disposed at the first weak structure (31) is disposed outside the housing component (30), and is spaced apart from and opposite to the first weak structure (31).

4. The battery (100) according to any one of claims 1 to 3, wherein a weld seam (31a) is formed on the housing component (30), the first weak structure (31) comprises the weld seam (31a), and the at least one fire extinguishing structure (40) is disposed at the weld seam (31a).

5. The battery (100) according to claim 4, wherein the housing component (30) comprises a housing (32) and an end cover (33), and the end cover (33) is disposed on the housing (32) to enclose, with the housing (32), a space for accommodating the electrode component (10); and
a first weld seam is formed between the housing (32) and the end cover (33), the weld seam (31a) comprises the first weld seam, and the at least one fire extinguishing structure (40) is disposed at the first weld seam; and/or a second weld seam is formed on the housing (32), the weld seam (31a) comprises the second weld seam, and the at least one fire extinguishing structure (40) is disposed at the second weld seam.

6. The battery (100) according to claim 5, wherein the end cover (33) is disposed at an end portion of the housing (32) in a first direction (Z); and
the at least one fire extinguishing structure (40) disposed at the first weld seam is a first fire extinguishing piece (40a), the first fire extinguishing piece (40a) is in contact with an outer wall of the housing component (30) in the first direction (Z), and on a projection plane perpendicular to the first direction (Z), a distance between an outer edge of the housing component (30) and the first fire extinguishing piece (40a) is ≤ 6 mm in a width direction of the first weld seam; and/or the at least one fire extinguishing structure (40) disposed at the first weld seam is a second fire extinguishing piece (40b), the second fire extinguishing piece (40b) is in contact with an outer wall of the housing component (30) in a direction perpendicular to the first direction (Z), and a distance between an outer edge of the housing component (30) and the second fire extinguishing piece (40b) is ≤ 6 mm in the first direction (Z).

7. The battery (100) according to any one of claims 4 to 6, wherein the at least one fire extinguishing structure (40) disposed at the weld seam (31a) is in contact with a surface of the weld seam (31a).

8. The battery (100) according to any one of claims 4 to 7, wherein the first insulation structure (50) is disposed between the housing component (30) and the electrode component (10), and the first insulation structure (50) is disposed between the electrode component (10) and the weld seam (31a); and the at least one fire extinguishing structure (40) disposed at the weld seam (31a) is disposed between the first insulation structure (50) and the housing component (30) along a path from the electrode component (10) to the weld seam (31a).

9. The battery (100) according to claim 8, wherein the at least one fire extinguishing structure (40) disposed between the first insulation structure (50) and the housing component (30) is a third fire extinguishing piece (40c) along the path from the electrode component (10) to the weld seam (31a); and the third fire extinguishing piece (40c) is disposed between the first insulation structure (50) and the housing component (30) in a direction perpendicular to a distribution direction of the electrode component (10) and the first insulation structure (50).

10. The battery (100) according to claim 8 or 9, wherein the housing component (30) is provided with a pressure relief mechanism (31b) spaced apart from the weld seam (31a); the at least one fire extinguishing structure (40) disposed between the first insulation structure (50) and the housing component (30) is a fourth fire extinguishing piece (40d) along the path from the electrode component (10) to the weld seam (31a); and the fourth fire extinguishing piece (40d) is disposed between the housing component (30) and the first insulation structure (50), and is disposed between the pressure relief mechanism (31b) and the weld seam (31a).

11. The battery (100) according to claim 10, wherein the housing component (30) comprises the housing (32) and the end cover (33), and the end cover (33) is disposed at the end portion of the housing (32) in the first direction (Z) to enclose, with the housing (32), the space for accommodating the electrode component (10); the first weld seam is formed between the housing (32) and the end cover (33), and the weld seam (31a) comprises the first weld seam; the end cover (33) is provided with the pressure relief mechanism (31b); the first insulation structure (50) is disposed between the end cover (33) and the electrode component (10) in the first direction (Z); and the fourth fire extinguishing piece (40d) is disposed between the end cover (33) and the first insulation structure (50) in the first direction (Z), and is disposed between the pressure relief mechanism (31b) and the housing (32) in the direction perpendicular to the first direction (Z).

12. The battery (100) according to any one of claims 4 to 11, wherein the at least one fire extinguishing structure (40) disposed at the weld seam (31a) is disposed outside the housing component (30), and is spaced apart from and opposite to the weld seam (31a).

13. The battery (100) according to any one of claims 1 to 12, wherein the housing component (30) comprises a first wall (331) and the pressure relief mechanism (31b), and the first weak structure (31) comprises the pressure relief mechanism (31b); and the pressure relief mechanism (31b) comprises a pressure relief portion (311b), the first wall (331) is connected to an outer periphery of the pressure relief portion (311b), and the at least one fire extinguishing structure (40) is disposed at the pressure relief portion (311b).

14. The battery (100) according to claim 13, wherein the at least one fire extinguishing structure (40) disposed at the pressure relief portion (311b) is provided with a through hole (401), and the pressure relief portion (311b) is opposite to the through hole (401) and is exposed to the through hole (401).

15. The battery (100) according to claim 13 or 14, wherein the at least one fire extinguishing structure (40) disposed at the pressure relief portion (311b) comprises a first fire extinguishing portion (41) and a second fire extinguishing portion (42) connected to an outer periphery of the first fire extinguishing portion (41), and the first fire extinguishing portion (41) is configured to move relative to the second fire extinguishing portion (42) to perform pressure relief; and the first fire extinguishing portion (41) and the pressure relief portion (311b) are disposed opposite to each other in a distribution direction of the first wall (331) and the electrode component (10).

16. The battery (100) according to claim 15, wherein in the distribution direction of the first wall (331) and the electrode component (10), the first fire extinguishing portion (41) is disposed on a side that is of the pressure relief portion (311b) and that is away from the electrode component (10).

17. The battery (100) according to claim 15 or 16, wherein a frangible score line (43) is provided between the first fire extinguishing portion (41) and the second fire extinguishing portion (42).

18. The battery (100) according to any one of claims 13 to 17, wherein the at least one fire extinguishing structure (40) disposed at the pressure relief portion (311b) is a fifth fire extinguishing piece (40e); and in the distribution direction of the first wall (331) and the electrode component (10), the fifth fire extinguishing piece (40e) is disposed on a side that is of the pressure relief portion (311b) and that faces the electrode component (10), and is disposed opposite to the pressure relief portion (311b).

19. The battery (100) according to claim 18, wherein the fifth fire extinguishing piece (40e) is connected to the pressure relief portion (311b).

20. The battery (100) according to claim 18 or 19, wherein a projection of the fifth fire extinguishing piece (40e) is located within a projection of the pressure relief portion (311b) in the distribution direction of the first wall (331) and the electrode component (10).

21. The battery (100) according to any one of claims 13 to 20, wherein the housing component (30) further comprises a second wall (321) connected to the first wall (331), the at least one fire extinguishing structure (40) disposed at the pressure relief portion (311b) is in contact with the second wall (321), and the second wall (321) is a wall having the largest area among all walls of the housing component (30).

22. The battery (100) according to any one of claims 13 to 21, wherein in the distribution direction of the first wall (331) and the electrode component (10), the at least one fire extinguishing structure (40) disposed at the pressure relief portion (311b) is disposed outside the housing component (30), and is spaced apart from and opposite to the pressure relief portion (311b).

23. The battery (100) according to any one of claims 3 to 22, wherein the at least one fire extinguishing structure (40) that is disposed outside the housing component (30) and that is spaced apart from and opposite to the first weak structure (31) is a sixth fire extinguishing piece (40f); and a projection of the first weak structure (31) is located within a projection of the sixth fire extinguishing piece (40f) on a projection plane perpendicular to a direction in which the sixth fire extinguishing piece (40f) and the first weak structure (31) are opposite to each other.

24. The battery (100) according to any one of claims 1 to 23, wherein the battery (100) further comprises a thermal insulation structure (60) spaced apart from and opposite to the housing component (30), and the at least one fire extinguishing structure (40) is disposed on the thermal insulation structure (60), and is spaced apart from and opposite to the first weak structure (31); and/or
the battery (100) further comprises a wire harness isolation plate disposed opposite to the housing component (30), and the at least one fire extinguishing structure (40) is disposed on the wire harness isolation plate, and is spaced apart from and opposite to the first weak structure (31).

25. The battery (100) according to any one of claims 1 to 24, wherein the electrode component (10) comprises a main body portion (12), a tab (13) connected to the main body portion (12), and a transition structure (14) connected to the tab (13); and the transition structure (14) is provided with a fuse portion (11a), the second weak structure (11) comprises the fuse portion (11a), and the at least one fire extinguishing structure (40) is disposed at the fuse portion (11a).

26. The battery (100) according to claim 25, wherein the at least one fire extinguishing structure (40) disposed at the fuse portion (11a) is in contact with the fuse portion (11a).

27. The battery (100) according to claim 25 or 26, wherein an orthographic projection, on the transition structure (14), of the at least one fire extinguishing structure (40) disposed at the fuse portion (11a) covers the fuse portion (11a).

28. The battery (100) according to any one of claims 25 to 27, wherein the orthographic projection, on the transition structure (14), of the at least one fire extinguishing structure (40) disposed at the fuse portion (11a) covers the fuse portion (11a) and extends beyond the fuse portion (11a).

29. The battery (100) according to any one of claims 25 to 28, wherein the battery (100) further comprises a second insulation structure (80), and at least a part of the second insulation structure (80) is disposed on the fuse portion (11a).

30. The battery (100) according to claim 29, wherein an orthographic projection of the second insulation structure (80) on the transition structure (14) covers at least a part of the fuse portion (11a), and the orthographic projection, on the transition structure (14), of the at least one fire extinguishing structure (40) disposed at the fuse portion (11a) is located outside the orthographic projection of the second insulation structure (80) on the transition structure (14).

31. The battery (100) according to claim 30, wherein in a direction in which a current passes through the fuse portion (11a), at least one end of the second insulation structure (80) is provided with the fire extinguishing structure (40) disposed at the fuse portion (11a).

32. The battery (100) according to any one of claims 1 to 31, wherein the electrode component (10) comprises the main body portion (12) and the tab (13) connected to the main body portion (12), and the tab (13) is provided with the second weak structure (11).

33. The battery (100) according to claim 32, wherein an end portion that is of the tab (13) and that is connected to the main body portion (12) is a connection end portion (11b), the second weak structure (11) comprises the connection end portion (11b), and the at least one fire extinguishing structure (40) is disposed on the connection end portion (11b).

34. The battery (100) according to claim 32 or 33, wherein at least one side of the second weak structure (11) is provided with the fire extinguishing structure (40) in a thickness direction of the tab (13).

35. The battery (100) according to any one of claims 1 to 34, wherein the fire extinguishing structure (40) comprises a core for extinguishing fire and a shell for encapsulating the core.

36. The battery (100) according to claim 35, wherein the core is a perfluorohexanone core; and/or the shell is a polymer shell.

37. A power-consuming apparatus, comprising the battery (100) according to any one of claims 1 to 36.
